(19) Europäisches Patentamt / European Patent Office / Office européen des brevets

(11) **EP 3 923 589 A1**

(12) **EUROPEAN PATENT APPLICATION**
published in accordance with Art. 153(4) EPC

(43) Date of publication:
**15.12.2021 Bulletin 2021/50**

(21) Application number: **20752732.6**

(22) Date of filing: **07.02.2020**

(51) Int Cl.:
*H04N 21/2381* (2011.01)   *H04N 21/236* (2011.01)
*H04N 21/235* (2011.01)   *H04N 21/414* (2011.01)
*H04N 21/4725* (2011.01)   *H04H 60/82* (2008.01)

(86) International application number:
**PCT/KR2020/001774**

(87) International publication number:
**WO 2020/162712 (13.08.2020 Gazette 2020/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 07.02.2019 KR 20190014427
27.02.2019 KR 20190023460
08.03.2019 KR 20190027053
27.05.2019 KR 20190062003

(71) Applicant: **LG Electronics Inc.**
**Yeongdeungpo-gu**
**Seoul 07336 (KR)**

(72) Inventors:
• **PARK, Jonghwan**
**Seoul 06772 (KR)**
• **YOON, Joonhee**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **BROADCAST SIGNAL TRANSMISSION DEVICE, BROADCAST SIGNAL TRANSMISSION METHOD, BROADCAST SIGNAL RECEPTION METHOD, AND BROADCAST SIGNAL RECEPTION DEVICE**

(57)    A method of transmitting a broadcast signal according to embodiments include generating service data and/or signaling information for the service data, encoding the service data and the signaling information, and transmitting the service data and the signaling information. A method of receiving a broadcast signal according to embodiments include receiving service data and/or signaling information for the service data, and obtaining the service data based on the signaling information.

FIG. 1

**Description**

**TECHNICAL FIELD**

The present disclosure relates to a broadcast signal transmission apparatus, a broadcast signal transmission method, a broadcast signal reception method, and a broadcast signal reception apparatus.

**BACKGROUND ART**

As analog broadcast signal transmission comes to an end, various technologies for transmitting/receiving digital broadcast signals have been developed. A digital broadcast signal may include a larger amount of video/audio data than an analog broadcast signal and further include various types of additional data in addition to the video/audio data.

**DISCLOSURE**

**Technical Problems**

A broadcast signal transmission apparatus and a broadcast signal reception apparatus according to embodiments of the present disclosure implement an Internet protocol (IP) based TV service capable of providing the same user experience (UX) as a terrestrial, satellite, and/or cable linear channel.

The broadcast signal transmission apparatus and the broadcast signal reception apparatus according to embodiments of the present disclosure provide a channel guide aggregated with the terrestrial, satellite, and/or cable channel by receiving open Internet-based native code, rather than an application-based linear channel service.

The broadcast signal transmission apparatus and the broadcast signal reception apparatus according to embodiments of the present disclosure provide a seamless service of real time/non-real time media streaming in consideration of high unicast traffic and a situation in which a broadcast service is consumed through media such as an over-the-top (OTT) device, a personal computer (PC), and an internet protocol television (IP TV), which are IP-based devices, rather than through direct reception of a fixed terrestrial service.

**Technical Solutions**

To achieve the object and other advantages and in accordance with the purpose of the disclosure, as embodied and broadly described herein, a method of transmitting a broadcast signal may include generating service data and/or signaling information for the service data, encoding the service data and/or the signaling information, and transmitting the service data and the signaling information.

According to embodiments, the signaling information may include information about the service data, and the information about the service data may include related material information regarding a location of an application related to the service data and availability information about whether the service data is running.

According to embodiments, the related material information may include location information for obtaining information about the application. The availability information may include information about a time during which the service data is running and information about recurrence of the service data.

To achieve the object and other advantages and in accordance with the purpose of the disclosure, as embodied and broadly described herein, a method of receiving a broadcast signal may include receiving service data and/or signaling information for the service data, and obtaining the service data based on the signaling information.

According to embodiments, the signaling information may include information about the service data, and the information about the service data may include related material information regarding a location of an application related to the service data and availability information about whether the service data is running.

According to embodiments, the related material information may include location information for obtaining information about the application. The availability information may include information about a time during which the service data is running and information about recurrence of the service data.

According to embodiments, the method of receiving a broadcast signal may include transmitting a first request to a service registry to receive the service data, and receiving response information including a uniform resource locator (URL) of the service data.

According to embodiments, the method of receiving a broadcast signal may further include displaying an out-of-service banner based on the availability information while the service data is not currently running.

**Advantageous Effects**

Broadcast signal transmission and reception apparatuses according to embodiments of the present disclosure provide an access service through a UI aggregating a traditional linear service and an OTT service.

The broadcast signal transmission and reception apparatuses according to embodiments of the present disclosure achieve a media service that provides the same user experience (UX) as traditional linear channels through open Internet without a set-top box (STB).

The broadcast signal transmission and reception apparatuses according to embodiments of the present disclosure may provide a UI access service aggregating a linear service and an OTT service.

The broadcast signal reception apparatus according to embodiments may efficiently perform update and management of different services by a minimum operation through the above configuration.

The broadcast signal reception apparatus according to embodiments may provide a broadcast service open to users.

The broadcast signal reception apparatus according to embodiments may receive an Internet-based broadcast service over a broadband network even when the apparatus is not equipped with a tuner.

**Description of Drawings**

The accompanying drawings illustrate embodiments of the present disclosure and together with the description serve to explain the principle of the present disclosure.

FIG. 1 illustrates a structure of a broadcast signal transmission apparatus for future broadcast services according to embodiments of the present disclosure.

FIG. 2 illustrates a structure of a broadcast signal reception apparatus for future broadcast services according to an embodiment of the present disclosure.

FIG. 3 illustrates a structure in which a broadcast signal transmission apparatus and a broadcast signal reception apparatus according to embodiments of the present disclosure transmit and receive services.

FIG. 4 illustrates a network structure of a broadcast signal transmission apparatus and a broadcast signal reception apparatus according to embodiments of the present disclosure.

FIG. 5 illustrates a protocol stack of a broadcast signal transmission method and a broadcast signal reception method according to embodiments.

FIG. 6 illustrates a broadcast service discovery procedure according to embodiments.

FIG. 7 illustrates a broadcast service discovery procedure according to embodiments.

FIG. 8 illustrates a query term of a broadcast service discovery procedure according to embodiments.

FIG. 9 illustrates a broadcast service discovery procedure using a query term according to embodiments.

FIG. 10 illustrates a broadcast service discovery procedure using a query term according to embodiments.

FIG. 11 illustrates an example of a service discovery list table (SDLT) according to embodiments.

FIG. 12 illustrates an example of values of service category information (serviceCategory) included in an SDLT according to embodiments.

FIG. 13 illustrates an example of values of content format information (contentFormat) included in an SDLT according to embodiments.

FIG. 14 illustrates an example of values of urlType included in an SDLT according to embodiments.

FIG. 15 illustrates another example of an SDLT according to embodiments.

FIG. 16 illustrates an example of a query term according to embodiments.

FIG. 17 illustrates an example of parameters of list_of_signaling_object_types of a query term according to embodiments.

FIG. 18 illustrates an example of receiving signaling objects using a query term based on sdltInetUrl according to embodiments.

FIG. 19 illustrates an example of receiving signaling objects using a query term based on sdltInetUrl according to embodiments.

FIG. 20 illustrates a relationship between a service signaling object of Service and a service signaling object.

FIG. 21 illustrates a method in which a broadcast signal reception apparatus according to embodiments receives service list signaling and a broadcast service.

FIG. 22 illustrates a metadata envelope including service signaling information.

FIG. 23 illustrates a metadata envelope according to embodiments in an XML format.

FIG. 24 illustrates a multipart container and a service list of a metadata envelope according to embodiments in an XML format.

FIG. 25 illustrates reception of service signaling information by a broadcast signal reception apparatus according to embodiments in the form of a metadata envelope.

FIG. 26 illustrates a user service bundle description (USBD).

FIG. 27 illustrates service category information (serviceCategory) of a USBD

FIG. 28 illustrates running status information (RunningStatus) of a USBD.

FIG. 29 illustrates a process of obtaining a USBD and an MPD according to embodiments.

FIG. 30 illustrates an operation of representing start of a broadcast service using running status information according to embodiments.

FIG. 31 illustrates a method of providing a broadcast service of a broadcast signal reception method according to embodiments.

FIG. 32 illustrates another example of an SDLT according to embodiments for fast discovery.

FIG. 33 illustrates another example of a USBD according to embodiments for fast discovery.

FIG. 34 illustrates an operation of a broadcast signal reception apparatus for fast discovery.

FIG. 35 is a flowchart of the operation of the broadcast signal reception apparatus for fast discovery.

FIG. 36 illustrates another example of an SDLT according to embodiments.

FIG. 37 illustrates location information of an SDLT according to embodiments.

FIG. 38 illustrates a method of providing a broadcast service using location information of an SDLT according to embodiments.

FIG. 39 illustrates a method of providing a broadcast service using location information of an SDLT according to embodiments.

FIG. 40 illustrates hidden information of an SDLT according to embodiments.

FIG. 41 illustrates an example of hidden information and hidden guide information of an SDLT according to embodiments.

FIG. 42 illustrates a method of providing a broadcast service using hidden information and/or selectable information of an SDLT according to embodiments.

FIG. 43 illustrates another example of an SDLT according to embodiments.

FIG. 44 illustrates an example of related material (RelatedMaterial) information in an SDLT according to embodiments.

FIG. 45 illustrates a method for a broadcast signal reception apparatus to provide a service banner when a broadcast service is inactivated.

FIG. 46 illustrates a service list hierarchy of an Internet-based broadcast service according to embodiments.

FIG. 47 illustrates a version management method of a broadcast service according to embodiments.

FIG. 48 illustrates a syntax for a version management method of a broadcast service according to embodiments.

FIG. 49 illustrates a syntax for a version management method of a broadcast service according to embodiments in an XML format.

FIG. 50 illustrates a syntax for a version management method of a broadcast service according to embodiments in an XML format.

FIG. 51 illustrates an example of a display user interface (UI) of a broadcast signal reception apparatus according to embodiments.

FIG. 52 illustrates an example of a display UI of a broadcast signal reception apparatus according to embodiments.

FIG. 53 illustrates an example of a display UI of a broadcast signal reception apparatus according to embodiments.

FIG. 54 is a flowchart illustrating a broadcast signal transmission method according to embodiments.

FIG. 55 is a flowchart illustrating a broadcast signal reception method according to embodiments.

FIG. 56 illustrates a broadcast signal transmission apparatus according to embodiments.

FIG. 57 illustrates a broadcast signal reception apparatus according to embodiments.

## BEST MODE FOR CARRYING OUT THE DISCLOSURE

Hereinafter, embodiments disclosed in this specification will be described in detail with reference to the attached drawings. The same or similar components are given the same reference numbers and redundant description thereof is omitted. The suffixes "module" and "unit" of elements herein are used for convenience of description and thus are used interchangeably and do not have any distinguishable meanings or functions. Further, in describing the embodiments disclosed in this specification, if a detailed description of related known techniques would unnecessarily obscure the gist of the embodiments disclosed in this specification, detailed description thereof will be omitted. In addition, the attached drawings are provided for easy understanding of the embodiments disclosed in this specification and do not limit technical idea disclosed in this specification, and the embodiments may be construed as including all modifications, equivalents, and alternatives falling within the spirit and scope of the present disclosure.

It is apparent that the following embodiments are intended to embody the present disclosure and are not intended to limit or restrict the scope of the present disclosure. All techniques easily conceivable by those skilled in the art from the detailed description and embodiments of the present disclosure are interpreted as belonging to the scope of the present disclosure.

The following detailed description is to be construed in all aspects as illustrative and not restrictive. The scope of the present disclosure may be determined by reasonable interpretation of the appended claims and all changes which come within the equivalent scope of the present disclosure are within the scope of the present disclosure.

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the accompanying drawings and the detailed description should not be construed as limiting the embodiments set forth herein and should be interpreted as covering all equivalents to the embodiments disclosed in the accompanying drawings and the detailed description or other substitutions.

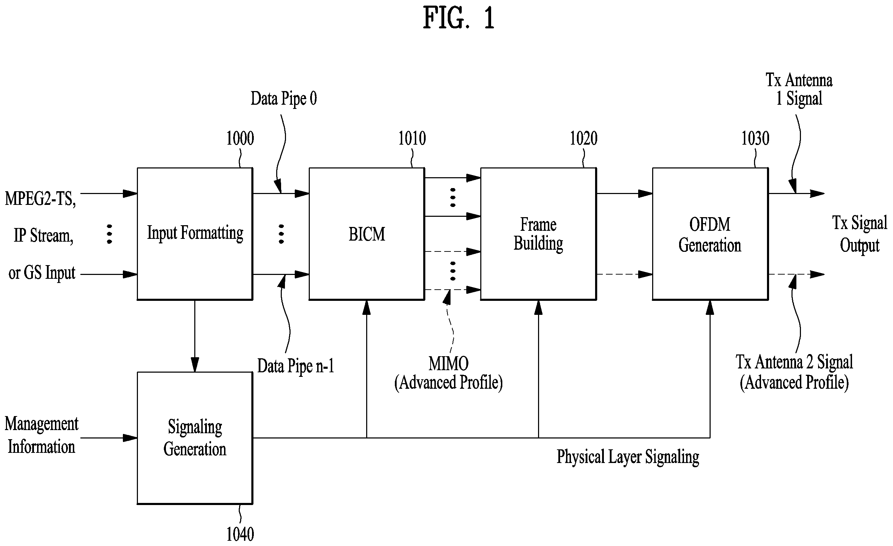

FIG. 1 illustrates a structure of a broadcast signal transmission apparatus for future broadcast services according to embodiments of the present disclosure.

The broadcast signal transmission apparatus for future broadcast services according to embodiments of the present disclosure may include an input formatting block 1000, a bit-interleaved coded modulation (BICM) block 1010, a frame building block 1020, an orthogonal frequency division multiplexing (OFDM) generation block 1030, and a signaling generation block 1040. A description will be given of the operation of each block of the broadcast signal transmission apparatus.

An IP stream/packet and an MPEG-2 transport stream (TS) are main input formats and other stream types are handled as general streams (GSs). In addition to this data input, management information is input to control the scheduling and allocation of a corresponding bandwidth for each input stream. Simultaneous input of one or multiple TSs, IP streams, and/or GSs is allowed.

The input formatting block 1000 may demultiplex each input stream through one or multiple data pipes to which independent coding and modulation are applied. The data pipe is a basic unit for robustness control, thereby affecting quality-of-service (QoS). One or multiple services or service components may be carried through a single data pipe.

The data pipe is a logical channel in a physical layer that may carry one or multiple services or service components to carry service data or related metadata. The data pipe may correspond to a physical layer pipe (PLP).

A data pipe unit is a basic unit for allocating data cells to the data pipe in one frame.

In the BICM block 1010, parity data is added for error correction and encoded bit streams are mapped to complex-value constellation symbols. The symbols are interleaved across a specific interleaving depth that is used for a corresponding data pipe. For an advanced profile, multiple-input multiple-output (MIMO) encoding is performed in the BICM block 1010 and an additional data path is added at an output for MIMO transmission.

The frame building block 1020 may map data cells of input data pipes to OFDM symbols within one frame. After performing mapping, frequency interleaving is used for frequency-domain diversity, especially, to prevent frequency-selective fading channels.

After inserting a preamble at the beginning of each frame, the OFDM generation block 1030 may apply conventional OFDM modulation having a cyclic prefix as a guard interval. For antenna space diversity, a distributed multiple-input single-output (MISO) scheme is applied to a transmitter. In addition, a peak-to-average power ratio (PAPR) scheme is performed in the time domain. For flexible network planning, this proposal provides a set of various FFT sizes, guard interval lengths, and/or corresponding pilot patterns.

The signaling generation block 1040 may generate physical layer signaling information used for the operation of each functional block. This signaling information is also transmitted so that services of interest are properly recovered at a receiver side.

Accordingly, a broadcast signal transmission method according to embodiments may include generating service data and/or signaling information for the service data, encoding the service data and/or the signaling information, and/or transmitting the signaling information.

In addition, a broadcast signal reception method according to embodiments may include receiving service data and/or signaling information for the service data and/or acquiring the service data based on the signaling information.

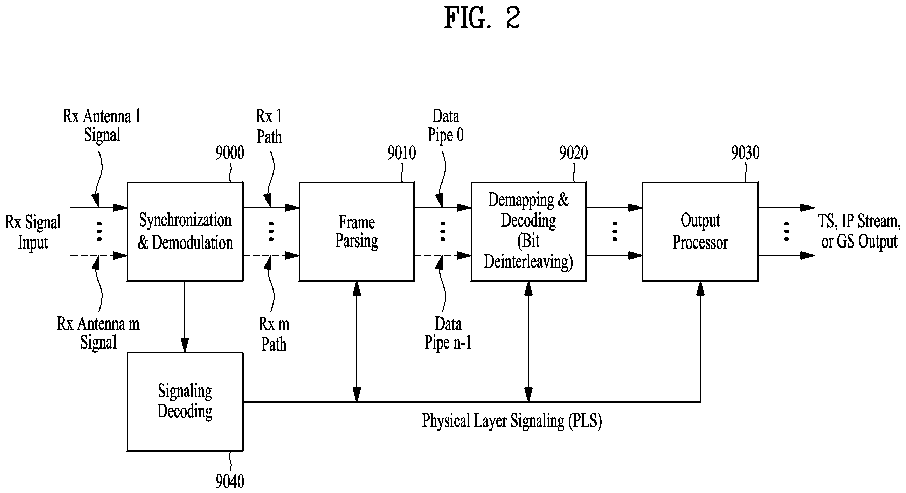

FIG. 2 illustrates a structure of a broadcast signal reception apparatus for future broadcast services according to embodiments of the present disclosure.

The broadcast signal reception apparatus for future broadcast services according to embodiments of the present disclosure may correspond to the broadcast signal transmission apparatus for future broadcast services described with reference to FIG. 1.

The broadcast signal reception apparatus for future broadcast services according to embodiments of the present disclosure may include a synchronization and demodulation module 9000, a frame parsing module 9010, a demapping and decoding module 9020, an output processor 9030, and a signaling decoding module 9040. A description will be given of operation of each module of the broadcast signal reception apparatus.

The synchronization and demodulation module 9000 may receive input signals through m reception antennas, perform signal detection and synchronization with respect to a system corresponding to the broadcast signal reception apparatus, and carry out demodulation corresponding to a reverse procedure of the procedure performed by the broadcast signal transmission apparatus.

The frame parsing module 9010 may parse input signal frames and extract data through which a service selected by a user is transmitted. If the broadcast signal transmission apparatus performs interleaving, the frame parsing module 9010 may carry out deinterleaving corresponding to a reverse procedure of interleaving. In this case, the positions of a signal and data that need to be extracted may be obtained by decoding data output from the signaling decoding module 9040 to restore scheduling information generated by the broadcast signal transmission apparatus.

The demapping and decoding module 9020 may convert input signals into bit domain data and then deinterleave the bit domain data as necessary. The demapping and decoding module 9020 may perform demapping for mapping applied for transmission efficiency and correct an error generated on a transmission channel through decoding. In this case, the demapping and decoding module 9020 may obtain transmission parameters necessary for demapping and decoding by decoding data output from the signaling decoding module 9040.

The output processor 9030 may perform reverse procedures of various compression/signal processing procedures which are applied by the broadcast signal transmission apparatus to improve transmission efficiency. In this case, the output processor 9030 may acquire necessary control information from the data output from the signaling decoding module 9040. The output of the output processor 9030 corresponds to a signal input to the broadcast signal transmission apparatus and may be an MPEG-TS, an IP stream (v4 or v6), and a GS.

The signaling decoding module 9040 may obtain physical layer signaling (PLS) information from the signal demodulated by the synchronization and demodulation module 9000. As described above, the frame parsing module 9010, the demapping and decoding module 9020, and the output processor 9030 may execute functions thereof using the data output from the signaling decoding module 9040.

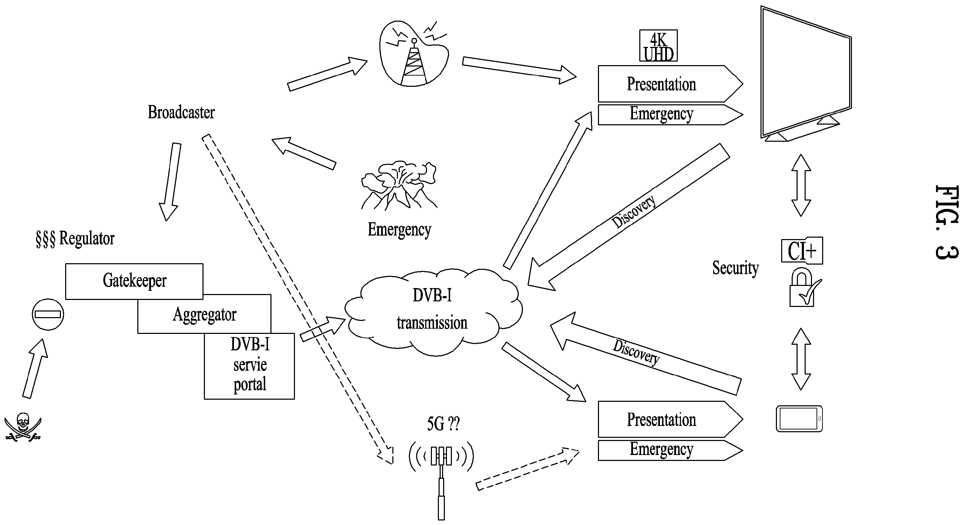

FIG. 3 illustrates a structure in which a broadcast signal transmission apparatus and a broadcast signal reception apparatus according to embodiments of the present disclosure transmit and receive services.

A broadcaster may provide a service based on a terrestrial (T) channel, a cable (C) channel, and/or a satellite (S) channel. Further, the broadcaster may provide a service based on the T channel, the C channel, the S channel, and, at the same time, an Internet channel. Accordingly, the broadcast signal transmission apparatus and the broadcast signal reception apparatus according to embodiments of the present disclosure may transmit and receive a service based on the T channel, the C channel, the S channel, and the Internet channel. The broadcaster, a manufacturer, and/or an operator may specify an authentication method for each channel. The broadcast signal reception apparatus according to embodiments of the present disclosure may obtain authentication for each service channel based on regulations specified by the broadcaster, the manufacturer, and/or the operator. Furthermore, the Internet channel aggregated with a traditional linear service may be used by the broadcast signal transmission apparatus and the broadcast signal reception apparatus according to embodiments of the present disclosure.

The broadcast signal transmission apparatus and the broadcast signal reception apparatus according to embodiments of the present disclosure may provide bootstrapping for a channel list through service discovery information provided over a traditional linear network in order to use the Internet channel and a traditional linear broadcast channel list in an aggregated form.

The broadcast signal transmission apparatus according to embodiments of the present disclosure may provide a service by extending a traditional service and provide an additional service, such as an on-demand/multicast service, together with the traditional linear channel network. The broadcast signal transmission apparatus may also provide a personalization service through usage report based on the Internet channel.

The broadcast signal transmission apparatus according to embodiments of the present disclosure may provide a channel list that aggregates a service of the traditional T channel, S channel, and/or C channel with an over-the-top (OTT) service. The broadcast signal reception apparatus may provide various services to users and functions of the broadcast signal transmission apparatus and the broadcast signal reception apparatus may be extended.

A network/Internet service provider (ISP) that is connectable to the broadcast signal transmission apparatus and the broadcast signal reception apparatus according to embodiments of the present disclosure may be established to provide OTT content aggregated with a traditional service. The broadcast signal transmission apparatus may dynamically allocate unicast/multicast and may provide enhanced delivery performance. The broadcast signal reception apparatus may provide better performance than a terminal that provides services based on a non-management network.

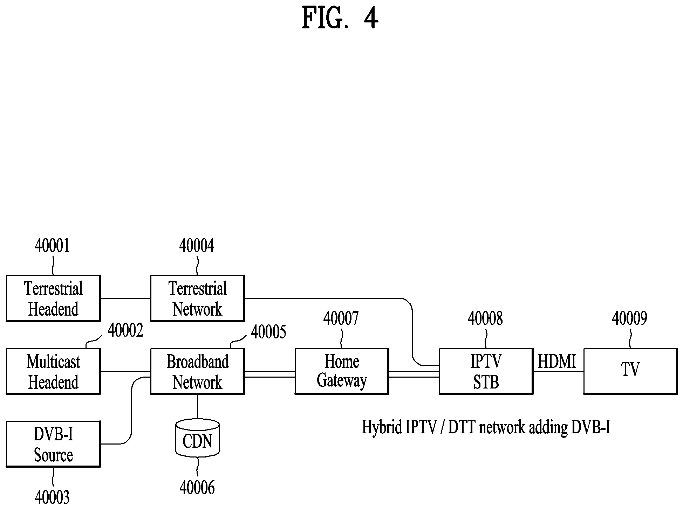

FIG. 4 illustrates a network structure of a broadcast signal transmission apparatus and a broadcast signal reception apparatus according to embodiments of the present disclosure.

The broadcast signal reception apparatus may correspond to a terminal (TV) 40009. A detailed configuration of the TV 40009 has been described above with reference to FIG. 2.

A set-top box (STB) 40008 may be connected to the broadcast signal reception apparatus. For example, the STB 40008 may be connected to the broadcast signal reception apparatus based on a high definition multimedia interface (HDMI) scheme.

A gateway 40007 receives content or services from a broadband network 40005 to provide the content or services to the STB 40008.

The broadband network 40005 provides content or services related thereto to the broadcast signal reception apparatus.

A content delivery network (CDN) 40006 provides data related to content to the broadband network 40005.

A multicast headend 40002 delivers data to the broadband network 40005 based on a multicast scheme.

A source (digital video broadcast-Internet (DVB-I) source) 40003 provides data to the broadband network 40005. The data provided by the source may include data according to a DVB-I scheme.

A terrestrial network 40004 receives terrestrial related data from a terrestrial headend 40001 based on a terrestrial channel and provides the data to the STB 40008.

The broadcast signal transmission apparatus according to embodiments of the present disclosure may remove the burden of considering a different operating system (OS) environment for each terminal in order to provide an OTT service. That is, the broadcast signal reception apparatus does not need to separately provide an OTT application. The broadcast signal reception apparatus may include an industry standard based ecosystem. The broadcast signal reception apparatus provides an effect of extending the form of service access by offering a common service interface.

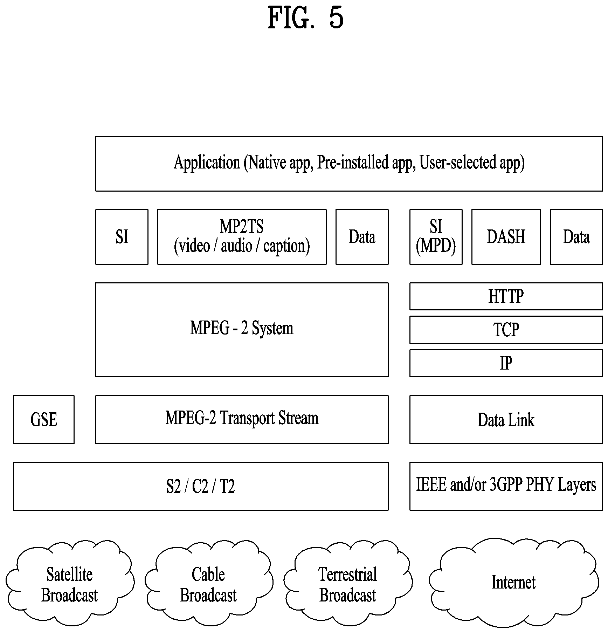

FIG. 5 illustrates a protocol stack of a broadcast signal transmission method and a broadcast signal reception method according to embodiments.

A service may be delivered to a reception side through multiple layers. First, a transmission side may generate service data. A delivery layer of the transmission side may process service data for transmission and a physical layer of the transmission side may encode the processed service data into a broadcast signal and transmit the encoded broadcast signal over a broadcast network or broadband.

Here, the service data may be formatted based on ISO base media file format (BMFF). The ISO BMFF may be used as a media file format for broadcast network/broadband delivery, media encapsulation, and/or synchronization. The service data refers to all data related to a service, which may include service components for a linear service, signaling information for the service components, and other files.

The delivery layer will be described. The delivery layer may provide service data transport functionality. Service data may be delivered over broadcast and/or broadband.

Broadcast service delivery may serve to process the service data into an MPEG-2 TS based on an MPEG-2 system and transmit the MPEG-2 TS using a protocol based on the MPEG-2 system. The service data may include video data, audio data, and/or caption data based on the MPEG-2 TS. In this case, the service data delivered through the MPEG-2 system may include service components for a linear service, other data, and/or service signaling information (e.g., service information (SI)) for the service components. The SI indicates information or service information related to a broadcast service of the broadcast signal transmission method and the broadcast signal reception method according to embodiments.

The service data may be processed through the MPEG-2 system into an MPEG-2 TS for transmission over a broadcast channel. Generic stream encapsulation (GSE) means encapsulating information related to a method of processing the service data into the MPEG-2 TS. The service data processed into the MPEG-2 TS may be processed by a physical layer in S2, C2, and/or T2 scheme and then transmitted.

The physical layer may process the data received from the delivery layer (a higher layer and/or a link layer) and transmit the processed data over the broadcast network or broadband.

The broadcast signal transmission method and the broadcast signal reception method according to embodiments may transmit and receive a service based on a T channel, a C channel, an S channel, and an Internet channel. The T channel means a broadcast channel based on terrestrial broadcast. The S channel means a broadcast channel based on satellite broadcast. The C channel means a broadcast channel based on cable broadcast. The broadcast signal transmission method and the broadcast signal reception method according to embodiments may transmit and receive a broadcast service based on the T channel, the C channel, and/or the S channel. The broadcast signal transmission method and the broadcast signal reception method according to embodiments may process, by the physical layer, the broadcast service based on the T channel according to DVB-T2, the broadcast service based on the C channel according to DVB-C2, and the broadcast service based on the S channel according to DVB-S2.

Internet-based service delivery may process service data into service components (or service data) of a dynamic adaptive streaming over HTTP (DASH) format based on DASH representation and transmit the service components based on a hypertext transfer protocol (HTTP)/transmission control protocol (TCP)/Internet protocol (IP) communication protocol. In the case of hybrid service delivery, data delivered over broadband may include service components of a DASH format, service signaling information (e.g., SI) for the service components, and/or other data. The SI may include, for example, a media presentation description (MPD) describing the service components of the DASH format. Internet-based service delivery may also be referred to as broadband service delivery.

Such data may be processed through HTTP/TCP/IP and delivered to the physical layer for Internet transmission through a data link layer for broadband transmission. The physical layer may process transmission based on, for example, an IEEE and/or 3GPP protocol.

An application layer may mean a platform representing a broadcast service. The broadcast service may be a broadcast service transmitted through broadcast service delivery or a broadcast service transmitted through Internet-based service delivery. An application may include a native application, a preinstalled application, and/or a user-selected application.

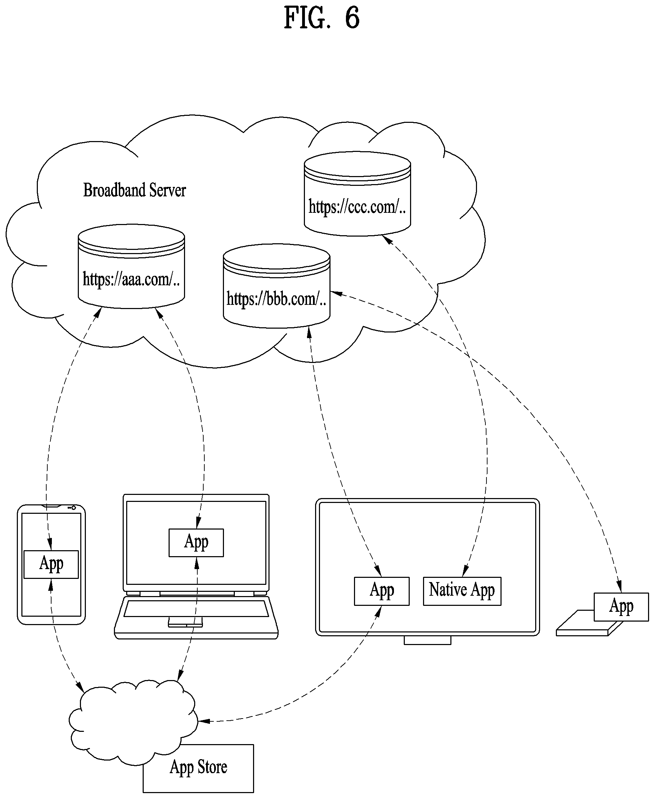

FIG. 6 illustrates a broadcast service discovery procedure according to embodiments.

The broadcast signal reception apparatus according to embodiments may include a tuner for receiving a broadcast service through an S channel, a C channel, a T channel, and/or broadband according to embodiments.

The broadcast signal reception apparatus according to embodiments is connected to a broadband network. A receiver including an audio/video (A/V) player module may receive the broadcast signal as well. The broadcast signal reception apparatus according to embodiments may perform DVB-I service discovery. The broadcast signal reception apparatus according to embodiments may discovery and retrieve the broadcast service even when a DVB-C/S/T tuner for DVB-I service discovery is not installed.

The broadcast reception apparatus according to embodiments may perform the following operations in order to discover the broadcast service even when the broadcast reception apparatus according to embodiments is not equipped with the DVB-C/S/T tuner for DVB-I service discovery.

First, the broadcast transmission apparatus according to embodiments may provide a pre-provisioned uniform resource locator (URL) so that the broadcast signal reception apparatus may retrieve a service discovery list table (SDLT) over the broadband network. The pre-provisioned URL may be provided by a module installed in an application or a DVB-I client according to embodiments.

SDLT information may refer to information about one or more broadcast services for the application according to embodiments.

Through the pre-provisioned URL, the broadcast signal reception apparatus according to embodiments may receive the SDLT, which is a list table for discovering services. The pre-provisioned URL according to embodiments may be utilized in various modules described below.

A. A DVB-I client module provided by a receiver

B. A DVB-I client module mounted in an STB provided by a network operator (this module may be an application separately implemented inside a device or a hybrid broadcast broadband TV (HbbTV) application.)

C. A DVB-I client module installed in an application downloaded from an application store of a mobile receiver or a receiver that may install the application

The pre-provisioned URL according to embodiments may be configured by a query template. The query template may transmit an HTTP request to a broadband server by completing the template in an application (an application including a DVB-I client) installed in the broadcast signal reception apparatus. The form of the query template may be represented as follows.

http[s]://{Recovery Base URL}/[?query]/sdlt
where:
[string] items in square brackets [..] indicate an optional string and
{element} items in curly brackets {..} indicate a named element.
{Recovery Base URL} may be preset and released in each application or native application and may have a different URL value for each receiver in which each application is installed or each receiver provided by the manufacturer.

There is no restriction on the {Recovery Base URL} value. Access to a broadband server based on a corresponding URL may be made.

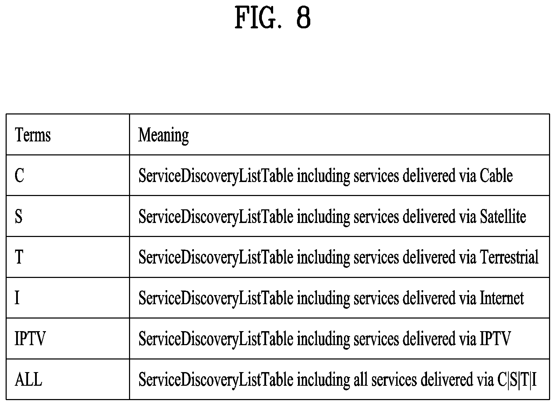

The [? query] string may be generated in template format according to device capability in an application to configure a request string. The [? query] string may be referred to as a query term and the term may be as illustrated in FIG. 8.

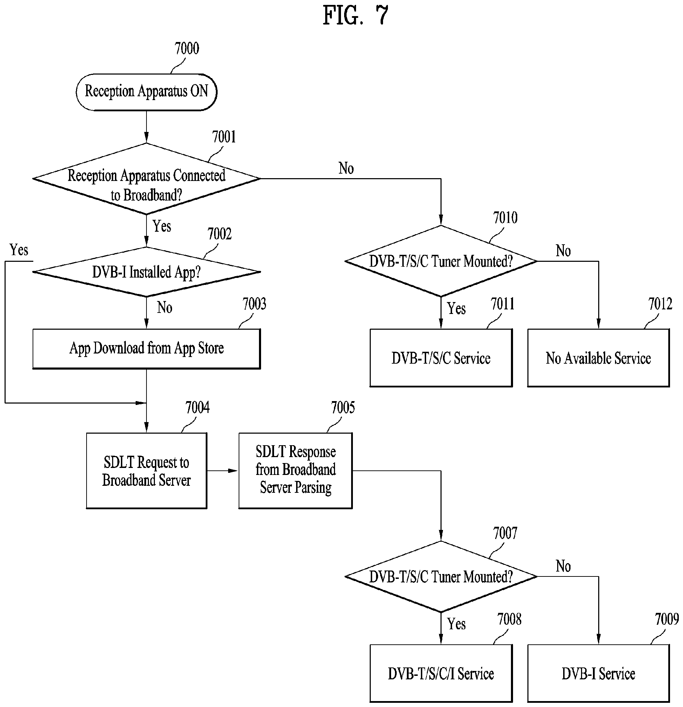

FIG. 7 illustrates a broadcast service discovery procedure according to embodiments.

The broadcast signal reception method according to embodiments may perform the broadcast service discovery procedure according to the flowchart illustrated in FIG. 7.

The broadcast signal reception method according to embodiments may include turning ON the reception apparatus in order to perform the broadcast signal discovery procedure according to embodiments (7000).

The discovery procedure of the broadcast signal receiving method according to embodiments may include determining whether the broadcast signal reception apparatus is connected to broadband (7001).

The broadcast signal reception method according to embodiments may include determining whether there is an application in which a DVB-I client is installed (7002).

When the application in which the DVB-I client is installed is not present, the broadcast signal reception method according to embodiments may include downloading the application from an application store (70003).

When the application is present, the broadcast signal reception method according to embodiments may include transmitting a request for SDLT information for broadcast service discovery to a server over broadband (7004).

The broadcast signal reception method according to embodiments may include receiving the SDLT information according to the request for SDLT information for broadcast service discovery. The broadcast signal reception method according to embodiments may include parsing the received SDLT information (7005).

The broadcast signal reception method according to embodiments include parsing the received SDLT information and determining whether a tuner for a T channel, an S channel, and/or a C channel according to embodiments of DVB is mounted in the broadcast signal reception apparatus (7007).

When the tuner for the T channel, the S channel, and/or the C channel according to embodiments is mounted in the broadcast signal reception apparatus, the broadcast signal reception method according to embodiments may include receiving a broadcast service through the T channel, the S channel, the C channel, and the Internet (e.g., a DVB-T/S/C/I service) (7008).

When the tuner for the T channel, the S channel, and/or the C channel according to embodiments is not mounted in the broadcast signal reception apparatus, the broadcast signal reception method according to embodiments may include receiving an Internet-based broadcast service (e.g., a DVB-I service) (7009).

When the broadcast signal reception apparatus is not connected to broadband, the broadcast signal reception method according to embodiments may include determining whether the tuner for the T channel, the S channel, and/or the C channel according to embodiments of DVB is mounted in the broadcast signal reception apparatus (7010).

When the broadcast signal reception apparatus is not connected to broadband but the tuner for the T channel, the S channel, and/or the C channel according to embodiments is present, the broadcast signal reception method may include receiving the broadcast service through the T channel, the S channel, and/or the C channel (e.g., a DVB-T/S/C service) (7011).

When the broadcast signal reception apparatus is not connected to broadband and the tuner for the T channel, the S channel, and/or the C channel according to embodiments is mounted in the broadcast signal reception apparatus, the broadcast signal reception method according to embodiments may include indicating that available service is not present (7012).

FIG. 8 illustrates a query term of a broadcast service discovery procedure according to embodiments.

The broadcast signal reception method according to embodiments may include transmitting the request for the SDLT information to the server connected to broadband in order to request the SDLT information for broadcast service discovery. The request for the SDLT information may be transmitted to a location indicated by the pre-provisioned URL.

The pre-provisioned URL refers to information indicating a location to which the request is to be transmitted over the broadband server in order to receive the SDLT information according to embodiments. The pre-provisioned URL may be provided by a module installed in the application or the DVB-I client according to embodiments. The application may mean, for example, an application identified in step 7002 of FIG. 7, an application downloaded in step 7003, or an application of FIG. 5 (e.g., a native application, a preset application, a user-selected application, etc.).

The pre-provisioned URL according to embodiments may have a query form (or a query template). The query form may refer to a request form for making a request to a server connected to broadband (Internet network) according to embodiments. The query form may also be referred to as a query template. The query template may include a recovery base URL (e.g., {Recovery Base URL} in FIG. 6) and/or the query term (e.g., [? query] in FIG. 6). FIG. 8 illustrates the query term and an example of the meaning thereof.

The query term is information included in the pre-provisioned URL and may include information as to which method is used to receive a broadcast service included in a requested SDLT.

For example, the query term may be any one of C, S, T, I, IPTV, and ALL. When the query term is C, this may indicate that SDLT information to be requested serves to request an SDLT including services transmitted through a cable. When the query term is S, this may indicate that the SDLT information to be requested serves to request an SDLT including services transmitted through satellite waves. When the query term is T, this may indicate that SDLT information to be requested serves to request an SDLT including services transmitted through terrestrial waves. When the query term is I, this may indicate that the SDLT information to be requested serves to request an SDLT including services transmitted through the Internet (broadband). When the query term is IPTV, this may indicate that the SDLT information to be requested serves to request an SDLT including services transmitted through an IPTV. When the query term is ALL, this may indicate that the SDLT information to be requested serves to request an SDLT including all services transmitted through the cable, the satellite wave, the terrestrial wave, and the Internet.

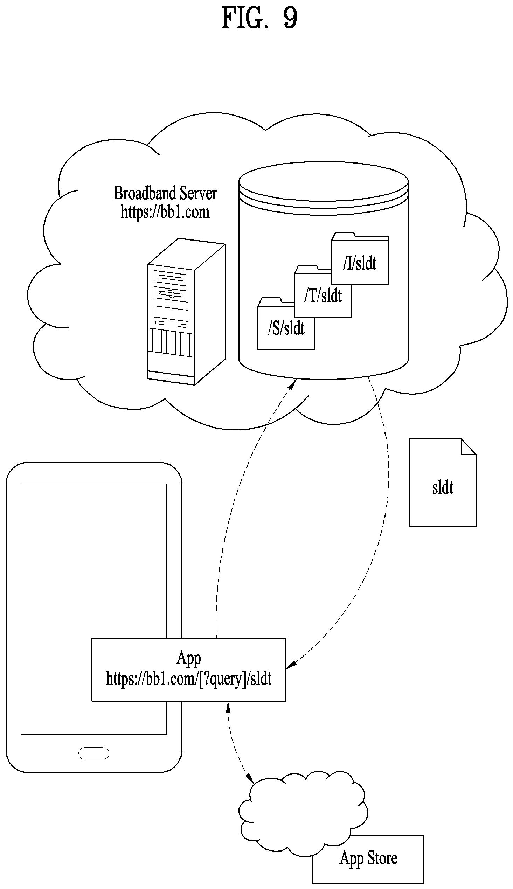

FIG. 9 illustrates a broadcast service discovery procedure using a query term according to embodiments.

The broadcast signal reception method/apparatus according to embodiments may perform a discovery operation for receiving the broadcast service according to embodiments using the pre-provisioned URL and/or the query template according to embodiments. The discovery operation according to embodiments may be performed according to the following method.

First, the broadcast signal reception apparatus downloads an application capable of discovering a DVB-I service from an application store of the broadcast signal reception apparatus supporting broadcast service reception through broadband and install the downloaded application in the broadcast signal reception apparatus. The downloaded application according to embodiments may include a DVB-I client module and the client module may provide the pre-provisioned URL.

Next, the broadcast signal reception apparatus configures the query form according to embodiments using the pre-provisioned URL in order to discover an Internet-based broadcast service. The query form refers to the query form described in FIG. 8. When the broadcast signal reception apparatus according to embodiments does not include a DVB-S/C/T tuner, the broadcast signal reception apparatus may discover the Internet-based broadcast service (e.g., DVB-I service) that may be obtained through a broadband (Internet) network.

Next, the broadcast signal reception apparatus according to embodiments may generate the query form for requesting the SDLT including a list of services capable of discovering the Internet-based broadcast service (e.g., DVB-I service). According to embodiments, the query form may be generated according to the operations as described with reference to FIGS. 6 to 9.

The broadcast signal reception apparatus according to embodiments may transmit the generated query form to a broadband server (a server connected to the Internet network) providing the SDLT according to embodiments. Upon receiving the generated query form, the broadband server parses the query form according to embodiments by a query form parser and provides a response including the SDLT information to the broadcast signal reception apparatus according to embodiments through a response scenario implemented in the server. The SDLT information transmitted by the server at the request of the reception apparatus according to embodiments may be all file formats supported in a web environment, such as XML or JSON.

The broadcast signal reception apparatus according to embodiments receives the SDLT provided as the response. The SDLT according to embodiments may be parsed by a parser included in the broadcast signal reception apparatus or the application so that sub-elements included in the SDLT may be extracted.

According to embodiments, upon reception of the SDLT, the reception apparatus may list an Internet-based service together with a traditional terrestrial, satellite, and/or cable service in a service list selectable by a user. FIG. 9 illustrates a user interface (UI) on a TV through a specific application. The reception apparatus according to embodiments may indicate whether each service is transmitted through the Internet based on characteristics of each service by generating an icon for each receiver. Additional information may be further added. For example, when the receiver is not connected to the broadband, the reception apparatus may indicate that the Internet-based service cannot be selected.

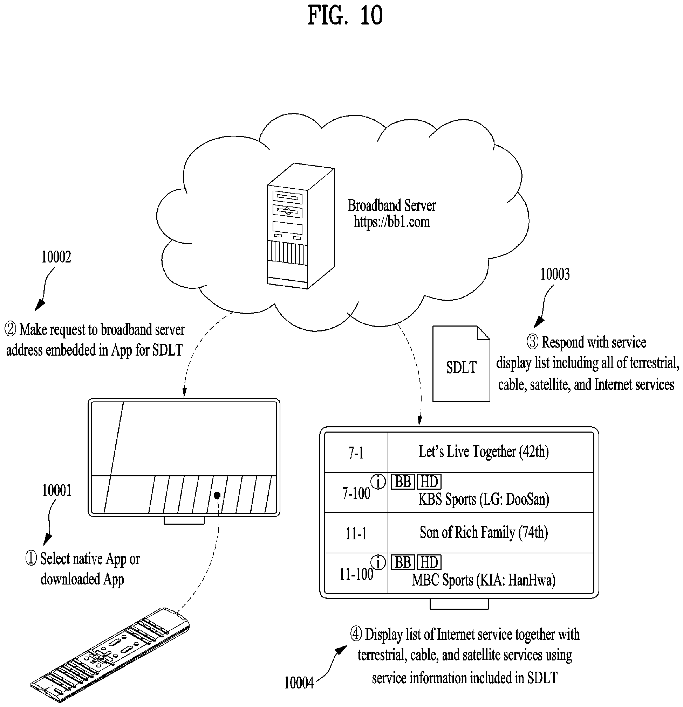

FIG. 10 illustrates a broadcast service discovery procedure using a query term according to embodiments.

The broadcast signal reception apparatus according to embodiments may be, for example, a TV. The broadcast signal reception apparatus according to embodiments may include a display unit. The broadcast signal reception apparatus according to embodiments may display one or more components representing the application according to embodiments on the display unit.

A user may first select one of the components representing the application according to embodiments (10001). The application may be, for example, a native application, a preinstalled application, or a downloaded application described with respect to FIG. 5.

The broadcast signal reception apparatus according to embodiments may execute the application selected by the user. The broadcast signal reception apparatus according to embodiments may make a request to a broadband server (a server connected over the Internet network) embedded in the selected application for a related SDLT (10002). The related SDLT may mean information about broadcast services related to the selected application.

In order to make a request to the broadband server for SDLT information, the broadcast signal reception apparatus according to embodiments may receive a pre-provisioned URL from the selected application or generate the query form by adding the query term according to embodiments to the pre-provisioned URL or performing replacement. The broadcast signal reception apparatus according to embodiments may transmit a request for acquiring the SDLT to an address indicated by the query form. A method of generating the query form according to embodiments may use the method described with reference to FIGS. 6 to 9.

The broadcast signal reception apparatus according to embodiments may receive the SDLT information from the broadband server (10003). The SDLT information may include information about one or more broadcast services. The one or more broadcast services may include a terrestrial broadcast service, a satellite broadcast service, an Internet broadcast service, and/or a cable broadcast service.

The broadcast signal reception apparatus according to embodiments receives the SDLT. The SDLT according to embodiments may be parsed by the parser included in the broadcast signal reception apparatus or the application so that sub-elements included in the SDLT may be extracted.

The broadcast signal reception apparatus according to embodiments may display all or part of information about the broadcast services included in the received SDLT information on the display unit. For example, the broadcast signal reception apparatus may cause the display unit to display channel information of one or more broadcast services included in the SDLT information, name information of the broadcast services, and information about a display scheme (e.g., HD service) of the broadcast services, and/or information about additional information of the broadcast services.

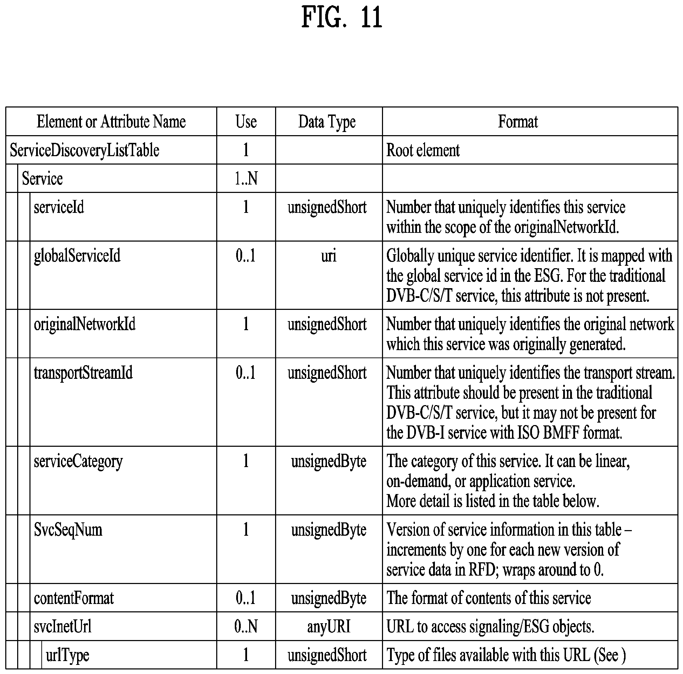

FIG. 11 illustrates an example of an SDLT according to embodiments.

SDLT information may refer to information representing one or more broadcast services for the application according to embodiments. The SDLT according to embodiments may also be referred to as a service list.

ServiceDiscoveryListTable (SDLT) may be in the form of an HTTP response provided by a broadband server through an HTTP request that is configured in the form of a query form according to a pre-provisioned URL mounted in a DVB-I client module and receiver capability. The SDLT according to embodiments may be configured in the form of XML. Parameters illustrated in FIG. 11 may be attributes in the form of XML.

The SDLT may include one or more Service elements. A Service element may mean an object including information about one or more broadcast services for the application according to embodiments and indicates one Service included in the SDLT.

The Service elements may include a service ID (serviceId) element, a global service ID (globalServiceId) element, an original network ID (originalNetworkId), a transport stream ID (transportStreamId), service category information (serviceCategory), service sequence number information (SvcSeqNum), content format information (contentFormat), and/or service Internet URL information (svcInetUrl).

serviceId represents a number that uniquely identifies this service within the scope of originalNetworkId. serviceId is an ID of the service. For a DVB-C/S/T service, serviceId has a unique value within the scope of service ID + transport stream ID + original network ID. For a DVB-I service, serviceId has a unique value within the scope of an original network.

globalServiceId represents a globally unique service ID. globalServiceId may be mapped with a global service ID in an electronic service guide (ESG). For the DVB-C/S/T service, this attribute may not be present. For the DVB-I service, this attribute may have a globally unique URI value mapped with one service in the ESG.

originalNetworkId represents a number that uniquely identifies an original network from which this service is originally generated.

transportStreamId represents a number that uniquely identifies a transport stream. This attribute may be present in the traditional DVB-C/S/T service but may not be present for the DVB-I service with an ISO BMFF.

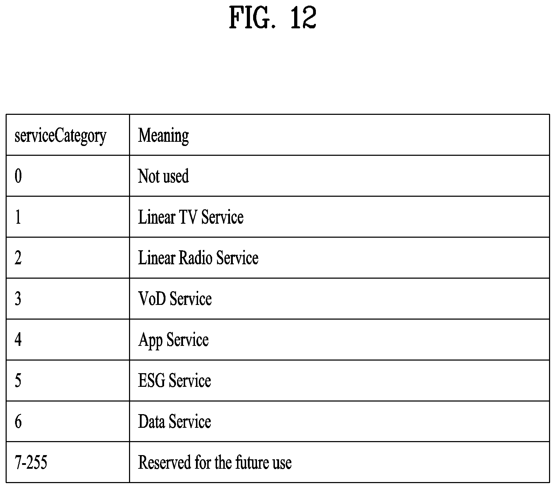

serviceCategory represents the category of the service. The category of this service may include a linear, on-demand, or application service. More details are listed in FIG. 12.

SvcSeqNum represents a version of service information in this table — increments by one for each new version of service data in RFD; wraps around to 0. This element is a sequence number indicating whether a value inside the Service element has changed. If the sequence number has not been changed, this means that the value inside the Service element has not been changed. If a service with the same ServiceId has already been received, the reception apparatus does not need to re-analyze the service.

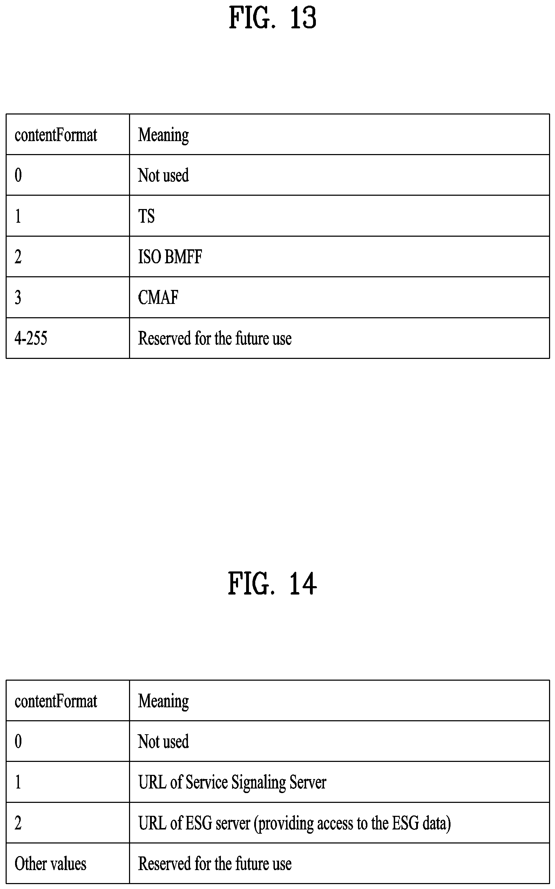

contentFormat represents the format of content of this service. This format may have a value defined in FIG. 13.

svcInetUrl may mean information of zero or more URLs for accessing signaling information or ESG objects. SvcInetUrl may indicate a URL value of a broadband server that may receive the signaling or ESG of the service. svcInetUrl may include urlType. urlType may mean the type of files available with this URL. urlType indicates the type of a broadband server URL and may indicate signaling data or ESG data as defined in FIG. 14.

The parameters illustrated in FIG. 11 according to embodiments may be present at the highest level in the SDLT according to embodiments or may be present at the same level as or a lower level than the Service (or service instance) in the SDLT. The inclusion relationship of the parameters illustrated in FIG. 11 is exemplary.

The broadcast signal reception apparatus according to embodiments receives the SDLT including the elements according to embodiments illustrated in FIG. 11. The SDLT according to embodiments may be parsed by the parser included in the broadcast signal reception apparatus or the application so that sub-elements included in the SDLT may be extracted.

FIG. 12 illustrates an example of values of service category information (serviceCategory) included in an SDLT according to embodiments.

The service category information (serviceCategory) according to embodiments illustrated in FIG. 12 may mean the service category information included in the SDLT of FIG. 11.

The service category information indicates the category of the broadcast service according to embodiments.

The category of the broadcast service may include a linear TV service, a linear radio service, a video-on-demand (VoD) service, an application service, an ESG service, and/or a data service.

The service category information may have a value of 0 when a corresponding service is not used as the broadcast service, when the service is not the broadcast service, or when the service is not used. The service category information may have a value of 1 for the linear TV service, a value of 2 for the linear radio service, a value of 3 for the VoD service, a value of 4 for the application service, and a value of 5 for the ESG service, and a value of 6 for the data service. The service category information may reserve values corresponding to 7 to 255 for future use.

FIG. 13 illustrates an example of values of content format information (contentFormat) included in an SDLT according to embodiments.

The content format information (contentFormat) according to embodiments illustrated in FIG. 13 may mean the content format information (contentFormat) included in the SDLT of FIG. 11.

The content format information represents a transmission and reception format of content of a broadcast service according to embodiments. The content format of the broadcast service may include a TS format, an ISO BMFF, and/or a common media application format (CMAF).

The content format information may have a value of 0 when a corresponding service is not used as the broadcast service, when the service is not the broadcast service, or when the service is not used. The content format information may have a value of 1 when the service is transmitted/received in the TS format, a value of 2 when the service is transmitted/received in the ISO BMFF, and 3 when the service is transmitted/received in the CMAF. The content format information may reserve values corresponding to 7 to 255 for future use.

FIG. 14 illustrates an example of values of urlType included in an SDLT according to embodiments.

urlType according to embodiments illustrated in FIG. 14 may mean urlType included in the SDLT of FIG. 11.

urlType indicates the type of a broadband server URL. As defined in a table below, urlType may indicate signaling data or ESG data. The content format of the broadcast service may include the TS format, the ISO BMFF, and/or the CMAF.

urlType has a value of 1 when a server indicated by SvcInetUrl is a service signaling server and a value of 2 when the server indicated by SvcInetUrl is an ESG server (in the case of a URL provided to access the ESG data). The value of urlType may reserve values corresponding to 7 to 255 for future use.

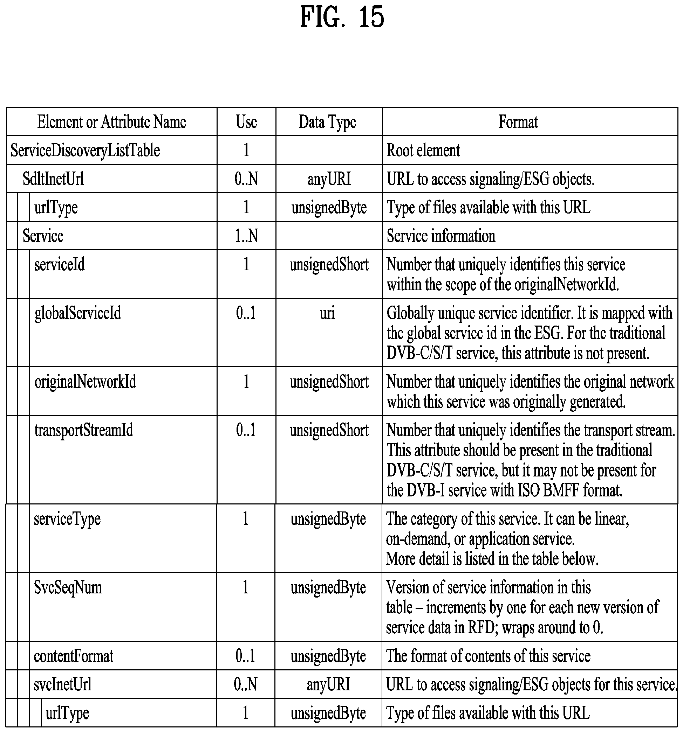

FIG. 15 illustrates another example of an SDLT according to embodiments.

ServiceDiscoveryListTable (SDLT) may be in the form of an HTTP response provided by a broadband server through an HTTP request that is configured in the form of a query form according to a pre-provisioned URL mounted in a DVB-I client module and receiver capability. The SDLT according to embodiments may be configured in the form of XML. Parameters illustrated in FIG. 15 maybe attributes in the form of XML. The SDLT may include one or more Service elements. The Service elements may imply the Service elements described with reference to FIG. 11.

The broadcast signal reception apparatus/method according to embodiments may signal a broadband URL of an SDLT level. SdltInetUrl represents an address of a broadband server accessible by a receiver in order to obtain information corresponding to any service included in the SDLT.

Accordingly, the SDLT according to embodiments may further include an SdltInetUrl element. SdltInetUrl may mean the URL value of the broadband server that may receive signaling or an ESG related to any service listed in the SDLT. SdltInetUrl may include urlType. The urlType element may indicate the type of a broadband server URL and represent signaling data or ESG data according to each defined type.

The broadcast signal reception apparatus/method according to embodiments may generate a query term accessible to the service signaling information and/or the ESG using SdltInetUrl included in the SDLT or SvcInetUrl of each Service. The query term may refer to a server address for transmitting a request for the signaling data or ESG data according to embodiments to the broadband server. The broadcast signal reception apparatus/method according to embodiments may generate an HTTP query term that may request information related to a service (e.g., service signaling information and/or ESG information) using SdltInetUrl.

The parameters illustrated in FIG. 15 according to embodiments may be present at the highest level in the SDLT according to embodiments or may be present at the same level as or a lower level than the Service (or service instance) in the SDLT. The inclusion relationship of the parameters illustrated in FIG. 15 is exemplary.

The broadcast signal reception apparatus according to embodiments receives the SDLT including the elements according to embodiments illustrated in FIG. 11. The SDLT according to embodiments may be parsed by the parser included in the broadcast signal reception apparatus or the application so that sub-elements included in the SDLT may be extracted.

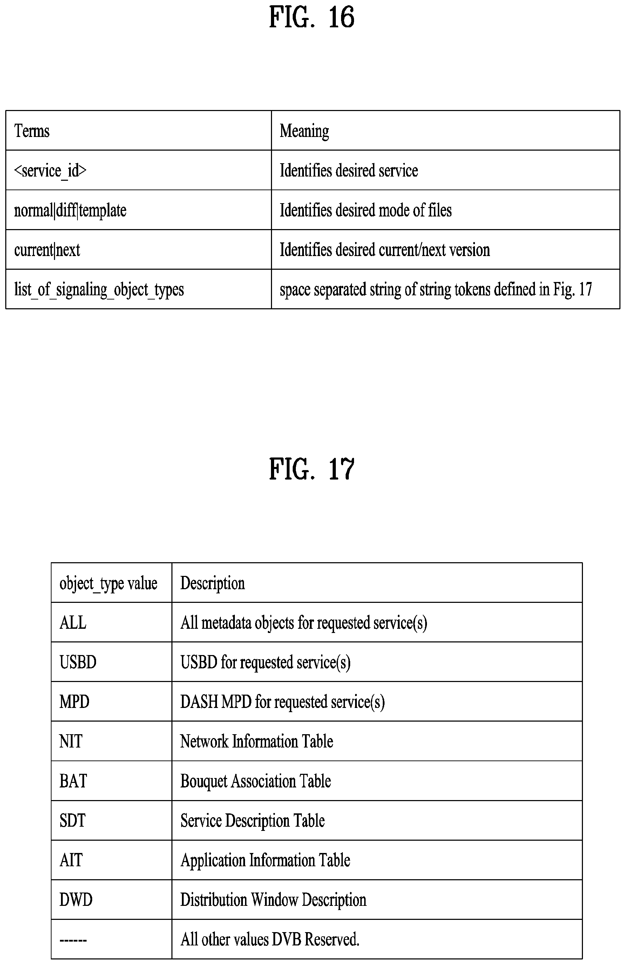

FIG. 16 illustrates an example of a query term according to embodiments.

The query term of FIG. 16 may mean the query term described with reference to FIG. 15. When SdltInetUrl with, for example, urlType 1 is signaled in the SDLT, a <service_id> term (or syntax) may be used. This means a query indicating that a URL is signaled at the SDLT level but the receiver desires to acquire only signaling information for a specific requested service. For example, if the value of <service_id> is not included in the query term according to embodiments, this means a request for signaling for all services signaled by the SDLT.

A normal/diff/template term is applicable when a requested signaling object is in an XML format in the case of a DVB-I service.

A current/next term means whether the requested signaling object is signaling information of a current version or signaling information of a next version. When the signaling object of the current version is requested, the corresponding term is omittable.

A list_of_signaling_object_types term indicates the type of the requested signaling object and may be space-separated request. If all signaling objects are requested, the signaling objects may be applied to the query term using ALL. The list_of_signaling_object_types term according to embodiments may use parameters illustrated in FIG. 17. The signaling object may mean a unit of data including information about requested services.

FIG. 17 illustrates an example of parameters of list_of_signaling_object_types of a query term according to embodiments.

FIG. 17 illustrates an example of the parameters of list_of_signaling_object_types when generating the query term using SdltInetUrl illustrated in FIG. 16.

When the parameter of list_of_signaling_object_types is ALL, this means that all signaling objects (metadata objects) for the requested services are requested.

When the parameter of list of signaling_object_types is a user service bundle description (USBD), this means that a USBD signaling object for the requested services is requested.

When the parameter of list_of_signaling_object_types is an MPD, this means that a DASH MPD signaling object for the requested services is requested.

When the parameter of list_of_signaling_object_types is a network information table (NIT), this means that the NIT is requested.

When the parameter of list_of_signaling_object_types is a bouquet association table (BAT), this means that the BAT is requested. The BAT corresponds to information that provides information about bouquets and a bouquet means a set of services marketed as one entity.

When the parameter of list_of_signaling_object_types is a service description table (SDT), this means that the SDT is requested.

When the parameter of list_of_signaling_object_types is an application information table (AIT), this means that the AIT is requested.

When the parameter of list_of_signaling_object_types is a distribution window description (DWD), this means that the DWD is requested.

list_of_signaling_object_types may have ALL, USBD, MPD, NIT, BAT, SDT, AIT and/or DWD as parameters and have parameters other than the above-described parameters.

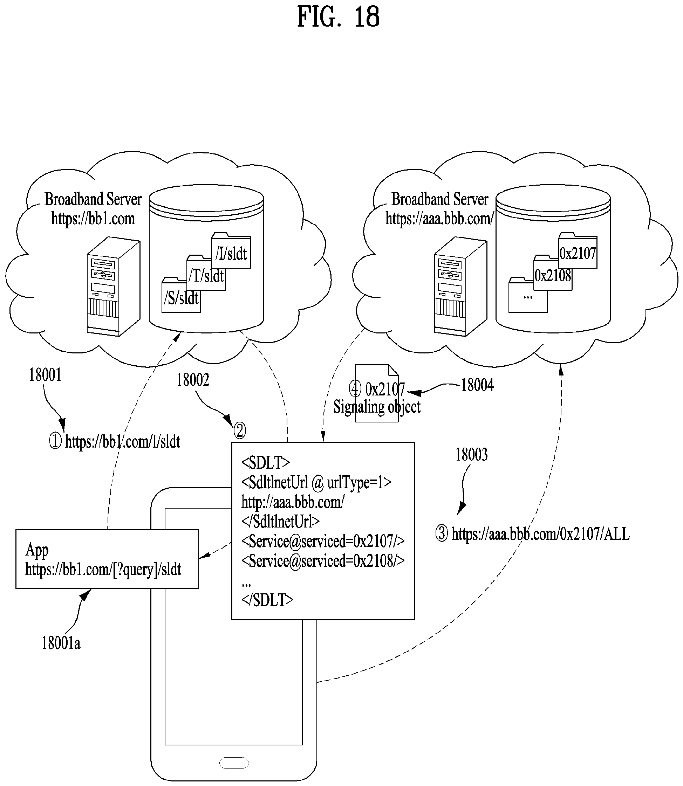

FIG. 18 illustrates an example of receiving signaling objects using a query term based on sdltInetUrl according to embodiments.

The broadcast signal reception apparatus according to embodiments may generate the query term based on sdltInetUrl and request the signaling object using the generated query term, as described with reference to FIGS. 16 to 17.

The broadcast signal reception apparatus according to embodiments may transmit a request for an SLDT to a first broadband server using a pre-provisioned URL (e.g., https://bb1.com/[?query]/sldt 18001a of FIG. 18) provided by an application in the reception apparatus and using a related query term (18001). The operation 18001 may conform to the operation described with reference to FIGS. 6 to 10. (For example, the broadcast signal reception apparatus according to embodiments may include a transmitter and the transmitter may transmit the request for SDLT acquisition to the first broadband server.)

The broadcast signal reception apparatus according to embodiments may receive the SLDT from the first broadband server (18002). The received SLDT according to embodiments may mean the SLDT described with reference to FIGS. 11 to 17. For example, the broadcast signal reception apparatus may acquire the SDLT through <sdltInetUrl urlType="1"> http://aaa.bbb.com/</sdltInetUrl>.

The broadcast signal reception apparatus according to embodiments receives the SDLT including the elements according to embodiments illustrated in FIG. 11. The SDLT according to embodiments may be parsed by the parser included in the broadcast signal reception apparatus or the application so that sub-elements included in the SDLT may be extracted.

The broadcast signal reception apparatus according to embodiments may generate the query term for receiving a signaling object for services using the received SDLT and transmit the generated query term to a second broadband server (18003). The broadband server may refer to a server indicated by the above-mentioned query term. The query term for receiving the signaling object is as described with reference to FIGS. 15 to 17. The second broadband server may be the same as or different from the first broadband server.

The broadcast signal reception apparatus according to embodiments may generate the query term for receiving the signaling object using SdltInetUrl information and urlType information included in the SDLT. (For example, the broadcast signal reception apparatus according to embodiments may include the transmitter and the transmitter may transmit the request for SDLT acquisition to the second broadband server.)

The broadcast signal reception apparatus according to embodiments may receive the signaling object based on the above-described query term (18004). The broadcast signal reception apparatus according to embodiments receives the signaling object. The signaling object according to embodiments may be parsed by the parser or signaling object parser included in the broadcast signal reception apparatus or the application so that sub-elements included in the signaling object may be extracted.

For example, the reception apparatus may generate the query term such as http://aaa.bbb.com/0x2107/ALL. When the HTTP request as in the above example is made, the broadband server may return all signaling objects for a service having an @serviceId value of 0x2107 to the broadcast signal reception apparatus according to embodiments as a current and normal version.

As another example, upon acquiring the SDLT including a parameter of <sdltInetUrl urlType="1"> http://xxx.yyy.com/</sdltInetUrl>, the broadcast signal reception apparatus according to embodiments configures the query term with a value of http://xxx.yyy.com/0x2103/next/MPD. When such an HTTP request is made, the broadband server returns an MPD signaling object of a service with a @serviceId value of 0x2103 as a next and normal version.

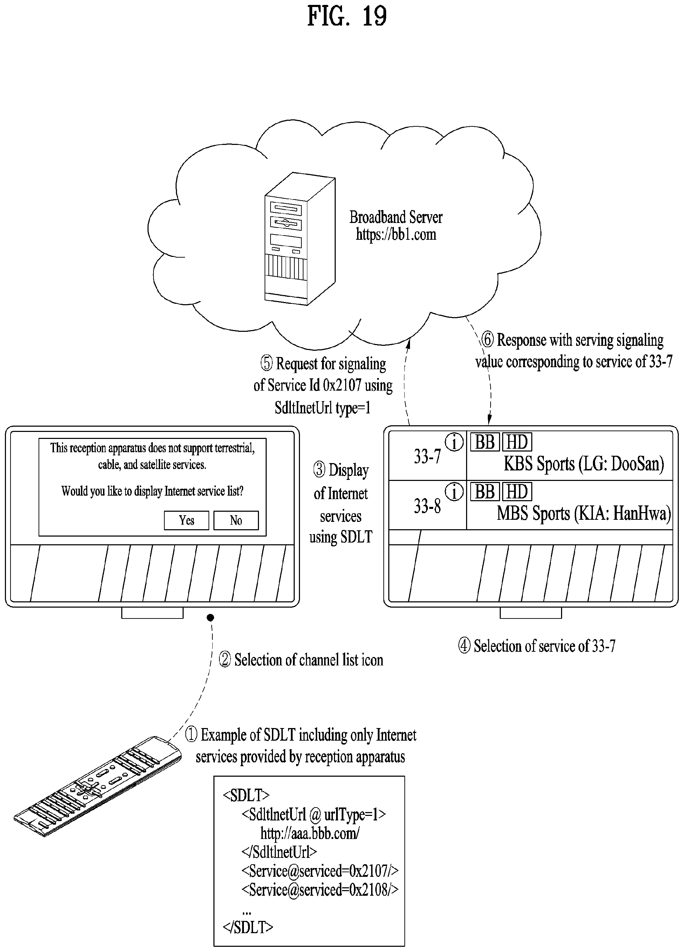

FIG. 19 illustrates an example of receiving signaling objects using a query term based on sdltInetUrl according to embodiments.

The broadcast signal reception apparatus according to embodiments may have the SDLT. The SDLT of the broadcast signal reception apparatus according to embodiments may be information received from the broadband server based on the method described in FIG. 18. The broadcast signal reception apparatus according to embodiments may display a list of broadcast services based on the SDLT through the display unit.

For example, when the broadcast signal reception apparatus according to embodiments includes a service with @serviceId=0x2107 and a service with @serviceId=0x2108, the reception apparatus may cause the display unit to display an icon representing the service with @serviceId=0x2107 and an icon representing the service with @serviceId=0x2108.

A user of the broadcast signal reception apparatus according to embodiments may select services included in the SDLT. That is, the broadcast signal reception apparatus according to embodiments may display the services included in the SDLT in the form of icons and the user may select a broadcast service by selecting a corresponding icon.

The broadcast signal reception apparatus according to embodiments may display a component expressed as, for example, "Channel List". If the user selects the corresponding component, the broadcast signal reception apparatus may display a list of the broadcast services included in the SDLT. For example, the broadcast signal reception apparatus may display channel 33-7, information about channel 33-7, channel 33-8, and information about channel 33-8 using the SDLT. The user may select one or more services from among the listed broadcast services.

The broadcast signal reception apparatus according to embodiments may transmit a request for a signaling object for the service selected by the user to the broadband server based on information included in the SDLT. For example, when the user selects channel 33-7, the broadcast signal reception apparatus according to embodiments may transmit a request for a signaling object representing one or more services related to channel 33-7 to the broadband server. The broadcast signal reception apparatus according to embodiments may transmit a request for a signaling object of a service corresponding to @serviceId=0x2107 using SdltInetURL type==1.

The broadcast signal reception apparatus according to embodiments may receive the service signaling object for the service related to the requested channel 33-7.

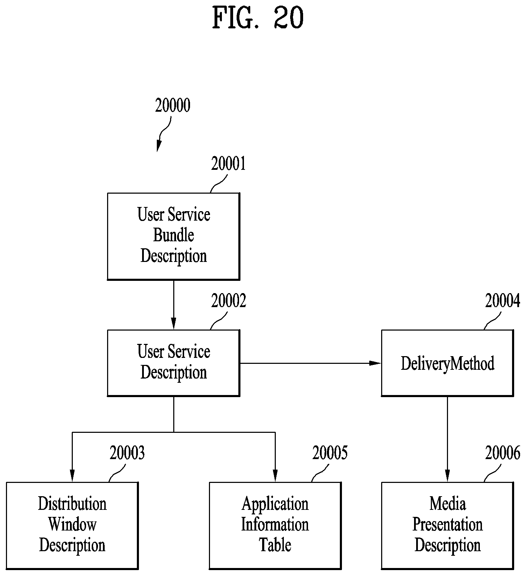

FIG. 20 illustrates a relationship between a service signaling object of Service and a service signaling object.

FIG. 20 illustrates a type of a service signaling object 20000 of an Internet-based broadcast service. The service signaling object of FIG. 20 may mean the service signaling object or the signaling object described with reference to FIGS. 15 to 19. The service signaling object may be referred to as service signaling or service signaling metadata. FIG. 20 illustrates a service signaling configuration of a DVB-I service provided by a broadband server when the broadcast signal reception apparatus according to embodiments makes a request for the signaling object of the broadcast service.

The broadcast signal reception apparatus according to embodiments receives the service signaling object illustrated in FIG. 20. The signaling object according to embodiments may be parsed by the parser or signaling object parser included in the broadcast signal reception apparatus or the application so that sub-elements included in the signaling object may be extracted.

The service signaling object 20000 according to embodiments may be referred to as service signaling or a metadata signaling object.

A service list means one or more services. Service list signaling means information about each set of one or more services and information about services.

The service signaling object 20000 of the DVB-I service may include different information depending on the role and configuration of each metadata signaling object. FIG. 20 illustrates an example of DVB-I service signaling consisting of signaling metadata of 4 types.

A user service bundle description (USBD) 20001 is a signaling object that includes one or more USDs including information about the broadcast service (e.g., DVB-I service) according to embodiments. The USBD may include URL information for an MPD when the broadcast service is a DVB-I linear service.

A user service description (USD) 20002 is a signaling object including information about the broadcast service (e.g., DVB-I service) according to embodiments. According to embodiments, the USBD may include one or more USDs.

A distribution window description (DWD) 20003 may be used when information about the DVB-I service is indicated to the user while a still image or a general file is distributed. In this case, the USBD may indicate a URL for linking the DWD for signaling schedule information about when to distribute the still image.

A delivery method 20004 indicates transmission-related information that contains content accessed through a broadcast network or a broadband network with information included in the USD according to embodiments. The delivery method may be used to obtain the MPD.

An AIT 20005 may provide a URL for AIT signaling for connecting an application when the DVB-I service is an application-driven service.

An MPD 20006 is signaling metadata used in DVB-DASH and a usage method and signaling information of the metadata are as defined in MPEG-DASH.

The USBD, DWD, delivery method, AIT, and MPD according to embodiments may be signaled in one XML format in the signaling object according to embodiments. For example, the parser (or signaling object parser) of the broadcast signal reception apparatus according to embodiments may extract one or more USDs by parsing the USBD included in the service signaling object. The parser (or signaling object parser) of the broadcast signal reception apparatus according to embodiments may extract, from the serving signaling object according to embodiments, or obtain, through a request to a server or a response from the server, the delivery method 20004, the DWD 20003, and/or the AIT 20005 based on the extracted USDs. The parser (or signaling object parser) of the broadcast signal reception apparatus according to embodiments may extract the MPD 20006 based on the delivery method 20004.

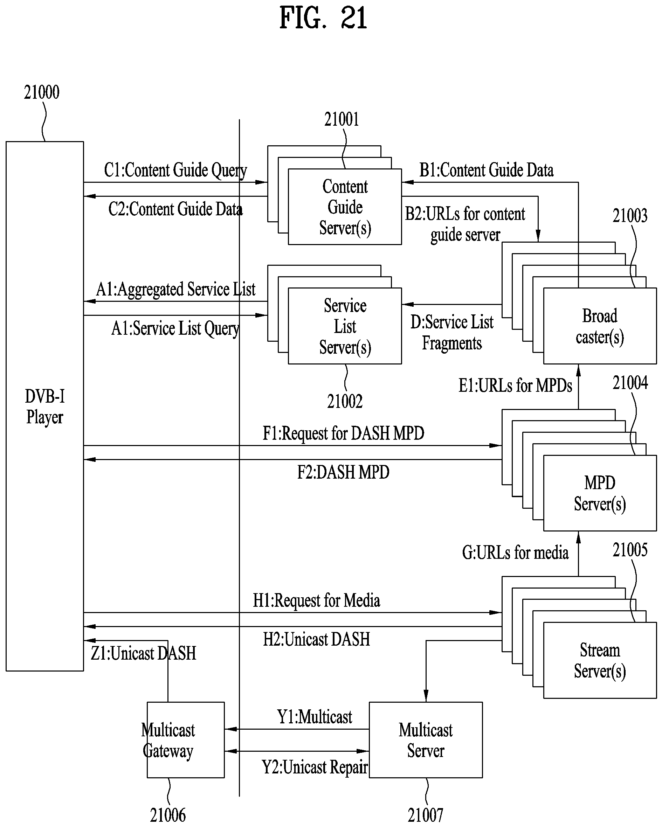

FIG. 21 illustrates a method in which a broadcast signal reception apparatus according to embodiments receives service list signaling and a broadcast service.

In FIG. 21, the case in which the broadcast signal reception apparatus according to embodiments is a DVB-I system that receives DVB-I service discovery and broadcast content is illustrated. The DVB-I system may include a DVB-I player 21000, a content guide server 21001, a service list server 21002, a broadcaster 21003, an MPD server 21004, a stream server 21005, a multicast gateway 21006, and/or a multicast server 21007.

The DVB-I player 21000 may mean the broadcast signal reception apparatus according to embodiments.

The DVB-I player 21000 may transmit a content guide query to the content guide server 21001 (C1). The DVB-I player 21000 may receive content guide data from the content guide server 21001.

The DVB-I player 21000 may transmit a service list query to the service list server 21002 (A1). The DVB-I player 21000 may receive an aggregated service list from the service list server 21002. The DVB-I player 21000 may transmit a query for service list discovering (i.e., a service list discovery query) to a service list registry included in the service list server 21002. The DVB-I player 21000 may receive service list entry points (e.g., SDLT) from the service list registry of the service list server 21002.

The DVB-I player 21000 according to embodiments includes a receiver for receiving signals or data and/or a transmitter for transmitting signals or data to and/or from the content guide server 21001, the service list server 21002, the MPD server 21004, the stream server 21005, and/or the multicast gateway 21006 according to embodiments. The DVB-I player 21000 according to embodiments includes a parser for parsing data or signals received from the content guide server 21001, the service list server 21002, the MPD server 21004, the stream server 21005, and/or the multicast gateway 21006 according to embodiments. The DVB-I player 21000 according to embodiments may include the physical layer structure described in FIG. 2.

The DVB-I player 21000 may transmit a request for a DASH MPD to the MPD server 21004 (F1). The DVB-I player 21000 may receive the DASH MPD from the MPD server 21004.

The DVB-I player 21000 may transmit a request for media data to the stream server 21005 (H1). The DVB-I player 21000 may receive DASH data from the stream server 21005 in a unicast form.

The content guide server 21001 may transmit the content guide data according to embodiments to the DVB-I player 21000 according to embodiments (C2). The content guide server 21001 may transmit a request for a content guide to the broadcaster 21003 in order to receive the content guide data (B2). The content guide server 21001 may receive the content guide data from the broadcaster 21003 (B1). The content guide server 21001 may transmit the content guide received from the broadcaster 21003 to the DVB-I player (C2). The content guide server 21001 according to embodiments may include the physical layer structure described in FIG. 1.

The service list server 21002 may transmit the aggregated service list including information about broadcast services according to embodiments to the DVB-I player (A1). Some or all of the information included in the aggregated service list according to embodiments may be received from the broadcaster 21003 (D). That is, the service list server 21002 may receive service list fragments constituting the service list from the broadcaster 21003 and transmit all or part of the service list fragments to the DVB-I player 21000. In some embodiments, the service list server 21002 may include the service list registry. The service list server 21002 according to embodiments may include the physical layer structure described in FIG. 1.

The broadcaster 21003 may transmit the service list fragments constituting the broadcast service list to the service list server 21002. The broadcaster may transmit the content guide data to the content guide server 21001.

The broadcaster 21003 according to embodiments may provide content. The broadcaster according to embodiments may be referred to as a content/service provider. The broadcaster 21003 may transmit the content guide to the content guide server and transmit the service list fragments to the service list server. The service list fragments may also be referred to as service records. The broadcaster 21003 according to embodiments may include the physical layer structure described in FIG. 1.

The MPD server 21004 represents a server that provides the DASH MPD according to embodiments to the DVB-I player 21000 according to embodiments. The MPD server may be a server connected to a broadband network. The MPD server 21004 may receive the request for the DASH MPD from the DVB-I player (F1). The MPD server 21004 may transmit the DASH MPD to the DVB-I player based on the request (F2). The MPD server 21004 may provide URL information for MPDs to the broadcaster 21003 according to embodiments. The URL information for the MPDs may be provided to the DVB-I player through the broadcaster 21003 (E1) and service signaling information may be transmitted through the content guide server 21001 and/or the service list server 21002 based on the URL information. The MPD server 21004 according to embodiments may include the physical layer structure described in FIG. 1.

The stream server 21005 means a server that provides the media data according to embodiments to the DVB-I player 21000 according to embodiments. The media data according to embodiments may mean a file of a DASH format. The stream server 21005 may receive the request for the media data from the DVB-I player (H1). The stream server 21005 may transmit the DASH media data to the DVB-I player based on the request (H2). The stream server 21005 may provide URL information for media to the MPD server 21004 according to embodiments (G). Upon receiving the URL information for the media, the MPD server may extract and generate the URL information for the MPDs based on the URL information for the media. Thereafter, the URL information for the MPDs may be provided to the DVB-I player through the broadcaster 21003 (E1) and service signaling information may be transmitted through the content guide server 21001 and/or the service list server 21002 based on the URL information for the MPDs. The stream server 21005 according to embodiments may include the physical layer structure described in FIG. 1.

The multicast server 21007 may mean a server that transmits the media data transmitted from the stream server 21005 according to embodiments to the DVB-I player in a multicast format. The multicast server 21007 receives the media data from the stream server 21005 according to embodiments. The multicast server 21007 transmits the received media data in a multicast format to the multicast gateway 21006. The media data according to embodiments may be media data of a DASH format. The multicast server 21007 according to embodiments may include the physical layer structure described in FIG. 1.

The multicast gateway 21006 receives the media data transmitted in a multicast format (Y1). The multicast gateway 21006 receives the media data and transmits repair information to the multicast server 21007 according to embodiments in a unicast format (Y2). The multicast gateway 21006 transmits the received media data to the DVB-I player in a unicast format (Z1). The media data according to embodiments may be media data of a DASH format. The multicast gateway 21006 according to embodiments may include the physical layer structure described in FIG. 1.

The broadcast signal reception apparatus according to embodiments may generate a query form for a request for a DVB-I service description (e.g., SDLT) through a broadband network. The broadcast signal reception apparatus (e.g., DVB-I player) may transmit the query form to a broadband server (e.g., service list server 21002) through a pre-provisioned URL and receive the aggregated service list according to embodiments including all DVB-I service lists.

FIG. 21 illustrates a process of receiving DVB-I service discovery and broadcast content. The broadcast signal reception apparatus according to embodiments may transmit the service list query at regular intervals (A1) and receive the service list (A2). The broadcast signal reception apparatus according to embodiments receives the content guide through SdltInetUrl or SvcInetUrl defined in an aggregated service list table (e.g., SDLT) or through the pre-provisioned URL. The received content guide is aggregated with a traditional broadcast channel and a service aggregated with a specific logical channel is provided. The content/service provider provides the content guide data so that a DVB-I terminal may access the content guide server. In addition, the content/service provider provides the service list fragments through a D interface at a predetermined interval so that the DVB-I player may receive the aggregated service list. The DVB-I player makes a request for the MPD through the MPD URL defined in the received aggregated service list table and receives a desired linear service.

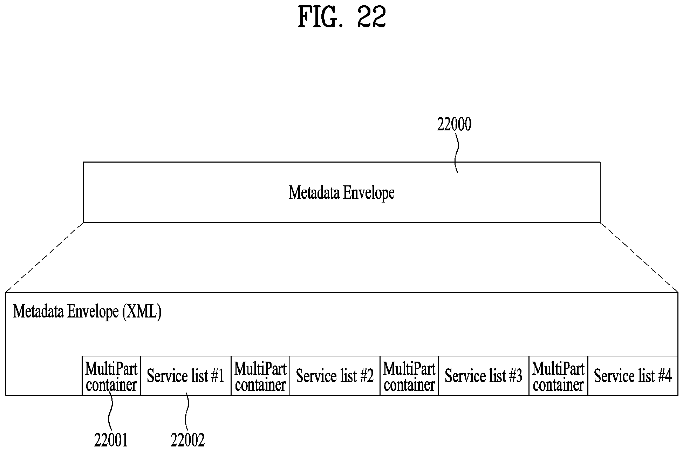

FIG. 22 illustrates a metadata envelope including service signaling information.

The broadcast signal reception apparatus according to embodiments may transmit a request for service signaling information to the broadband server in the form of HTTP using SdltInetUrl or SvcInetUrl. The request for the service signaling information according to embodiments may be in the form of the query form described in FIGS. 6 to 21.

The broadcast signal reception apparatus according to embodiments may receive an HTTP response from the broadband server as a response to the request for the service signaling information. In this case, the broadcast signal reception apparatus according to embodiments needs to check whether the received response meets the transmitted request. In addition, the broadcast signal reception apparatus according to embodiments needs to obtain the up-to-date information within a short time. Since an aggregated service list includes one or more service lists, the aggregated service list may be defined so as to check only the up-to-date information.

Therefore, FIG. 22 illustrates a DVB-I HTTP response signaling method used when an HTTP response to a DVB-I service signaling HTTP request is performed through a broadband network. FIG. 22 illustrates a metadata envelope 22000 that includes an aggregated service list including signaling information about one or more services and is received by the broadcast signal reception apparatus according to embodiments. That is, the broadcast signal reception apparatus according to embodiments may receive the metadata envelope in response to the query form for a service from the broadband server.

The HTTP response according to embodiments includes a DVB-I service signaling object. The HTTP response delivering the service signaling object according to embodiments may have a metadata envelope structure. The metadata envelope according to embodiments may be configured using the following scheme. For example, in FIG. 21, the broadcast signal reception apparatus according to embodiments may transmit an HTTP request to the service list server 21004 and then receive the aggregated service list in the form of the metadata envelope as illustrated in FIG. 22.

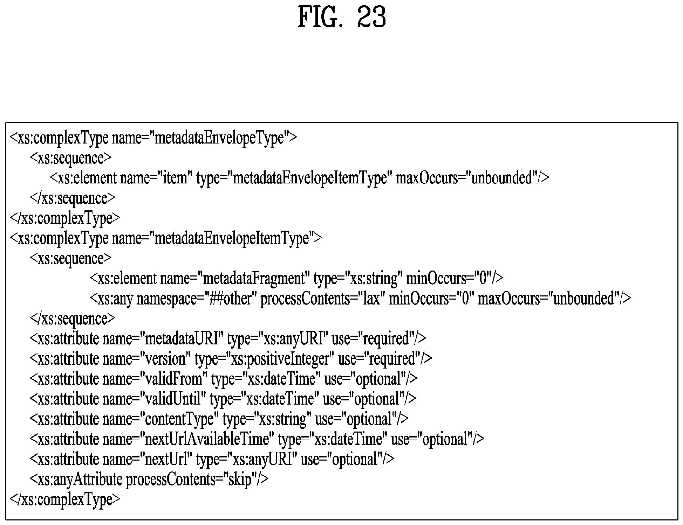

The metadata envelope 22000 is composed of a sequence of an item element and each item represents each signaling object according to embodiments. The item element is defined as metadataEnvelopeItemType, which will be described later in FIG. 23.

The HTTP response including the signaling object of the aggregated service list for the DVB-I service is transmitted in the metadata envelope structure and each service list may be transmitted in each multipart/related container of RFC 2387. The metadata envelope is located at the highest level of each service and refers to each fragmented service list. The metadata envelope according to embodiments may be configured as metadataEnvelopeType.

A service list 22002 includes information of services according to embodiments. The service list may be list information including one or more services or including information about the one or more services.

Due to this configuration, the broadcast signal reception method according to embodiments includes receiving the aggregated service list so that a version management and expiration management method for each service and selective parsing and storage for each service may be performed. Therefore, since it is not necessary to receive information including all service lists, the transmission/reception efficiency of the broadcast signal transmission/reception method may be improved.

FIG. 23 illustrates a metadata envelope according to embodiments in an XML format.

The metadata envelope according to embodiments is composed of a sequence of an item element and each item represents each signaling object according to embodiments. The item element may be defined as metadataEnvelopeItemType.

metadataURI indicates an address of an aggregated service list. Version and validfrom/validUntil indicates the valid time of a document. ContentType specifies an ID of a specific service currently included in an aggregated service list.

The string of ContentType has the following template type and information about ContentType has a unique value for each service.

ContentType may be defined in the form of

"Application/DITS- (OriginalNetworkID)-(TransportStreamID)-(serviceID) + xml"

After checking version information of a changed service in the aggregated service list through the information about ContentType, updated information may be obtained. Through the present disclosure, a specific service may be updated by detecting only a changed value of the specific service without receiving all service lists.

nextUrlAvailableTime represents an available start time for transmitting an HTTP request to a broadband server with nextUrl indicating signaling of a next version. This attribute value is proposed to reduce a request error of receivers that acquire signaling objects through a request/response process through a broadband network. The best time according to an implementation algorithm of the receiver is calculated in the time between this attribute value and a validUntil attribute value to reduce the probability of failing to receive a response due to concentration of a request by the receiver.

nextUrl represents a broadband URL address value that indicates a signaling object of the next version.

Due to this configuration, the broadcast signal reception method according to embodiments receives the aggregated service list so that version management and expiration management methods for each service and selective parsing and storage for each service may be performed. Therefore, since it is not necessary to receive information including all service lists, the transmission/reception efficiency of the broadcast signal transmission/reception method may be improved.

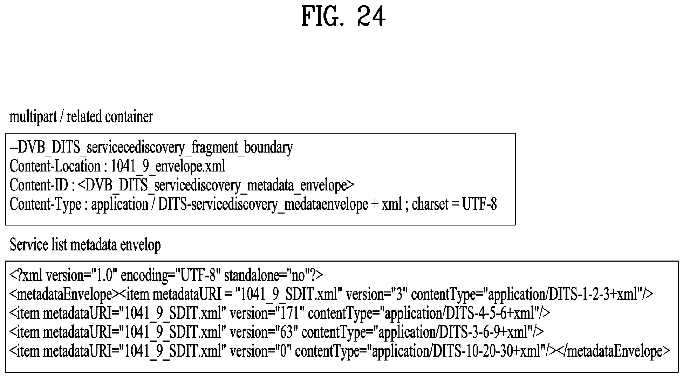

FIG. 24 illustrates a multipart container and a service list of a metadata envelope according to embodiments in an XML format.

FIG. 24 illustrates a service list metadata envelope when a service list fragmented for each service is transmitted in a multipart/related container. A content type of each service is encoded to (OriginalNetworkID)-(TransportStream-ID)-(serviceID), which is unique information in DITS, and then transmitted. Versioning and expiration management including corresponding information and version information may be performed. If necessary, only the corresponding information may be received by checking a corresponding multipart/related container content ID/content-type value.

Due to this configuration, the broadcast signal reception method according to embodiments receives the aggregated service list so that a version management and expiration management method for each service and selective parsing and storage for each service may be performed. Therefore, since it is not necessary to receive information including all service lists, the transmission/reception efficiency of the broadcast signal transmission/reception method may be improved.

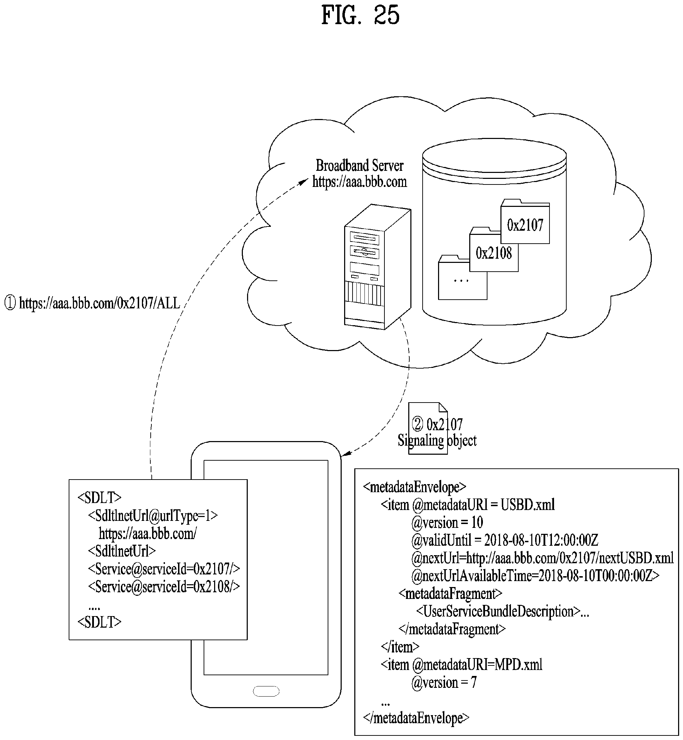

FIG. 25 illustrates reception of service signaling information by a broadcast signal reception apparatus according to embodiments in the form of a metadata envelope.

The broadcast signal reception apparatus according to embodiments may transmit a request for a signaling object to a broadband server based on SdltInetUrl information and urlType information included in a received SDLT. For example, the broadcast signal reception apparatus may transmit a request for the signaling objects to the broadband server by generating a query form (e.g., http://aaa.bbb.com/0x2107/ALL) using http://aaa.bbb.com/address included in SdltInetUrl and @serviceId.

The broadcast signal reception apparatus according to embodiments may receive the signaling object corresponding to the query form from the broadband server. The signaling object according to embodiments may be received in the form of the metadata envelope. The metadata envelope may be in the form of an XML file illustrated in FIGS. 22 to 24.

Due to this configuration, the broadcast signal reception method according to embodiments receives the aggregated service list so that a version management and expiration management method for each service and selective parsing and storage for each service may be performed. Therefore, since it is not necessary to receive information including all service lists, the transmission/reception efficiency of the broadcast signal transmission/reception method may be improved.

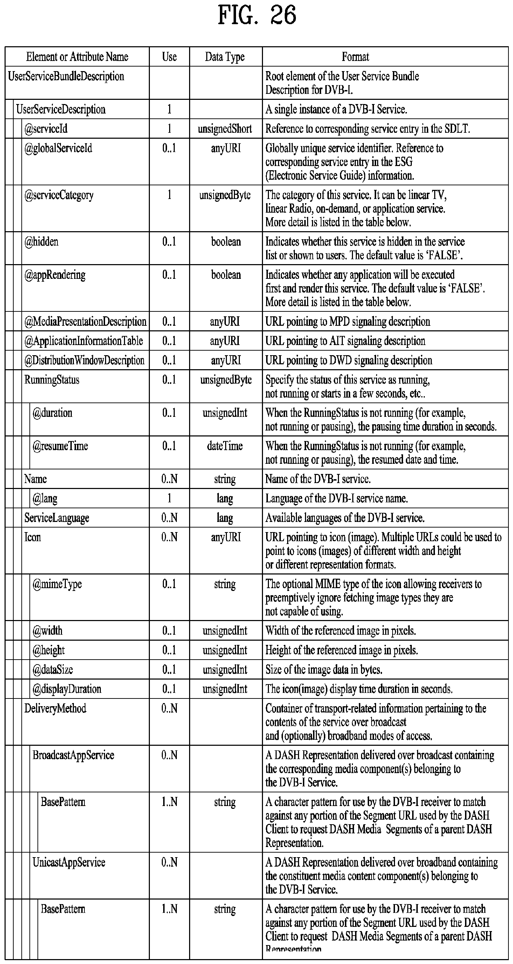

FIG. 26 illustrates a user service bundle description (USBD).

The USBD according to embodiments describes comprehensive information of a DVB-I service according to embodiments as a service signaling object.

The USBD according to embodiments includes one or more USDs. The USD according to embodiments includes comprehensive information about a user service and information about when and how to provide this service to a user. The USBD and/or the USD according to embodiments are data constituting a service signaling scheme that is a start point for connecting different signaling metadata required to provide each service to a user. The USBD/USD according to embodiments may be configured with a syntax illustrated in FIG. 26.

**UserServiceBundleDescription** represents a root element of the USBD for a DVB-I service.

**UserServiceDescription** represents a single instance of the DVB-I service.

**@serviceId** (service ID information) represents an ID as a reference to a corresponding service entry in the SDLT according to embodiments. @serviceId is an unsigned short type service and has the same value as a value described in an SDLT signaling table for discovering the Internet-based service.

**@globalServiceId** (global service ID information) is information of anyURI type indicating an ID of a globally unique service. This information may have a value equal to the global service ID value as a reference to a corresponding service entry in an ESG and may be used as information mapped with a specific type of service.

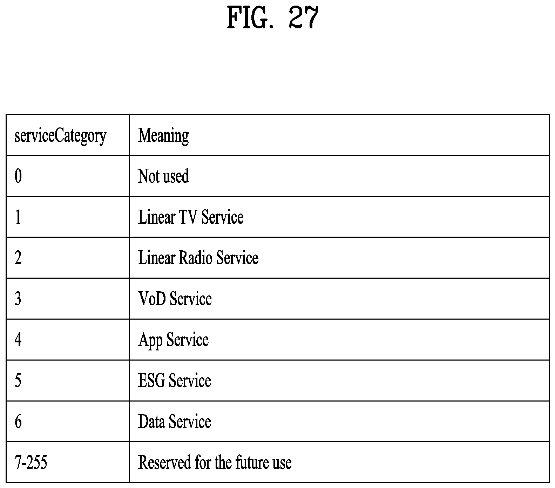

**@serviceCategory** (service category information) means the category of this service as an unsignedByte type. This information may indicate a linear TV, linear radio, on-demand, or application service. An example of values of the service category information according to embodiments is illustrated in FIG. 27.

**@hidden** (hidden information) is an attribute value of a Boolean type and indicates whether this service is hidden in a service list or shown to the user. A default value is 'FALSE'.

**@appRendering** (application rendering information) is an attribute value of a Boolean type and indicates whether a corresponding service is provided through a module embedded in the reception apparatus or through a specific application when showing the service to the user. For example, when this value is TRUE, the broadcast signal reception apparatus waits for the application to be driven and may provide this information to the user. If the corresponding value does not appear, this means FALSE indicating that the application is not rendered. Therefore, the reception apparatus may immediately perform a function of rendering the service. The default value is 'FALSE'.

**@MediaPresentationDescription** (media presentation description information) is an attribute value of anyURI type and represents a URL to download an MPD file through broadband. This parameter may or may not be included in a USBD or may be included in other signaling objects.

**@ApplicationInformationTable** (application information table information) is an attribute value of anyURI type and represents a URL to download an AIT file through broadband. This parameter may or may not be included in the USBD, or may be included in other signaling objects.

**@DistributionWindowDescription** (distributed window description information) is an attribute value of anyURI type and represents a URL to download a DWD file through broadband. This parameter may or may not be included in the USBD or may be included in other signaling objects.

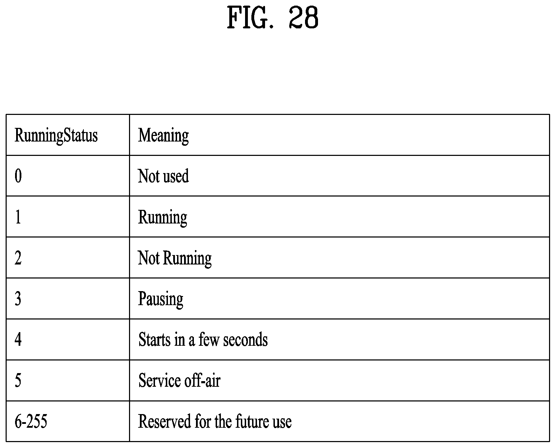

**RunningStatus** (running status information) represents whether the status of this service is running, not running, or starts in a few seconds, as an unsignedByte type. An example of the value of the running status information will be described later in FIG. 28. The running status information may include @duration and @resumeTime.

**Name** (name element) represents the name of the DVB-I service as a string type.

**@lang** represents the language of the DVB-I service name as an attribute value of a lang type. The **@lang** element according to embodiments may be included in the Name element according to embodiments or may be an element of the same level as the Name element.

**ServiceLanguage** (service language element) represents available languages of the DVB-I service.

**Icon** (icon element) may be a URL of a broadband server indicating each file related to a broadcast service according to embodiments. This element may or may not be present in the USBD and may have one or more values. This element may be anyURI element of a URI type. According to embodiments, files indicated by this parameter may be still images or icons that may appear on the screen before the service is provided. According to embodiments, the Icon element may include elements (or attribute values) described below to provide information as to whether a corresponding file may be rendered in the broadcast signal reception apparatus. Multiple URLs may be used to point to icons (images) of different widths and heights or different representation formats.

**@mimeType** - This attribute value of a string type indicates a MIME type of the icon element of the reception apparatus according to embodiments. The MIME type of the icon allows the reception apparatus to preemptively ignore fetching image types that the reception apparatus is not capable of using.

**@width** - This attribute value of an unsignedInt type indicates the width of a reference image in pixels.

**@height** - This attribute value of an unsignedInt type indicates the height of the referenced image in pixels.

**@dataSize** - This attribute value of an unsignedInt type indicates the size of image data in bytes.

**@displayDuration** - This attribute value of an unsignedInt type indicates an icon or image display time duration in seconds.

**DeliveryMethod** (delivery method element) is signaling information related to a data transmission method constituting the corresponding broadcast service. The delivery method element may or may not be included in the USBD according to @serviceCategory. The delivery method element may indicate information as to whether data is transmitted over a broadcast network or a broadband network through a sub-element (or attribute).

**BroadcastAppService** (broadcast application service element) may provide the corresponding service by receiving a DASH representation over a broadcast network when the broadcast service according to embodiments is a linear A/V service or a linear audio service. In this case, a USBD may include one or more BroadcastAppService elements.

**BroadcastAppService-BasePattern** (base pattern element) is information used to indicate BaseURL of the DASH representation delivered over the broadcast network. BasePattern may consist of one or more values and may be equal to the BaseURL value described in the MPD.

**UnicastAppService** (unicast application service element) may configure the corresponding service by transmitting the DASH representation over the broadband network when the broadcast service according to embodiments is a linear A/V service or a linear audio service. UnicastAppService may be represented by one or more element values.

**UnicastAppService-BasePattern** (base pattern element) is information used to indicate a base URL of the DASH representation delivered over the broadband network. BasePattern may consist of one or more values and may be equal to the BaseURL value described in the MPD.

The parameters illustrated in FIG. 26 according to embodiments may be present at the highest level in the SDLT according to embodiments or may be present at the same level as or a lower level than the USD in the USBD. The inclusion relationship of the parameters illustrated in FIG. 26 is exemplary.

The broadcast signal reception apparatus according to embodiments receives the provided USBD or USD. The USBD or USD according to embodiments may be parsed by the parser or USBD parser included in the broadcast signal reception apparatus or the application so that sub-elements included in the USBD or USD may be extracted.

FIG. 27 illustrates service category information (serviceCategory) of a USBD.

The service category information (serviceCategory) according to embodiments illustrated in FIG. 27 may specify the service category information included in the USBD of FIG. 26. The configuration of the USBD according to embodiments may be different depending on examples of the @serviceCategory value defined in FIG. 27,

The service category information indicates a category of the broadcast service according to embodiments. The category of the broadcast service may include a linear TV service, a linear radio service, a VoD service, an application service, an ESG service, and/or a data service.

The service category information may have a value of 0 when a corresponding service is not used as the broadcast service, when the service is not the broadcast service, or when the service is not used. The service category information may have a value of 1 for the linear TV service, a value of 2 for the linear radio service, a value of 3 for the VoD service, a value of 4 for the application service, and a value of 5 for the ESG service, and a value of 6 for the data service. The service category information may reserve values corresponding to 7 to 255 for future use.

According to embodiments, when the broadcast service is the linear TV service (@serviceCategory==1) or the linear radio service (@serviceCategory==2), the USBD/USD may include an MPD URL (@MediaPresentationDescription). The MPD URL means a URL that may obtain an MPD file by directly accessing a broadband server by the broadcast signal reception apparatus. According to embodiments, since the corresponding broadcast service may include an application, the USBD/USD may also include an AIT URL (@ApplicationInformationTable).

According to embodiments, when the broadcast service is the VoD service (@serviceCategory==3), the USBD/USD may not include the MPD URL (@MediaPresentationDescription). When the broadcast signal reception apparatus first renders the application according to embodiments in order to display a VoD list, an @appRendering attribute value may be set to TRUE and the AIT URL may be included in the USBD/USD.

According to embodiments, when the broadcast service is the application service (@serviceCategory==4), the USBD/USD may include the AIT URL regardless of the @appRendering value. In this case, the USBD/USD may include an MPD URL.

According to embodiments, when the broadcast service is the ESG service (@serviceCategory==5) (i.e., the broadcast service is a special service for transmitting ESG data), the USBD/USD may not include the AIT URL (@ApplicationInformationTable) and/or the MPD URL (@MediaPresentationDescription).

According to embodiments, when the broadcast service is the data service (@serviceCategory==6) (i.e., in the case of a service for transmitting data), the USBD/USD may not include the AIT URL and the MPD URL.

FIG. 28 illustrates running status information (RunningStatus) of the USBD.

The running status information (RunningStatus) according to embodiments illustrated in FIG. 28 may mean running status information included in the USBD of FIG. 26.

**RunningStatus** is information of an unsignedByte type indicating the running status of a current service.

RunningStatus may include @duration and @resumeTime. If the current broadcast service according to embodiments is not running (i.e., RunningStatus is not running), RunningStatus may have a sub-attribute value of @duration or @resumeTime. In this case, RunningStatus may have values of 2, 3, 4, and 5. If the values of 2, 3, 4, and 5 do not appear, the running status information may indicate an infinite value as a default value.

When the value of RunningStatus is 0, this indicates that the corresponding parameter is not used. When the value of RunningStatus is 1, this indicates that the broadcast service according to embodiments is running. When the value of RunningStatus is 2, this indicates that the broadcast service according to embodiments is not running. When the value of RunningStatus is 3, this indicates that the broadcast service according to embodiments is not running and is paused. When the value of RunningStatus is 4, this indicates that the broadcast service will start in a few seconds. When the value of RunningStatus is 5, this indicates that the broadcast service is in an off-air state (service off-air). If the value of RunningStatus is 6 to 255, this indicates that the values are reserved for future use.

@duration is an attribute value with an integer value of an unsignedInt type and may indicate the duration in seconds when the current broadcast service is not running (i.e., when RunningStatus has a value other than 1, i.e., is not running).

@resumeTime is an attribute value of a dateTime type and indicates the date and/or time when the service is resumed in the case in which the current broadcast service is not running (i.e., case in which RunningStatus has a value other than 1, that is, is not running).

The running status information according to embodiments may be referred to as Availability information according to embodiments.

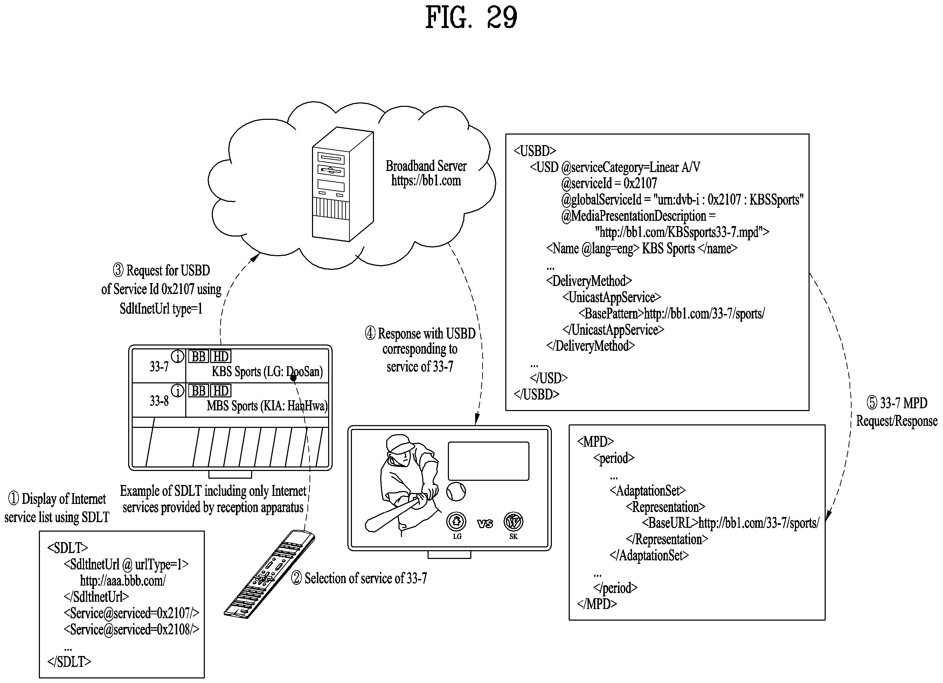

FIG. 29 illustrates a process of obtaining a USBD and an MPD according to embodiments.

FIG. 29 illustrates a method of receiving service signaling of an Internet-based service and providing a broadcast service based on service signaling according to embodiments. The broadcast signal reception apparatus according to embodiments may provide a service to a user by acquiring signaling of a corresponding service from service signaling data obtained through service discovery.

The embodiment illustrated in FIG. 29 illustrates a process of acquiring the MPD through the USBD when the broadcast service according to the embodiment is a linear A/V service as the case of the Internet-based service. The USBD according to embodiments indicates an example into which a URL indicating the MPD is inserted. The URL of USBD/USD/DeliveryMethod/BasePattern may be equal to the value of BaseURL signaled in the MPD.

The broadcast signal reception apparatus according to embodiments may display a list of Internet services using the SDLT according to embodiments. The SDLT according to embodiments may include only Internet-based broadcast services provided by the broadcast signal reception apparatus. For example, the SDLT may include a parameter of <SdltInetUrl @urlType=1>http://bb1.com/</SdltInetUrl> for requesting the USBD of the broadcast service.

When a user selects one of one or more services included in the SDLT, the broadcast signal reception apparatus according to embodiments may generate a query form for requesting a signaling object (e.g., USBD) for the selected broadcast service. For example, when the user selects a service of channel 33-7, the query form for requesting a signaling object related to the service of channel 33-7 may be generated.

The broadcast signal reception apparatus according to embodiments may generate the query form for transmitting the request for the broadcast service selected by the user to a broadband server according to embodiments and transmit the query form to the broadband server. In this case, the broadcast service selected by the user may be transmitted with the value of a service ID (@serviceId). For example, the broadcast signal reception apparatus according to embodiments may transmit a request for a USBD having a service ID of 0x2107 to the broadband server indicated by SdltInetURL.

The broadcast signal reception apparatus according to embodiments may receive a signaling object of the broadcast service requested by the user. For example, the broadcast signal reception apparatus may receive the USBD corresponding to the service of channel 33-7 according to the above-described operation. The USBD received according to embodiments may include the parameters described in FIGS. 26 to 28.

For example, the USBD may include the service category information (@serviceCategory=Linear A/V), service ID (@serviceId=0x2107), global service ID information (@globalServiceId="urn: dvb-i: 0x2107: KBSSports"), media presentation description information (i.e., MPD information, @MediaPresentationDescription="http://bb1.com/KBSsports33-7.mpd">), name information, and/or delivery method information.

The broadcast signal reception apparatus according to embodiments may extract the MPD information included in the USBD to obtain the MPD information for the broadcast service according to embodiments. For example, the broadcast signal reception apparatus according to embodiments may transmit a request for the MPD information to the broadband server indicated by a corresponding URL using URL information indicated as @MediaPresentationDescription="http://bbl.com/KBSsports33-7.mpd" (i.e., request for the MPD information of the broadcast service of channel 33-7). The broadband server according to embodiments may transmit (as a response) the MPD to the broadcast signal reception apparatus according to embodiments in response to the request for the MPD.

The broadcast signal reception apparatus according to embodiments may display the corresponding broadcast service using the received MPD information and using content of the received broadcast service.

The broadcast signal reception apparatus according to embodiments receives the provided USBD or USD. The USBD or USD according to embodiments may be parsed by the parser or USBD parser included in the broadcast signal reception apparatus or the application so that sub-elements included in the USBD or USD may be extracted.

The broadcast signal reception apparatus according to embodiments receives the provided MPD. The MPD according to embodiments may be parsed by the parser or MPD parser included in the broadcast signal reception apparatus or the application so that sub-elements included in the MPD may be extracted.

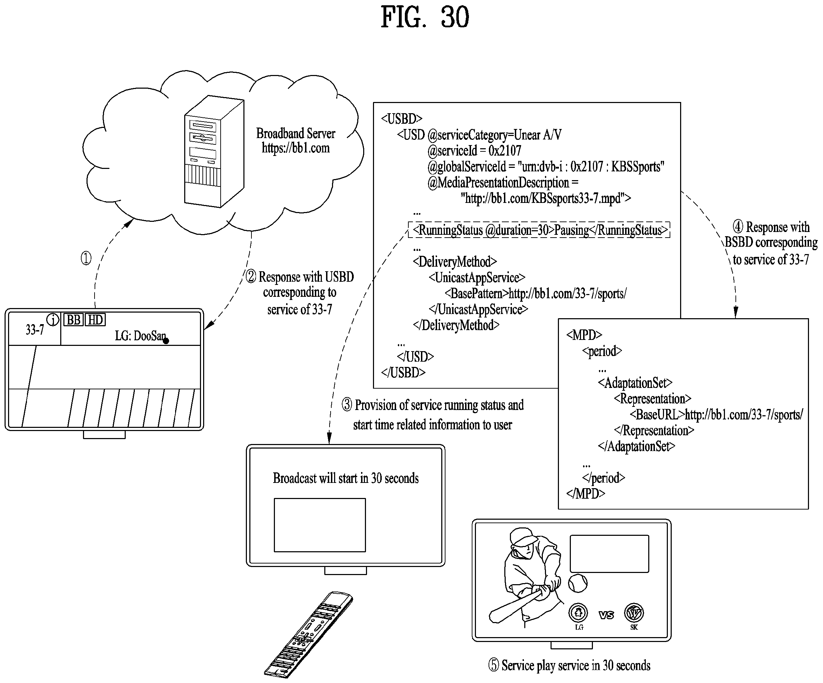

FIG. 30 illustrates an operation of representing start of a broadcast service using running status information according to embodiments.

The running status information (RunningStatus) according to embodiments illustrated in FIG. 30 may mean the running status information included in the USBD of FIG. 26 and/or FIG. 28.

**RunningStatus** (running status information) has an unsignedByte type and indicates the running status of the current service.

The broadcast signal reception apparatus according to embodiments may receive the USBD according to embodiments from the broadband server according to the operation illustrated in FIG. 29. The USBD according to embodiments may include the service category information (@serviceCategory=Linear A/V), service ID (@serviceId=0x2107), global service ID information (@globalServiceId="urn: dvb-i: 0x2107: KBSSports"), MPD information (i.e., @MediaPresentationDescription="http://bb1.com/KBSsports33-7.mpd">), name information, and/or delivery method information. The USBD according to embodiments may include the running status information (RunningStatus) for the corresponding broadcast service.

The broadcast signal reception apparatus according to embodiments may display the running status of the service for the user based on the running status information. That is, the broadcast signal reception apparatus according to embodiments may display components indicating when the corresponding broadcast service is started/initiated and/or whether the corresponding broadcast service is not currently running, based on the running status information.

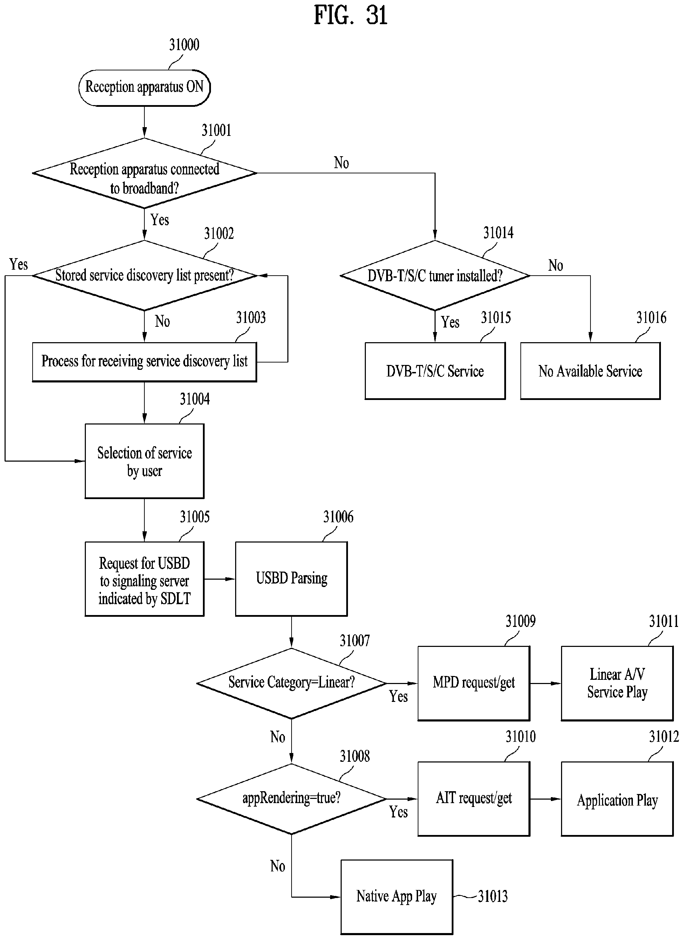

FIG. 31 illustrates a method of providing a broadcast service of a broadcast signal reception method according to embodiments.

The broadcast signal reception method according to embodiments may provide a broadcast service according to embodiments. The broadcast signal reception method may include turning on the broadcast signal reception apparatus (31000), determining whether the broadcast signal reception apparatus is connected to a broadband network (31001), determining whether a service discovery list according to embodiments is present when the broadcast signal reception apparatus is connected to the broadband network (31002), receiving the service discovery list according to embodiments when the service discovery list is not present (31003), selecting the broadcast service according to embodiments (31004), making a request for a USBD to a signaling server included in the SDLT according to embodiments (31005), parsing the USBD according to embodiments (31006), checking service category information in the USBD (31007), obtaining an MPD when service category information indicates a linear service (31009), playing the linear service according to embodiments (31011), checking appRendering information when the service category information does not indicate the linear service (31008), making a request for an AIT when appRendering indicates True (31010), executing an application (31012), and executing a native application when appRendering indicates False. The broadcast signal reception method according to embodiments may include determining whether a DVB-T/S/C tuner is installed when the broadcast signal reception apparatus according to embodiments is not connected to the broadband network (31014) and providing a DVB-T/S/C service when the DVB-T/S/C tuner is installed (31015).

The operations of determining whether a DVB-T/S/C tuner is installed when the broadcast signal reception apparatus according to embodiments is not connected to the broadband network (31014) and providing a DVB-T/S/C service when the DVB-T/S/C tuner is installed (31015) may be performed according to steps 7070 to 7012 of FIG. 7.

The operation of turning on the broadcast signal reception apparatus (31000) includes activating the broadcast signal reception apparatus according to embodiments. This operation may be performed according to the operation of turning on the reception apparatus of FIG. 7 (7000).

The operation of determining whether the broadcast signal reception apparatus is connected to a broadband network (31001) may determine whether the broadcast signal reception apparatus according to embodiments is connected to the broadband (or Internet) network. This operation may be performed according to step 7001 of FIG. 7.

The operation of determining whether a service discovery list according to embodiments is present when the broadcast signal reception apparatus is connected to the broadband network (31002) may determine whether the service discovery list included in the broadcast signal reception apparatus according to embodiments is present.

The operation of receiving the service discovery list according to embodiments when the service discovery list is not present (31003) may receive, by the broadcast signal reception apparatus according to embodiments, the service discovery list (e.g., SDLT) according to embodiments over the broadcast network. This step 31003 may perform operations corresponding to steps 7001, 7002, 7003, 7004, and 7005 of FIG. 7.

The operation of selecting the broadcast service according to embodiments (31004) selects the broadcast service according to embodiments by the user. The broadcast service according to embodiments may mean a broadcast service included in the service discovery list (e.g., SDLT) according to embodiments.

The operation of making a request for a USBD to a signaling server included in the SDLT according to embodiments (31005) indicates making a request to the broadband network for service signaling information (e.g., USBD) required to provide the selected broadcast service according to embodiments. That is, the broadcast signal reception apparatus according to embodiments may generate the query form for making a request for service signaling (e.g., USBD) related to the selected broadcast service. This step 31005 may be a step of performing the operations of FIGS. 20 and 25 to 31.

The operation of parsing the USBD according to embodiments (31006) is performed such that the broadcast signal reception apparatus receives and parses the service signaling information (e.g., USBD) requested in step 31005. The broadcast signal reception apparatus according to embodiments may parse the USBD to extract signaling information included in FIG. 26. The broadcast signal reception apparatus according to embodiments may parse the USBD to perform the operations according to FIGS. 27 to 30.

The broadcast signal reception apparatus according to embodiments receives the provided USBD or USD. The USBD or USD according to embodiments may be parsed by the parser or USBD parser included in the broadcast signal reception apparatus or the application so that sub-elements included in the USBD or USD may be extracted.

The operation of checking service category information in the USBD (31007) checks the category of the corresponding broadcast service based on the service category information included in the parsed USBD according to step 31006. For example, the broadcast signal reception apparatus according to embodiments may determine whether the service category information (e.g., @serviceCategory) included in the USBD indicates a linear TV service. If the broadcast service is the linear TV service (e.g., @serviceCateory==1), step 31009 may be performed. If the broadcast service is not the linear TV service (e.g., @serviceCategory!=1), step 31008 may be performed.

The operation of obtaining an MPD when service category information indicates a linear service (31009) may be performed such that the broadcast signal reception apparatus requests and receives DASH MPD information for the broadcast service over the broadband server. Step 31009 may perform the operation described in FIG. 29. The broadcast signal reception apparatus according to embodiments receives the provided MPD. The MPD according to embodiments may be parsed by the parser or MPD parser included in the broadcast signal reception apparatus or an application so that sub-elements included in the MPD may be extracted.

The operation of playing the linear service according to embodiments (S31011) means playing a linear A/V broadcast service by aggregating the broadcast service received by the broadcast signal reception apparatus according to embodiments with the received MPD.

The operation of checking appRendering information when the service category information does not indicate the linear service (31008) may be performed by the broadcast signal reception apparatus according to embodiments by parsing the application rendering information (e.g., @appRendering) from the USBD. appRendering (application rendering information) is an attribute value of a Boolean type and indicates whether a service shown to the user is provided through a module embedded in the reception apparatus or through a specific application. That is, when the application rendering information indicates True, the broadcast signal reception apparatus according to embodiments may receive an AIT and execute an application. Otherwise, the broadcast signal reception apparatus may execute a native application.

The operation of making a request for an AIT when appRendering indicates True (31010) means that the broadcast signal reception apparatus according to embodiments makes a request to the broadband server for the AIT and receives the AIT. The operation of executing an application (31012) indicates executing the corresponding application based on the received AIT. The operation of executing a native application when appRendering information indicates False (31013) may execute the native application included in the broadcast signal reception apparatus. The broadcast signal reception apparatus according to embodiments receives the provided AIT. The AIT according to embodiments may be parsed by the parser or AIT parser included in the broadcast signal reception apparatus or the application so that sub-elements included in the AIT may be extracted.

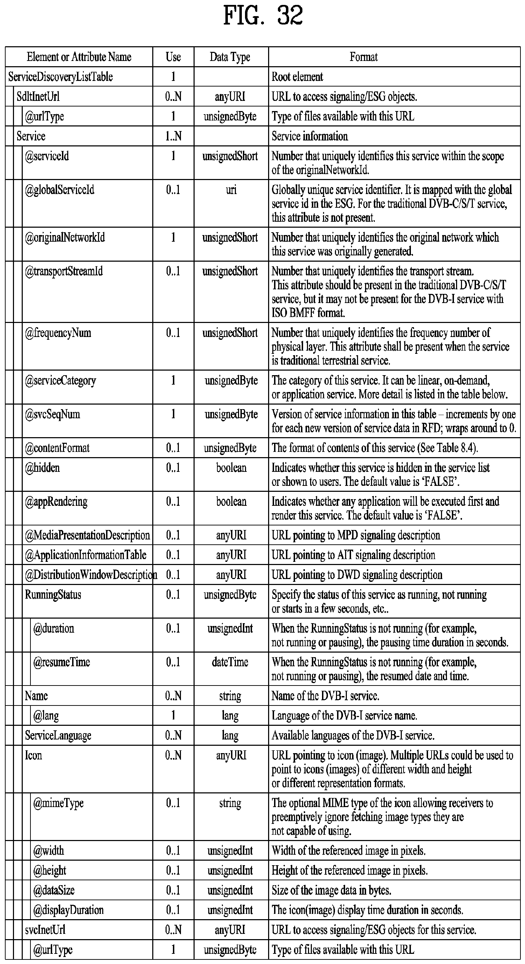

FIG. 32 illustrates another example of an SDLT according to embodiments for fast discovery.

According to embodiments, an SDLT may be configured as illustrated in FIG. 32 in order to provide a service selected by a user more quickly among services that may be provided to the user through a service discovery procedure. That is, the SDLT according to embodiments may further include some or all of signaling included in a USBD and the USBD according to embodiments may omit all or part of signaling information in the USBD included in FIGS. 26 to 28.

The broadcast signal reception apparatus according to embodiments may receive the SDLT over a broadband network. The SDLT according to embodiments may be received according to the operations described in FIGS. 7 to 10. The SDLT according to embodiments may include the signaling parameters included in FIGS. 11 to 17. The SDLT according to embodiments may also include all or part of the signaling information included in the USBD of FIGS. 26 to 28.

For example, the SDLT according to embodiments may include SdltInetUrl, @urlType, Service, @serviceId, @globalServiceId, @originNetworkId, @trnasportStreamId, @frequencyNum, @serviceCategory, @svcSeqNum, @contentFormat, @hidden, @appRendering, @MediaPresentationDescription, @ApplicationInformationTable, @DistributionWindowDescription, RunningStatus, @duration, @resumeTime, Name, @lang, ServiceLanguage, @mimeType, @width, @height, @dataSize, @displayDuration, svcInetUrl, and/or @urlType, described in the above figures.

The parameters illustrated in FIG. 32 according to embodiments may be present at the highest level in the SDLT according to embodiments or may be present at the same level as or a lower level than the Service (or service instance) in the SDLT. The inclusion relationship of the parameters illustrated in FIG. 32 is exemplary.

The broadcast signal reception apparatus according to embodiments receives the SDLT including the elements according to embodiments illustrated in FIG. 32. The SDLT according to embodiments may be parsed by the parser included in the broadcast signal reception apparatus so that sub-elements included in the SDLT may be extracted.

The SDLT may be the most important information to have in the reception apparatus for service discovery. Through this signaling data, the reception apparatus may provide service list information so that the user may select a service. In this case, the SDLT may be configured to include a large amount of information. Such configuration information has an effect of providing a large number of services and enabling faster service play when the user selects a service. The table illustrated shows a composition syntax of the SDLT.

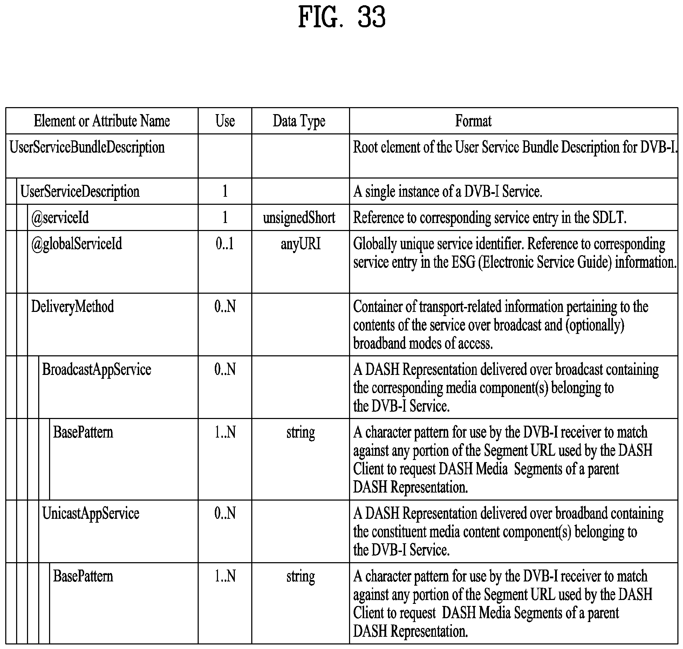

When the SDLT is configured as illustrated in FIG. 33, among signaling metadata of Internet-based services, a USBD includes a DeliveryMethod element value that provides information mapped to an MPD, @serviceId and @globalServiceId information may be used as information for mapping to the SDLT and information for mapping to an ESG.

FIG. 33 illustrates another example of a USBD according to embodiments for fast discovery.

The broadcast signal reception apparatus according to embodiments may receive the USBD according to embodiments. The operation of receiving the USBD according to embodiments is as illustrated in FIGS. 25 to 31.

According to embodiments, the USBD may include some or all of the parameters included in FIGS. 26 to 28. Accordingly, the USBD according to embodiments may include one or more USDs and UserServiceDescription according to embodiments may include @serviceId, @globalServiceId, DeliveryMethod, BroadcastAppService, BasePattern, UnicastAppservice, and/or BasePattern.

The SDLT may be the most important information to have in the reception apparatus for service discovery. Through this signaling data, the reception apparatus may provide service list information so that the user may select a service. In this case, the SDLT may be configured to include a large amount of information. Such configuration information has an effect of providing a large number of services and enabling faster service play when the user selects a service. The table illustrated shows a composition syntax of the SDLT.

When the SDLT is configured as illustrated in FIG. 33, among signaling metadata of Internet-based services, a USBD includes a DeliveryMethod element value that provides information mapped to an MPD, @serviceId and @globalServiceId information may be used as information for mapping to the SDLT and information for mapping to an ESG.

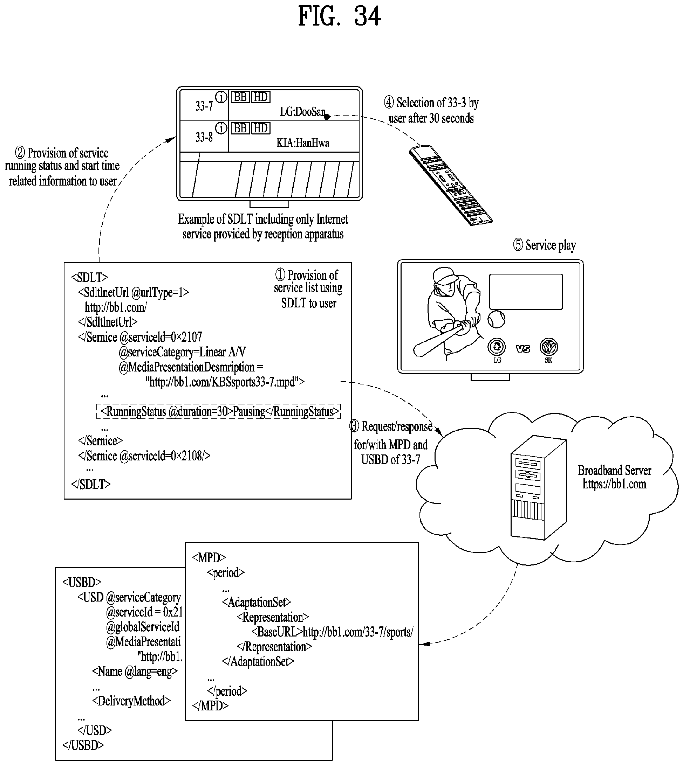

FIG. 34 illustrates an operation of a broadcast signal reception apparatus for fast discovery.

Referring to FIG. 34, the broadcast signal reception apparatus according to embodiments receives the SDLT for fast discovery according to FIGS. 32 and 33 to quickly check the running status of a broadcast service.

The broadcast signal reception apparatus according to embodiments may receive the SDLT and provide a broadcast service list including broadcast services to the user using the SDLT. The SDLT according to embodiments includes information about the broadcast services. The SDLT according to embodiments includes information about the running status of the broadcast services (e.g., running status information according to embodiments).

The broadcast signal reception apparatus according to embodiments may check the running status of a corresponding broadcast service based on the running status information included in the SDLT. The broadcast signal reception apparatus according to embodiments may quickly provide the running status of the broadcast service to the user by including the running status information according to embodiments in the SDLT rather than in a USBD, The running status information according to embodiments may be the RunningStatus information included in FIG. 26 and the running status information according to embodiments may have a value as described in FIG. 28.

The broadcast signal reception apparatus according to embodiments may request and receive MPD and/or USBD information for a corresponding broadcast service using the SDLT. The broadcast signal reception apparatus according to embodiments may receive the MPD and/or USBD information from a broadband server. The operation of requesting and receiving the MPD and/or USBD information for the broadcast service using the SDLT may be performed by the operation of FIG. 29.

The broadcast signal reception apparatus according to embodiments may display the running status of the broadcast service. Broadcast services according to embodiments may be selected by the user.

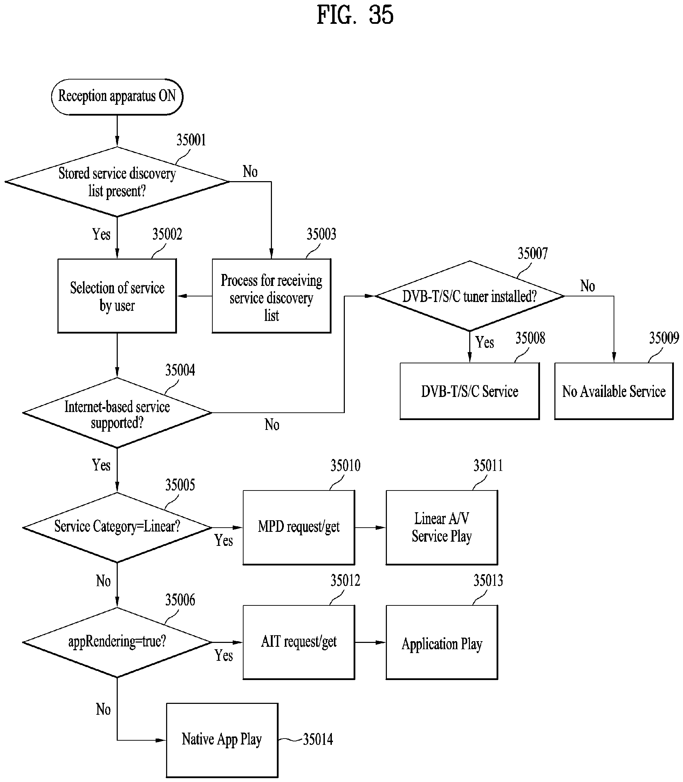

FIG. 35 is a flowchart of the operation of the broadcast signal reception apparatus for fast discovery.

FIG. 35 is a flowchart illustrating the operation of the broadcast signal reception apparatus for fast discovery described with reference to FIGS. 32 to 34. The broadcast signal reception apparatus according to embodiments may first turns on the broadcast signal reception apparatus. The operation of the broadcast signal reception apparatus according to embodiments may include determining whether a stored service discovery list is present (35001), receiving the service discovery list according to embodiments (e.g., SDLT) when the service discovery list is not present (35003), and selecting the service according to embodiments by the user when the service discovery list according to embodiments is present or when the service discovery list is received (35002).

The broadcast signal reception method according to embodiments may include determining whether an Internet-based service is supported (35004), checking service category information included in the SDLT when the Internet-based service is supported (35005), and checking appRendering information (35006). When the service category information indicates a linear service, the method may include receiving the MPD according to embodiments over a broadband network (35010) and receiving an AIT over the broadband network when appRendering indicates True (35012). The broadcast signal reception apparatus according to embodiments receives the provided MPD. The MPD according to embodiments may be parsed by the parser or MPD parser included in the broadcast signal reception apparatus or the application so that sub-elements included in the MPD may be extracted. The broadcast signal reception apparatus according to embodiments receives the provided AIT. The AIT according to embodiments may be parsed by the parser or AIT parser included in the broadcast signal reception apparatus or the application so that sub-elements included in the AIT may be extracted.

When the broadcast signal reception apparatus according to embodiments does not provide the Internet-based service, whether a DVB-T/C/S tuner is installed is determined (35007). The broadcast signal reception method of FIG. 35 may perform the operations illustrated in FIGS. 7, 31, and 35.

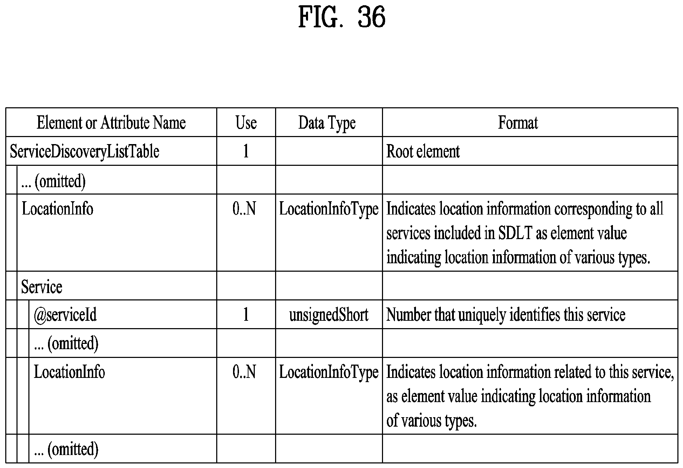

FIG. 36 illustrates another example of an SDLT according to embodiments.

According to embodiments, the service discovery signaling may include location information for providing a broadcast service in order for the broadcast signal reception apparatus to filter a service or a service list according to the location thereof.

According to embodiments, the SDLT further signals the location information as proposed in the table. The location information according to embodiments may be indicated by various methods as follows.

LocationInfo information according to embodiments may be signaled to the broadcast signal reception apparatus through the SDLT. The LocationInfo information according to embodiments may be located at a lower level than the SDLT or may be located at a lower level than Service information in the SDLT.

When the LocationInfo information according to embodiments is located at the lower level than the SDLT, location information of all services signaled by the SDLT is provided. When the LocationInfo information according to embodiments is located at the lower level than the Service, location information provided by the Service is provided. If the LocationInfo information in the SDLT and the service provide different information, the LocationInfo provided in the Service may be prioritized.

The SDLT according to embodiments may include zero or more pieces of location information (LocationInfo). The location information is an element value capable of representing location information of various types and indicates location information corresponding to all services included in the SDLT.

In some embodiments, the SDLT may include one or more pieces of Service information. The Service information may include @serviceId as illustrated in the above-mentioned drawing. The above-described location information may be included in the Service information according to embodiments. The Service information according to embodiments may be referred to as service instance information.

Parameters illustrated in FIG. 36 according to embodiments may be present at the highest level in the SDLT according to embodiments or may be at the same level as or lower level than the Service (or service instance) in the SDLT. The inclusion relationship of the parameters illustrated in FIG. 36 is exemplary.

The LocationInfo information and sub-elements according to embodiments may be parsed by the parser according to embodiments.

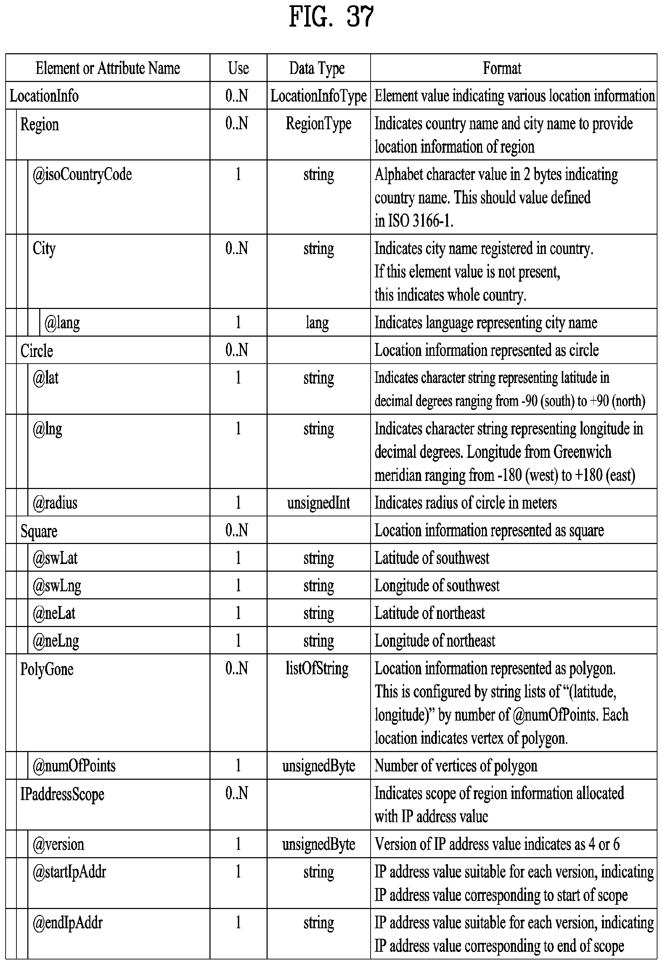

The location information according to embodiments may include various parameters as sub-elements. This will be described in FIG. 37.

FIG. 37 illustrates location information of an SDLT according to embodiments.

Specifically, FIG. 37 illustrates an example of elements included in the location information described with reference to FIG. 36 and hierarchy of the elements. The elements included in the location information according to embodiments indicate an area of a region in which a corresponding broadcast service is supported.

The location information included in the SDLT according to embodiments may signal information of a region to which the broadcast service is provided to the broadcast signal reception apparatus using a registered country code and city name. When such signaling is used, since region information that the user may recognize is provided in text, the reception apparatus may provide the broadcast service to the user by parsing the signaling information even if the broadcast signal reception apparatus is unaware of the location information.

The location information included in the SDLT according to embodiments may signal the information about the region to which the service is provided in the form of a circle. Using this signaling, the SDLT according to embodiments may include comprehensive region information by providing simple three pieces of information.

The location information included in the SDLT according to embodiments may signal a square region based on four pieces of location information to the broadcast signal reception apparatus by providing latitudes and longitudes of a southwest endpoint and a northwest endpoint.

The location information included in the SDLT according to embodiments may provide location information constituting a polygon so that more accurate location information may be provided to the broadcast signal reception apparatus.

The location information included in the SDLT according to embodiments may signal a value or range of an IP address to which the broadcast service is provided. By providing this information, the SDLT may provide the service to a region of a scope to which the IP address belongs, based on the IP address of the reception apparatus connected to the Internet.

According to embodiments, the location information (LocationInfo) may include 0 or more pieces of region information, 0 or more pieces of circle information, 0 or more pieces of square information, 0 or more pieces of polygon information, and/or zero or more pieces of IPaddressScope.

The region information may indicate the name of a country and/or city for which the broadcast service is supported. The region information may include an @isoCountryCode element indicating a country name. The region information may include city information indicating a city. The city information indicates the name of a city registered in the country indicated by the region information. The city information may include an @lang element that indicates language representing the city name.

The circle information is information indicating a region for which the broadcast service is supported as a circle. The circle information may include an @lat element representing the latitude of the region, an @lng element representing the longitude of the region, and/or an @radius element representing the radius of the circle of the region.

The square information is information indicating a region for which the broadcast service is supported as a square. The square information may include an @swLat element indicating the latitude of a point located in a southwest direction of a square region, an @swLng element indicating the longitude of the point located in the southwest direction of the square region, an @neLat element indicating the latitude of a point located in a northeast direction of the square region, and/or an @neLng element indicating the longitude of the point located in the northeast direction of the square region.

The polygon information is information indicating a region for which the broadcast service is supported as a polygon. For example, the polygon information may be a character string including one or more vertices. The polygon information may include an @numOfPoints element indicating the number of vertices of a polygon in the region.

The IP address scope (IPaddressScope) information indicates the scope of information of a region allocated to an IP address. The IP address scope information may include an @version element indicating the version of a corresponding IP address, an @startIpAddr element indicating the start of an IP address scope with an IP address value suitable for each version, and/or an @startIpAddr element indicating the end of the IP address scope with the IP address value suitable for each version.

The LocationInfo information and the elements according to embodiments may be parsed by the parser according to embodiments.

The parameters illustrated in FIG. 37 according to embodiments may be present at the highest level in the SDLT according to embodiments or may be present at the same level as or a lower level than the Service (or service instance) in the SDLT. The inclusion relationship of the parameters illustrated in FIG. 37 is exemplary.

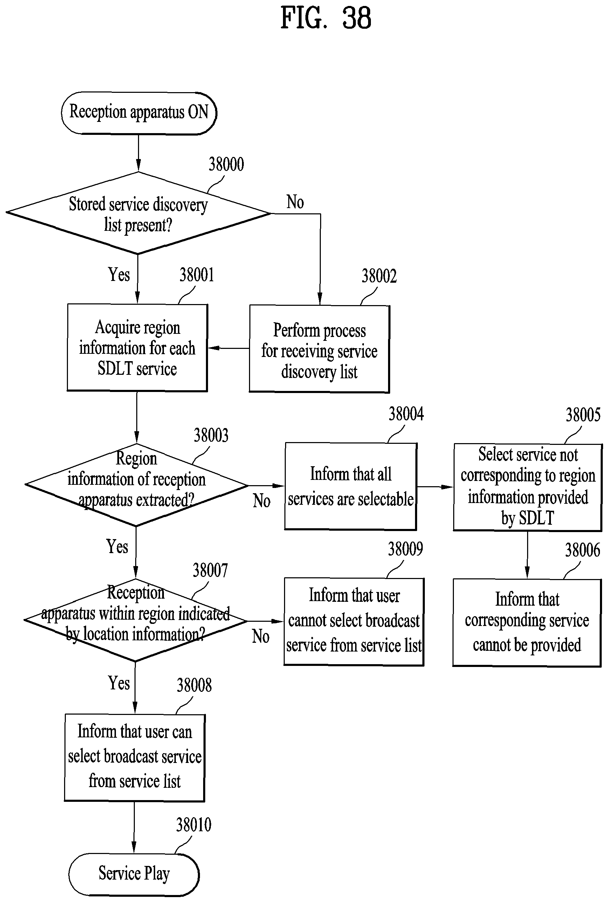

The LocationInfo information according to embodiments may be signaled to the broadcast signal reception apparatus through the SDLT and may be located at two levels. When the LocationInfo information is located at a lower level than the SDLT, the location information of all services belonging to the SDLT may be provided. When the LocationInfo information is located at a lower level than the Service, the location information that may be provided by a corresponding service may be provided. If different location information is provided in the SDLT and the service, the location information provided in the service may be prioritized. This will be described in detail in FIG. 38.

FIG. 38 illustrates a method of providing a broadcast service using location information of an SDLT according to embodiments.

The broadcast signal reception apparatus according to embodiments may provide and display the broadcast service to the user based on the location information included in the SDLT (or included in a lower level than the Service information in the SDLT). In some embodiments, the Service information may be referred to as service instance information.

The broadcast signal reception method according to embodiments may include determining whether a stored service discovery list (e.g., SDLT) is present (38000), receiving the service discovery list according to embodiments (38002), acquiring location information(region information) included in the service discovery list (38001), determining whether region information of the broadcast signal reception apparatus is extracted (38003), and determining whether the reception apparatus belongs to a region indicated by the location information included in the service discovery list (38007).

The operation of determining whether a stored service discovery list is present (38000) and/or receiving the service discovery list according to embodiments (38002) may receive the service discovery list (e.g., SDLT) as illustrated in FIGS. 6 to 18.

In step 38003, the broadcast signal reception apparatus determines whether the region information thereof is extracted. The broadcast signal reception apparatus according to embodiments extracts the location information included in the received service discovery list (SDLT). The LocationInfo information and elements according to embodiments may be parsed by the parser according to embodiments.

According to embodiments, if the broadcast signal reception apparatus cannot extract the region information thereof, the broadcast signal reception apparatus (or user) informs that all broadcast services included in the SDLT are selectable (38004). When a selected broadcast service does not correspond to the region indicated by the location information provided by the SDLT, the broadcast signal reception apparatus may inform that the selected service cannot be provided (38005 and 38006).

In step 38007, when the broadcast signal reception apparatus extracts the region information thereof, it is determined whether the reception apparatus belongs to the region indicated by the location information included in the service discovery list.

According to embodiments, when the reception apparatus does not belong to the region indicated by the location information included in the service discovery list (or when all Services included in the SDLT do not belong to the region indicated by the location information), the broadcast signal reception method may inform that the user cannot select a broadcast service from the service list (38009).

According to embodiments, when the reception apparatus belongs to the region indicated by the location information included in the service discovery list, the broadcast signal receiving method may inform that the user can select the broadcast service (38008) and play the selected broadcast service (38010).

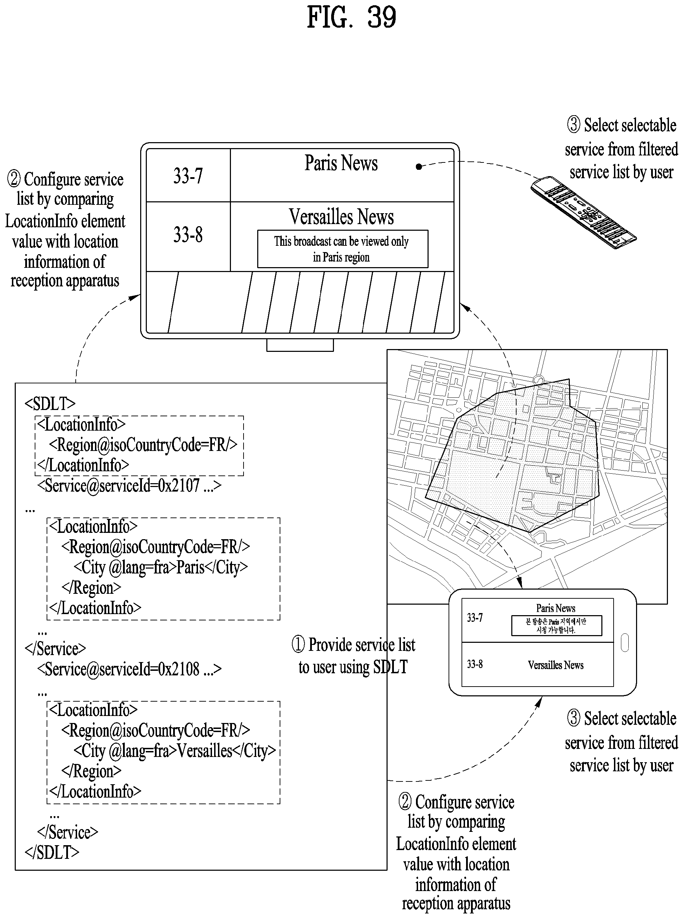

FIG. 39 illustrates a method of providing a broadcast service using location information of an SDLT according to embodiments.

FIG. 39 illustrates an example of an SDLT including region information and an example of a method of providing a broadcast service using the SDLT. For example, when two services broadcast in France are broadcast only in different cities, the corresponding broadcast services may be signaled at a service level lower than the SDLT. Upon receiving the SDLT, the reception apparatus may show a service list to the user according to provided information. When the broadcast signal reception apparatus extracts location information thereof, a filtered service list may be shown to the user based on the location information provided by the SDLT.

The broadcast signal reception apparatus according to embodiments may receive the SDLT according to embodiments. The SDLT according to embodiments may be configured in an XML format. The SDLT may include the location information according to embodiments. The location information may be included in Service information (or service instance information according to embodiments) included in the SDLT or may be included as elements of the same level as Services included in the SDLT.

The broadcast signal reception apparatus according to embodiments may determine whether a broadcast service included in the SDLT may be provided to the user based on the location information (LocationInfo) included in the SDLT. For example, the broadcast signal reception apparatus may compare the location information with location information thereof to extract a list of broadcast services available to the user. The broadcast signal reception apparatus may display broadcast services available to the user. The broadcast signal reception apparatus may also display an indication indicating that broadcast services unavailable to the user cannot be provided in a corresponding region.

According to embodiments, the user may select a broadcast service from the extracted list of available broadcast services.

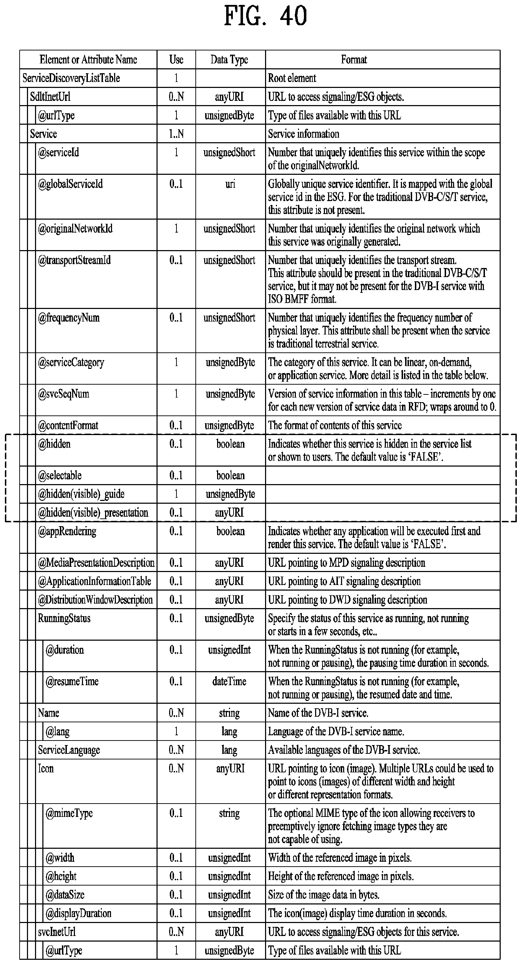

FIG. 40 illustrates hidden information of an SDLT according to embodiments.

Referring to FIG. 40, another example of a syntax of an SDLT for providing fast discovery according to embodiments is illustrated. The SDLT illustrated in FIG. 40 may include all or part of the parameters of the SDLT illustrated in FIG. 32.

The SDLT may be essential information that the reception apparatus may first contain for service discovery. Through this signaling data, the reception apparatus may provide service list information so that the user may select a service. In this case, the SDLT may be configured to include a lot of information. Such configuration information has an effect of providing a large number of services and enabling faster service play when the user selects a service. The table illustrated shows a composition syntax of the SDLT.

The broadcast signal reception apparatus according to embodiments may receive a broadcast service in the form of subscription and streaming through an Internet network. The broadcast signal reception apparatus according to embodiments may need to manage a hidden and/or inactive channel.

For example, when a DVB-I service is provided, there may be two methods of selecting a linear channel. First, the user may directly select a channel number. Second, the user may select a channel through channel surfing. In some embodiments, the Internet-based broadcast service may be received in a unicast form according to an HTTP protocol or the linear channel service may be received in a multicast form.

The SDLT according to embodiments may include information about one or more Services. The SDLT or Service information (or service instance information) according to embodiments may include a hidden element, a selectable element, a hidden(visible)_guide element, and/or a hidden(visible)_presentation element.

The **hidden** element indicates whether a logical channel of a corresponding broadcast service is shown or not. That is, this element indicates whether the broadcast service is a hidden broadcast service or not. The hidden element according to embodiments represents whether the logical channel of the broadcast service is shown or not when the user surfs the logical channel or the user directly selects channel entry.

The **selectable** element indicates whether the broadcast service may be selected by input of a logical channel number when the corresponding broadcast service is a hidden broadcast service (i.e., when the hidden parameter is True or Set). For example, when the selectable element is Set, the user may select the hidden broadcast service by direct input of a logical channel number of the broadcast service. For example, when the selectable element is False, the user may not directly select the hidden broadcast service even by direct input of a logical channel number.

The **hidden_guide** element guides the user on the state of a channel of the broadcast service or shows a replaceable screen through a connection link, when the broadcast service is a hidden broadcast service. For example, when the user directly accesses a channel in the state of a hidden channel, this element may guide the user on the state of the channel or show a replaceable screen through a connection link. This element is a type value indicating various channel guide methods.

The **hidden(visible)_presentation** element indicates corresponding anyURI information according to a defined type value through hidden_guide according to embodiments.

The broadcast signal reception apparatus according to embodiments enables the user to check the presence/state of a corresponding channel using a return channel when a channel is hidden or is inactivated in a DVB-I environment using the signaling information and enables the user to easily manage the hidden/inactive channel of existing broadcast through an alternative service.

Table 1 illustrates an example of a type value of hidden_guide according to embodiments, information corresponding to the type value, and/or URI information represented by the hidden(visible)_presentation element.

[Table 1]

| Type | Values | hidden(visible)_presentation |
|---|---|---|
| 0x0000 | Rendering by device | |
| 0x0001 | Alternative link of Service provider | www.bbc.co.kr/alternative/music |
| 0x0002 | Linked service(alternative channel) | DVB triplet :/DITS-(OriginalNetworkID)-(TransportStreamID)-(serviceID) Ex) Application/DITS-11-20-06 |

(continued)

| Type | Values | hidden(visible)_presentation |
|---|---|---|
| 0x0003 | Stereoscopic channel guide | DVB triplet :/DITS-(OriginalNetworkID)-(TransportStreamID)-(serviceID)<br>Ex) Application/DITS-11-20-06 |
| 0x0004 | ESG, BCG(Broadband Content Guide) link | loginformDB.html |
| 0x0005 | Alternative app service | App dedicated channel<br>Ex) App access using AIT |

The parameters illustrated in FIG. 40 according to embodiments may be present at the highest level in the SDLT according to embodiments or may be present at the same level as or a lower level than the Service (or service instance) in the SDLT. The inclusion relationship of the parameters illustrated in FIG. 40 is exemplary. The broadcast signal reception apparatus according to embodiments receives the SDLT including the elements according to embodiments illustrated in FIG. 40. The SDLT according to embodiments may be parsed by the parser included in the broadcast signal reception apparatus or the application so that sub-elements included in the SDLT may be extracted.

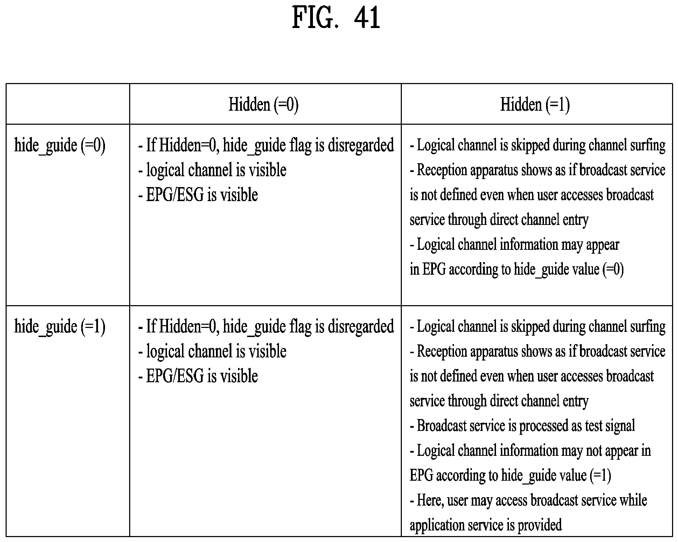

FIG. 41 illustrates an example of hidden information and hidden guide information of an SDLT according to embodiments.

The **hidden** element indicates whether a logical channel of a corresponding broadcast service is shown or not. That is, this element indicates whether the broadcast service is a hidden broadcast service or not. The hidden element according to embodiments represents whether the logical channel of the broadcast service is shown or not when the user surfs the logical channel or the user directly selects channel entry.

The **hidden_guide** element guides the user on the state of a channel of the broadcast service or shows a replaceable screen through a connection link, when the broadcast service is a hidden broadcast service. For example, when the user directly accesses a channel in the state of a hidden channel, this element may guide the user on the state of the channel or show a replaceable screen through a connection link. This element is a type value indicating various channel guide methods.

When the hidden information indicates 0, the broadcast service and a logical channel of the broadcast service are visible. The broadcast service may also be visible in an EPG and/or an ESG. Since the broadcast service is not a hidden broadcast service, the broadcast signal reception apparatus may ignore hide_guide information.

When the hidden information indicates 1, the broadcast service and the logical channel of the broadcast service may not be visible during channel surfing (i.e., the logical channel may be skipped during channel surfing). In this case, even if the user directly inputs channel information, the broadcast signal reception apparatus may show as if the broadcast service is not defined.

When the hide_guide information is 0, the broadcast service may be visible in the EPG and/or the ESG. When the hide_guide information is 1, the broadcast service may not be visible in the EPG and/or ESG. In this case, the user may access the broadcast service while an application service is provided. In addition, in this case, the broadcast service may be provided as a test signal.

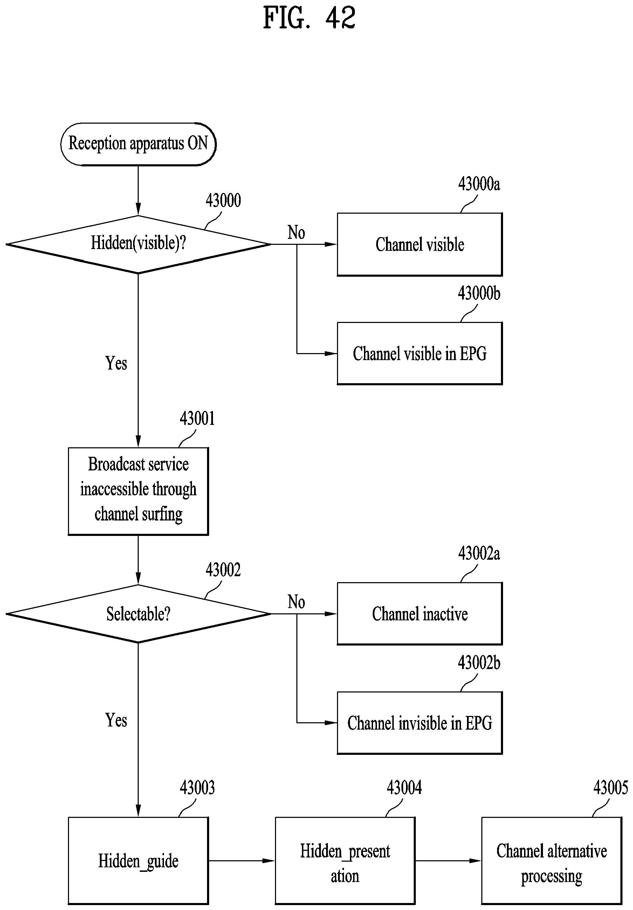

FIG. 42 illustrates a method of providing a broadcast service using hidden information and/or selectable information of an SDLT according to embodiments.

The broadcast signal reception method according to embodiments includes extracting hidden information from the Service information in the SDLT (43000) and extracting selectable information from the Service information in the SDLT (43002).

The broadcast signal reception apparatus according to embodiments may receive the SDLT according to embodiments and extract the hidden information from the Service information included in the SDLT (43000). The hidden information according to embodiments may be parsed or extracted by the parser according to embodiments. When the broadcast signal reception apparatus cannot extract the hidden information from the Service information in the SDLT, the broadcast signal reception method according to embodiments may display a channel for a corresponding broadcast service (43000a) and display the channel for the broadcast service so as to be visible in an EPG (43000b). When the broadcast signal reception apparatus extracts the hidden information from the Service information in the SDLT, the broadcast service may not be accessed through channel surfing surf the channel for the broadcast service (43001).

The broadcast signal reception apparatus according to embodiments may extract the selectable information from the Service information in the SDLT (43002). The selectable information according to embodiments may be parsed or extracted by the parser according to embodiments. In this case, if the selectable information is not extracted, the broadcast signal reception apparatus may indicate that the channel of the broadcast service is inactivated or is in an inactive state (43002a). Then, the channel of the broadcast service may be invisible in the EPG (43002b). An inactive service means a broadcast service that is hidden and is not selectable by the user. The inactive service may be referred to as a non-activated service or a non-active service.

When the selectable information is extracted, the broadcast signal reception apparatus according to embodiments may check hidden_guide information according to embodiments (43003). In addition, when the selectable information is extracted, the broadcast signal reception apparatus according to embodiments may check hidden_presentation information according to embodiments (43004). The broadcast signal reception apparatus according to embodiments may perform channel alternative processing of the broadcast service based on the identified hidden_guide and/or hidden_presentation information. The channel alternative processing of the corresponding broadcast service has been described in FIGS. 40 and 41. The hidden_guide and hidden_presentation information according to embodiments may be parsed or identified by the parser according to embodiments.

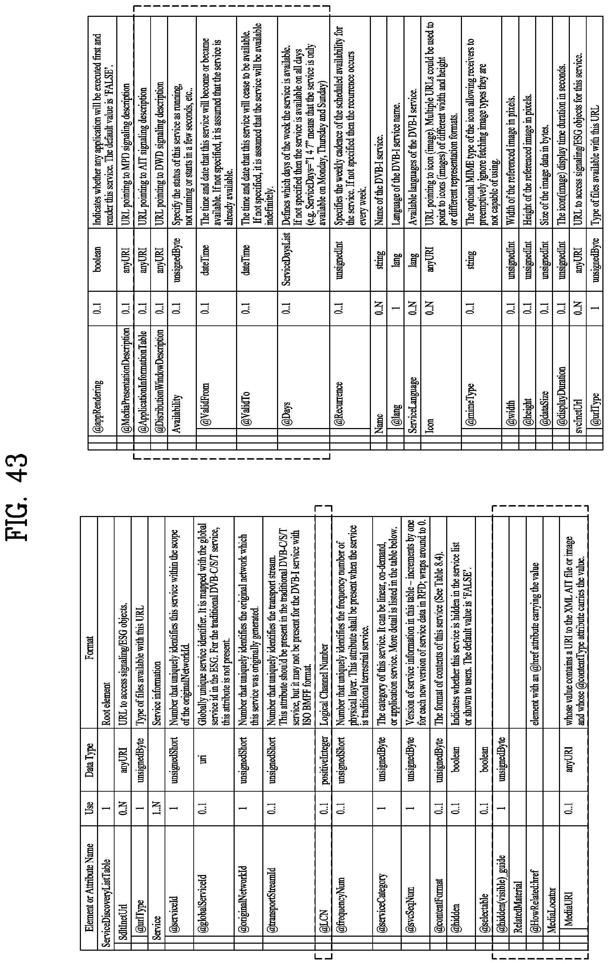

FIG. 43 illustrates another example of an SDLT according to embodiments.

FIG. 43 illustrates an example of an SDLT further including information for providing a banner for a corresponding service when the broadcast service according to embodiments is inactive. The SDLT according to embodiments illustrated in FIG. 43 may include some or all of the signaling information of the SDLT illustrated in FIG. 40.

An inactive service means a broadcast service that is hidden and is not selectable by the user.

According to embodiments, a broadcast service may be a hidden broadcast service, a selectable broadcast service, or an inactive service. When the user selects the broadcast service, the broadcast signal reception apparatus may not play the broadcast service. In this case, in order to solve the inconvenience to the user, other content that may replace the broadcast service may be displayed. Content that may replace the broadcast service according to embodiments may be received through an Internet network. Content that may replace the broadcast service may be referred to as a return channel alternative service.

Information related to the return channel alternative service according to embodiments may be included in the Service information in the SDLT or at the same level as the Service information and may be referred to as RelatedMaterial information.

Thus, the RelatedMaterial information, which is information related to the return channel, is transmitted in the Service information (service instance information) in the SDLT or is transmitted in the SDLT according to embodiments, thereby minimizing inconvenience to the user, generated when the broadcast service is not played, and further providing meaningful information related to the broadcast service to the user.

A method of providing an Internet-based broadcast service (e.g., a DVB-I service) according to embodiments may provide an Internet linear channel to the broadcast signal reception apparatus. In some embodiments, a service discovery procedure may provide the broadcast service through a specific local channel number (LCN) in a part-time form (i.e., in a valid form only in a specific time zone).

The broadcast signal reception apparatus according to embodiments may execute a channel change API through an additional application or provide an additional VoD service so as not to cause confusion when the user directly selects a channel number in an out-of-service state (for example, when the broadcast service is inactive),

The SDLT according to embodiments may include information about one or more services.

The SDLT or the Service information (service instance information) included in the SDLT according to embodiments may include @LCN information indicating a logical channel number of the corresponding service.

The SDLT or the Service information (service instance information) included in the SDLT according to embodiments may include one or more related material information (RelatedMaterial). The related material information indicates where files related to the broadcast service (e.g., an AIT file and/or an image file received by the reception apparatus) are located and/or how the Service information is associated with the broadcast service. The related material information may include a HowRelated element indicating how files indicated by the related material information are associated with the broadcast service.

The related material information may include media locator (MediaLocator) information. The media locator information indicates the location of media related to the broadcast service. The media locator information may include media URI (MediaURI) information indicating URI information of files related to the broadcast service (e.g., an AIT file and/or an image file).

The related material information may include Availability information. The availability information indicates the status of the broadcast service. The status of the broadcast service may include, for example, a status indicating that the broadcast service is running, a status indicating that the broadcast service is not running, and a status indicating that the broadcast service starts in a few seconds. That is, when the broadcast service according to embodiments is provided in a part-time format, the availability information may indicate a provided time.

The Availability information according to embodiments may mean the running status (RunningStatus) information illustrated in FIG. 28. The Availability information may include the running status information. Conversely, the availability information may be included in the running status information.

For example, the availability information according to embodiments may include elements such as @ValidFrom, @ValidTo, @Days, and @Recurrence.

The @ValidFrom element indicates a time (e.g., date and time) when the broadcast service became available or become available. If the @ValidFrom element is not specified, this may indicate that the broadcast service is already available.

The @ValidTo element indicates a time (e.g., date and time) when the broadcast service will cease to be available. If the @ValidTo element is not specified, this may indicate that the broadcast service is indefinitely available.

The @Days element indicates which days of the week the service is available. For example, if the @Days element has a value of "1, 4, 7", this may indicate that the service is available on Monday, Thursday, and Sunday. If the @Days element is not specified, this may indicate that the service is available on all days of the week.

The @Recurrence element specifies the weekly cadence of the scheduled availability for the service. The weekly cadence indicates whether the broadcast service is repeated weekly and/or how many times that broadcast service is repeated. If the @Recurrence is not specified, this may indicate that recurrence of the broadcast service occurs every week.

The availability information according to embodiments may further include elements indicating information about a time when the service is periodically started (e.g., a start time and an end time) according to embodiments.

The elements included in the availability information according to embodiments may be included in the same hierarchy or level in the availability information according to embodiments or may be included in subdivided information in the availability information.

In one embodiment, the @ValidFrom, @ValidTo, @Days, and @Recurrence elements may all be included in the Availability information according to embodiments.

In another embodiment, the Availability information according to embodiments may include period information (Period) and interval information (Interval). @ValidFrom and @ValidTo may be included in the period information according to embodiments and @Days and @Recurrence may be included in the interval information according to embodiments.

That is, the broadcast signal reception apparatus according to embodiments signals an actual valid time of a part-time service through attribute values in the Availability information (element) and checks an inactive period of the broadcast service. A screen visible in an LCN at the inactive period may show an inactive service status due to an attribute defined in the RelatedMaterial element.

@MediaURI may reflect HbbTV (AIT) application signaling and an application life-cycle as the same attribute as the hidden(visible)_presentation URI according to embodiments. If the @MediaURI parameter is omitted, an inactive alternative service may be provided through a URI defined in @ApplicationInformationTable. When content_type of @MediaURI according to embodiments is "image/png", the broadcast signal reception apparatus according to embodiments may display an inactive service banner or an out-of-service banner.

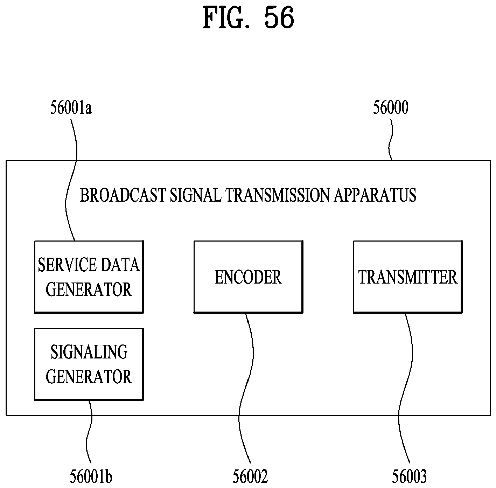

The SDLT according to embodiments may mean the service list discovery information generated by the service list server 21002 or the broadcaster 21003 of the broadcast signal transmission device of FIG. 21. The SDLT according to embodiments may mean the service list discovery information generated by a signaling generator 5601 of a broadcast signal transmission device of FIG. 56.

The SDLT according to embodiments may be parsed by the DVB-I player 21000 of FIG. 21 or a parser included in the DVB-I player 21000. Further, the SDLT according to embodiments may be parsed by the service manager 57002 of the broadcast signal reception apparatus according to embodiments or a parser included in the service manager. The parser, the service manager 57002, and the DVB-I player 21000 according to embodiments may extract the Service and/or RelatedMaterial information included in the SDLT by parsing the SDLT.

Accordingly, the broadcast signal reception apparatus according to embodiments provides an alternative service to the user even when the broadcast service is currently in a hidden/selectable/inactive state based on the availability information and the related material information according to embodiments, thereby solving inconvenience of users.

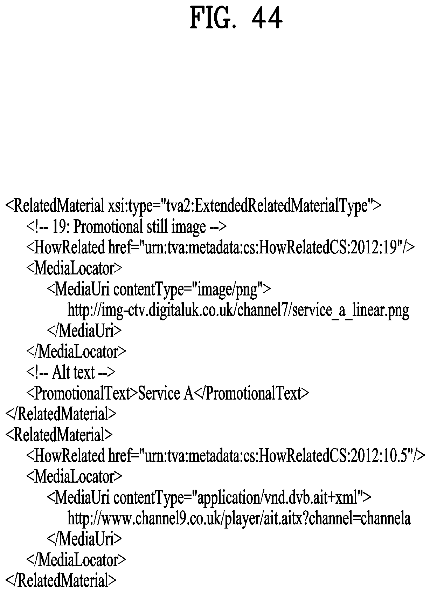

FIG. 44 illustrates an example of related material (RelatedMaterial) information in an SDLT according to embodiments.

FIG. 44 illustrates the related material information in the SDLT according to embodiments in an XML format. According to embodiments, the SDLT may include one or more Services. The service may include one or more RelatedMaterial information as illustrated in FIG. 44. For example, one service may include RelatedMaterial information related to a promotional still image and other RelatedMaterial information as illustrated in FIG. 44,.

In some embodiments, one related material information may include the HowRelated element described in FIG. 43. The HowRelated element may indicate how files represented by the related material information are associated with a broadcast service. For example, the HowRelated element may be expressed as an XML syntax and may be represented by an href attribute. For example, the HowRelated element included in the first RelatedMaterial information of FIG. 44 may indicate how the promotional still image is associated with the broadcast service, such as "urn:tva:metadata:cs:HowRelatedCS:2012:19" through the href attribute.

The related material information may include the MediaLocator information and the MediaLocator information according to embodiments may include the media URI information described with reference to FIG. 43. The MediaLocator information may include a MediaURI element indicating the URI of corresponding media.

The MediaURI element may include a contentType attribute value. contentType may indicate a file format, that is, indicate whether the media is an image file, which file format the image file has when the media is the image file, or whether the media represents an application.

The MediaURI element may include a URI address for obtaining a corresponding file (media file). For example, referring to FIG. 44, the broadcast signal reception apparatus may acquire the promotional still image as indicated by an address (http://img-ctv.digitaluk.co.uk/channel7/service_a_linear.png) included in MediaURI included in the first and second RelatedMaterial information of the SDLT.

The SDLT and/or sub-elements of the SDLT illustrated in FIG. 44 according to embodiments may be parsed by the parser according to embodiments.

Therefore, the broadcast signal transmission method according to embodiments may include generating service data and/or signaling information for the service data, encoding the service data and/or the signaling information, and/or transmitting the signaling information.

In addition, the broadcast signal reception method according to embodiments may include receiving service data and/or signaling information for the service data and/or acquiring the service data based on the signaling information.

Signaling information according to embodiments includes information about service data. The information about the service data may include the RelatedMaterial information indicating the location of an application related to the service data and the Availability information indicating whether service data is recurrently running.

The RelatedMaterial information according to embodiments may include location information for obtaining information about an application. In addition, the Availability information according to embodiments may include information about a time during which service data is running and information indicating whether the service data is recurrently running.

Through such a configuration of the broadcast signal reception apparatus according to embodiments, when a hidden/selectable/inactive broadcast service of an Internet linear channel is started, a logical channel service that causes inconvenience to the user by not providing a broadcast service may be avoided and an Internet return channel alternative service (or alternative service) may be provided, so that a better media service may be provided to the user.

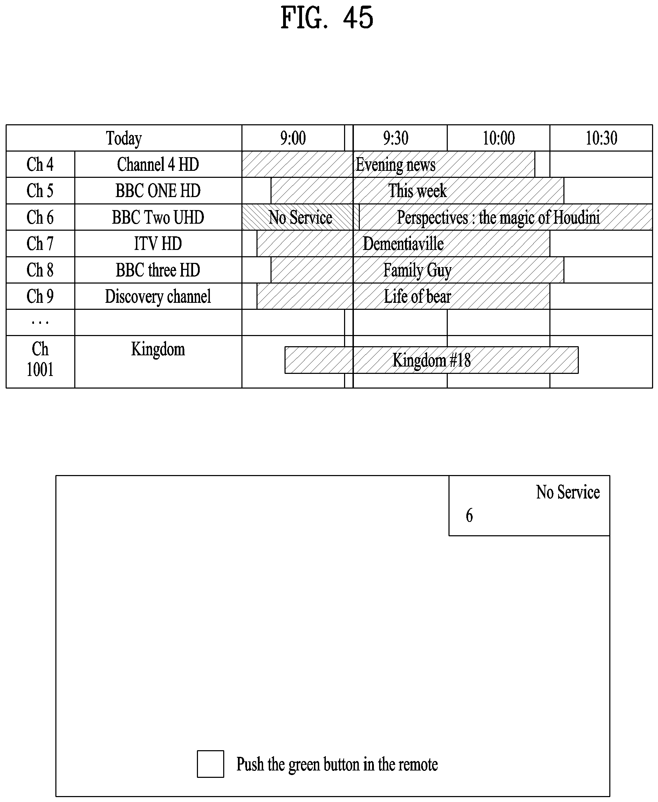

FIG. 45 illustrates a method for a broadcast signal reception apparatus to provide a service banner when a broadcast service is inactivated.

FIG. 45 illustrates an example of a UI of a display of a broadcast signal reception apparatus that is applicable to a specific LCN when a broadcast service is inactive. For example, in FIG. 45, LCN 6 is in a no service state and may display a component (e.g., no service banner) indicating that the broadcast service is not provided. The component indicating that the broadcast service is not provided may be referred to as an out-of-service banner.

The upper part of FIG. 45 represents a display component of the broadcast signal reception apparatus, which indicates a schedule of the broadcast service according to embodiments.

The broadcast signal reception apparatus according to embodiments may display channel numbers (LCNs) of one or more broadcast services and times when the corresponding broadcast services are provided. For example, the broadcast signal reception apparatus according to embodiments may receive an SDLT and parse a plurality of Service information included in the SDLT.

The plural services may include, for example, a broadcast service named "Evening news", a broadcast service named "This week", a broadcast service named "Perspectives: the magic of Houdini", and a broadcast service named "Dementiaville", a broadcast service named "Family Guy", a broadcast service named "Life of bear", and a broadcast service named "Kingdom #18". The broadcast signal reception apparatus according to embodiments may display the names of the broadcast services in a table form as illustrated in the upper part of FIG. 45.

The broadcast signal reception apparatus according to embodiments may display an LCN of each broadcast service and the name of the corresponding channel. For example, when the broadcast signal reception apparatus displays the broadcast service named "Evening news", then a channel name "Channel 4 HD" and the LCN "Ch 4" may be displayed together.

The broadcast signal reception apparatus according to embodiments may display the LCN based on an @LCN element included in the Service information included in the SDLT and display the service name based on the Name information included in the Service information. For example, the broadcast service "Evening news" may have an @LCN value of 4 and a string value of "Evening news" as the Name information.

The broadcast signal reception apparatus according to embodiments may display a schedule table of each broadcast service. For example, the schedule of the broadcast service named "Evening news" may be displayed in the form of a bar graph or a Gantt chart as illustrated in the upper part of FIG. 45. That is, when the broadcast service named "Evening news" starts at 9:00 and ends at 10:20, then a bar graph including "Ch 4", which is an LCN, "Channel 4 HD", which is the name of the corresponding channel, and "Evening news", which is the name of a corresponding broadcast service, may be displayed in the same row.

The broadcast signal reception apparatus according to embodiments may configure the schedule table of a broadcast service based on Availability information included in the SDLT. For example, in the upper part of FIG. 45, the broadcast service "Evening news" may indicate that @ValidFrom is 9:00 and @ValidTo is 10:20.

The broadcast signal reception apparatus according to embodiments displays a "No Service" or out-of-service banner on a display component indicating a schedule when a specific service included in the SDLT is an inactive service. For example, if the broadcast service is not activated from 9:00 to 9:40 on BBC Two UHD of channel 6, the "No Service" or out-of-service banner may be displayed.

According to embodiments, a specific service included in the SDLT may be an inactive service. The inactive service refers to a broadcast service which is hidden and is not selectable by the user. For example, when a specific service among the Service information included in the SDLT has True as an @hidden value and False as an @selectable value, the corresponding broadcast service may be the inactive service.

In the case of the inactive service, a channel corresponding to the inactive service may be skipped during channel surfing. However, according to embodiments, the user may directly input the LCN of the inactive service without channel surfing.

The lower part of FIG. 45 is displayed when the user directly inputs the LCN of the inactive service without channel surfing. That is, when the broadcast service according to embodiments is the inactive service, the broadcast signal reception apparatus displays an indication indicating that the corresponding broadcast service is the inactive service. The lower part of FIG. 45 is displayed when the Service included in the SDLT is in an inactive state. For example, a broadcast service may be in an inactive state on a channel, an LCN of which is 6, based on the current time (upper part of FIG. 45).

The broadcast signal reception apparatus according to embodiments prevents a logical channel service that causes inconvenience to the user by not servicing broadcast when a broadcast service of an Internet linear channel is hidden/selectable/inactive. In addition, the broadcast signal reception apparatus according to embodiments provides an Internet return channel alternative service to offer a better media service.

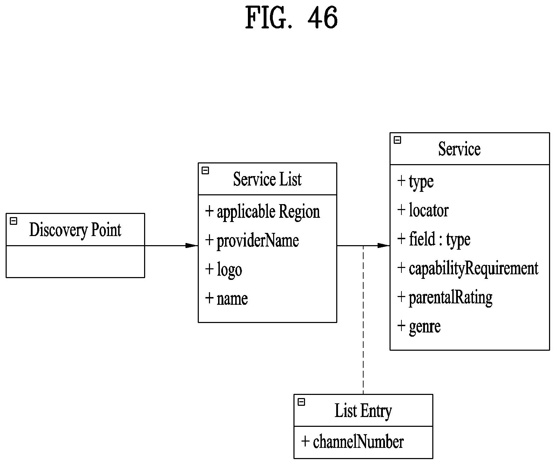

FIG. 46 illustrates a service list hierarchy of an Internet-based broadcast service according to embodiments.

A service list of the Internet-based broadcast service (e.g., DVB-I service) according to embodiments has the following service hierarchy. The Internet-based broadcast service according to embodiments obtains the service list of the broadcast service through a discovery point (e.g., SDLT) and obtains information about services included in the service list.

The service list includes applicableRegion information indicating a region to which services are applicable, providerName information indicating the name of a service provider providing the services, logo information indicating the logos of the services, and/or name information indicating the names of the services included in the service list.

Each of the services included in the service list according to embodiments may include type information indicating the type of a corresponding service, locator information indicating a location for obtaining the service, field information, capabilityRequirement information related to requirements of the reception apparatus for providing the service, parentalRating information, and/or genre information indicating the genre of the service.

The services included in the service list according to embodiments may have respective logical channel numbers and provide linear channel services.

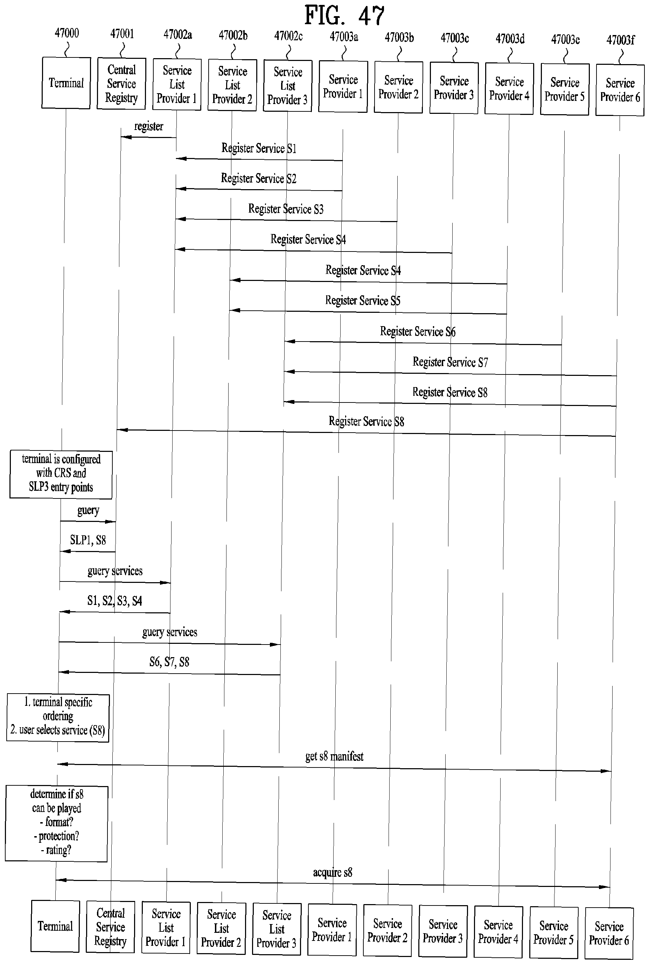

FIG. 47 illustrates a version management method of a broadcast service according to embodiments.

The broadcast signal reception apparatus according to embodiments may provide a broadcast service using the Internet. In this case, a service list including broadcast services may be received from one or more broadband servers. That is, the broadcast signal reception apparatus may receive one or more services and/or signaling information of the services from a server through an open platform.

The broadcast signal reception apparatus according to embodiments needs to manage the one or more services. For example, the broadcast signal reception apparatus according to embodiments may maintain and store versions of the one or more services. Accordingly, the broadcast signal reception apparatus according to embodiments may include a centralized repository. The centralized repository may manage the broadcast services according to embodiments. That is, the broadcast signal reception apparatus according to embodiments may provide a common service search infrastructure based on a service provider or a service list provider using the centralized repository.

Due to this configuration, the broadcast signal reception apparatus according to embodiments may be capable of realizing a linear service using an Internet network and may provide a service open to the user by integrating and managing servers providing the services.

FIG. 47 illustrates a service provider, a service list provider, a terminal (e.g., broadcast signal reception apparatus according to embodiments), and a central service registry, that are subjects configuring the Internet-based broadcast service (e.g., DVB-I service) according to embodiments, and operations thereof.

Service providers 47003a to 47003f mean servers that provide one or more broadcast services. The service provider according to embodiments may be the broadcaster 21003 of FIG. 21.

Service list providers 47002a to 47002c refer to servers that provide services or a list of one or more services. The service provider according to embodiments may be the service list server (broadcaster) 21002 of FIG. 21. A terminal 47000 may be a configuration included in the broadcast signal reception apparatus according to embodiments. The terminal may be the DVB-I player 21000 of FIG. 21. A central service registry 47001 may be included in the service list provider according to embodiments. The central service registry 47001 may refer to the service list registry described in FIG. 21.

A central service registry 47001 may be an HTTP-based endpoint available at a known URL.

The service list provider 47002a to 47002c according to embodiments may transmit a request for registration to the central service registry. Upon receiving the request for registration, the central service registry according to embodiments may register the service list providers. For example, the first service list provider 47002a of FIG. 47 may transmit the request for registration to the central service registry 47001 and the central service registry 47001 may register the first service list provider 47002a. The central service registry 47001 may also register the second service list provider 47002b and/or the third service list provider 47002c in a similar way.

The service providers 47003a to 47003f according to embodiments may make a request to the service list providers 47002a to 47002c for service registration. Upon receiving the request for service registration, the service list providers 47002a to 47002c may register services. For example, referring to FIG. 47, the first service provider 47003a may make a request for registration of a first service S1 and a second service S2 to the first service list provider 47002a. The second service provider 47003b may register a third service S3 in the second service list provider 47002b. The third service provider 47003c may register a fourth service S4 in the first service list provider 47002a and the second service provider 47002b, The fourth service provider 47003d may register a fifth service S5 in the second service provider 47002b. The fifth service provider 47003e may register a sixth service S6 in the third service provider 47002c. The sixth service provider 47003f may register a seventh service S7 and an eighth service S8 in the third service provider 47002c.

The service providers 47003a to 47003f according to embodiments may directly register a broadcast service in the central service registry according to embodiments. For example, the sixth service provider 47003f may directly register the eighth service S8 in the central service registry 47001.

The terminal 4700 according to embodiments may configure an entry point of the central service registry for access to the central service registry 47001. The entry point of the central service registry may include an address of the central service registry.

After configuring the entry point of the central service registry, the terminal 4700 according to embodiments may make a request to the central service registry 47001 for a service list entry point (SLP) for accessing the service providers 47002a to 47002f. The central service registry 47001 according to embodiments may provide the SLP for accessing the service providers 47002a to 47002f to the terminal 4700. The SLP may include information for accessing the service list providers 47002a to 47002c.

The terminal 4700 according to embodiments may configure the entry point of the central service registry and then make a request to the central service registry 47001 for one or more services. For example, the terminal 40000 according to embodiments may make a request to the central service registry 47001 for the eighth service S8 possessed by the central service registry 47001 and the central service registry 47001 may provide the eighth service S8 to the terminal 47000.

The terminal 4700 according to embodiments may access the service list providers 47002a to 47002c using the SLP. The terminal 4700 according to embodiments may request services provided by the service list providers 47002a to 47002c using the SLP. In this case, the service list provider that has received the request may provide the requested service to the terminal 4700. For example, the terminal 4700 may transmit a request for the first to fourth services S1, S2, S3, and S4 to the first service list provider 47002a using the SLP for accessing the first service list provider. The first service list provider 47002a may transmit the first to fourth services to the terminal 4700.

For example, the terminal 4700 may transmit a request for the sixth to eighth services S6, S7, and S8 to the third service list provider 47002a using the SLP for accessing the third service list provider. The third service list provider 47002a may transmit the sixth to eighth services to the terminal 4700.

To perform the operations of FIG. 47, the central service registry 47001 receives registration for a service from different service list providers 47002a to 47002c and delivers an accessible address to the terminal 47000. Although the central service registry 47001 is connected to the service list providers 47002a to 47002c to receive registration for a service, the terminal may receive service update only from the central service registry 47001. In an actual service, all the service list providers 47002a to 47002c may have different update periods and may be the address of a third entity that directly accesses the service list provider. Therefore, the terminal according to embodiments may obtain an address that may directly access the service list provider. In order to update the service list in each service hierarchy, it is necessary to check a version and perform continuous polling. Accordingly, the terminal 4700 according to embodiments may further receive a service list template including the following information from the central service registry, the service list providers, and/or the service providers.

1. Attribute that may satisfy a different service list polling period for each service list provider
2. Accessible address for obtaining a service list by directly accessing a service list provider

3. Available time and end time of a corresponding service
4. Next available time of a current service list

The broadcast signal reception apparatus according to embodiments may efficiently update different services with a minimal operation and efficiently manage different services. In addition, the broadcast signal reception apparatus according to embodiments may provide a broadcast service open to the user with such a configuration.

The broadcast signal reception apparatus according to embodiments may obtain the up-to-date service list quickly and efficiently by providing accessible locations or addresses of different service list providers through this configuration.

In addition, the broadcast signal reception apparatus according to embodiments may maintain the up-to-date service list by performing update according to a minimum update (polling) period for each service.

The broadcast signal reception method according to embodiments may include receiving service data and/or signaling information for the service data and/or obtaining the service data based on the signaling information.

The broadcast signal reception method according to embodiments may include transmitting a first request to a service registry in order to receive the service data, receiving response information including a URL of the service data, and/or obtaining the service data based on the response information.

Accordingly, the broadcast signal reception apparatus according to embodiments may include a tuner for receiving service data and/or signaling information for the service data and/or a service manager for acquiring the service data based on signaling information.

In addition, the broadcast signal reception apparatus according to embodiments may further include a transmitter for transmitting a first request to a service registry in order to receive the service data, a receiver for receiving response information including a URL of the service data, and an acquirer for acquiring the service data based on the response information.

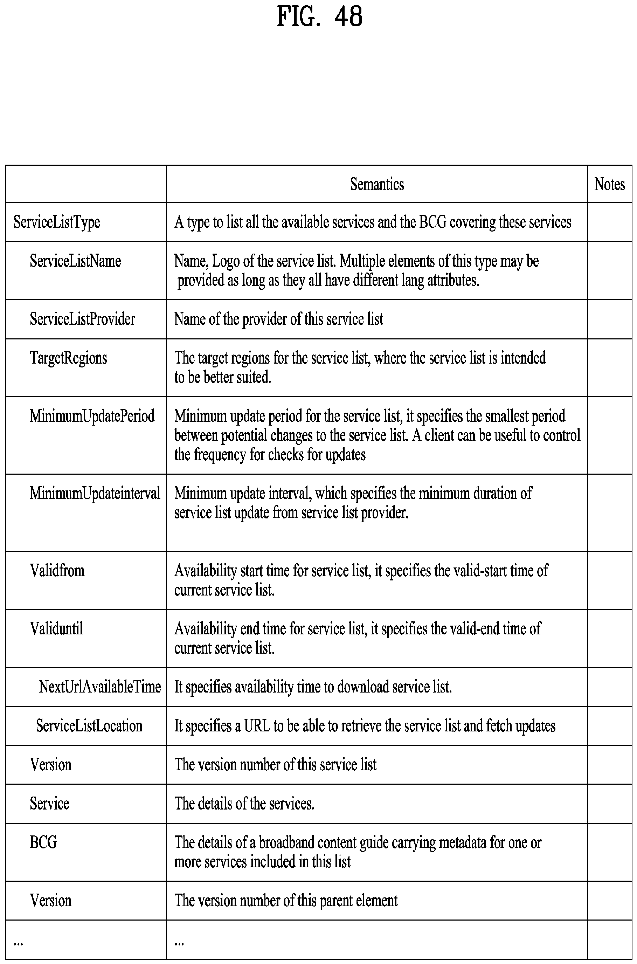

FIG. 48 illustrates a syntax for a version management method of a broadcast service according to embodiments.

When the broadcast signal reception apparatus (for example, the DVB-I client 21000 of FIG. 21) according to embodiments is a web-centric model, the broadcast signal reception apparatus is unaware of when a service or service list may be updated. If update of the service list is not applied to the broadcast signal reception apparatus (DVB-I client) according to embodiments, the broadcast signal reception apparatus according to embodiments may fail to recognize the presence of newly generated channels, updated play lists, and/or part-time services so that it may be difficult to provide a real-time broadcast service to the user.

If update is delayed as described above and running of real-time broadcasting is delayed (e.g., when a sports event is delayed by 20 minutes or more), a program guide (e.g., EPG) of the broadcast signal reception apparatus may not detect over-running. That is, there is a problem in that the broadcast signal reception apparatus according to embodiments may not provide up-to-date program information to the user through a UI.

In addition, when the broadcast signal reception apparatus only receives a service list or a service from servers according to embodiments (i.e., receives a service list according to a pull-only method), the broadcast signal reception apparatus may fail to sense that a currently running broadcast service (program) is over-running. Since service discovery information (SDLT) of the pull-only method has difficulty in updating a broadcast service to up-to-date information, the broadcast signal reception apparatus may fail to detect over-running of the broadcast service.

For example, the broadcast signal reception apparatus may provide a user with a sports game (first broadcast service) starting at 18:30 and ending at 20:10 as a current program. In this case, the broadcast signal reception apparatus according to embodiments may receive an SDLT (or service list) including information about the first broadcast service. The service list may include that Availability information (running status information) according to embodiments, indicating that the first broadcast service is valid from 18:30 to 20:10. The broadcast signal reception apparatus according to embodiments may display broadcast schedule using the Availability information about the first broadcast service.

However, the sports game (first broadcast service) may be over-running according to the extension of the game or the circumstances of the game. In other words, the first broadcast service starts at 18:30 and ends after 20:10. For example, the first broadcast service may finish at 21:00 (last-minute schedule change). However, since the broadcast signal reception apparatus according to embodiments only receives the service list from the server (i.e., pull-based), it is impossible to check whether the game is over-running. In this case, the broadcast signal reception apparatus may provide the user with information about the first broadcast service based on information that has not been updated. That is, the broadcast signal reception apparatus may still provide the information that has not been updated although the first broadcast service has been extended. For example, although the first broadcast service is over-running around 20:40, the broadcast signal reception apparatus notifies the users that the first broadcast service is over.

To deal with these problems, the broadcast signal reception apparatus according to embodiments may use a method of polling a service list to the server at an interval of every hour (or period of every hour), a method of using an in-band DASH event, a method of pushing the service list to the server according to a W3C Push API, a method of pushing the service list according to an APN, and/or a firebase cloud messaging method. The method of polling the service list to the server at an interval of every hour may be referred to as a just polling method.

In order to provide a stable real-time broadcast service, a minimum update period and/or a minimum update interval for a received service or service list may be checked or received. The broadcast signal reception apparatus according to embodiments may request that a central service registry, a service list provider, a content guide server, and/or a service provider according to embodiments transmit the up-to-date service or service list at a received minimum update period and/or minimum update interval.

For example, if the minimum update period is x seconds, the broadcast signal reception apparatus may make a request for the up-to-date service or service list at an interval of every x seconds. This may be referred to as polling at an interval of x seconds. The minimum update period and/or the minimum update interval according to embodiments may differ according to each broadcast service or service list.

For example, after requesting a service list, the broadcast signal reception apparatus according to embodiments may check a minimum update period included in the received service list and set a period at which polling is to be performed. If the minimum update period included in the service list is 10 seconds, the broadcast signal reception apparatus may perform polling at an interval of 10 seconds after receiving the service list.

For example, the broadcast signal reception apparatus according to embodiments may request (or poll) a service list and then set a time interval at which polling is to be performed by checking a minimum update interval included in the service list received by the request. If the minimum update interval included in the service list is 10 seconds, the broadcast signal reception apparatus may perform polling 10 seconds after the service list is received.

The period of polling and/or the interval of polling according to embodiments may vary depending on a running degree of a broadcast service and/or the characteristics of the broadcast service. For example, when the broadcast service is a sports game and it is close to a scheduled end time, polling may be performed more frequently by reducing the polling period. In addition, the period of polling and/or the interval of polling may be set by the user. The broadcast signal reception apparatus may provide the UI for setting the polling period and/or the polling interval. In addition, polling according to embodiments may be performed more frequently when the user selects a channel banner indicating channel information.

For example, if a corresponding broadcast service is going to be over-running but it is close to a scheduled end time of the broadcast service, for example, if a current time is close to a reference time such as @validTo indicating the end time of the Availability information included in the service information, the broadcast signal reception apparatus according to embodiments may change the polling period and/or the polling interval according to embodiments (e.g., the value of mimimumUpdateInterval information and/or minimumUpdatePeriod information according to embodiments may be lowered) so as to have a shorter polling period, thereby efficiently updating (fetching) up-to-date information.

If the broadcast signal reception apparatus performs polling (i.e., makes a request for an updated service list), the central service registry, the service list provider, the content guide server, and/or the service provider according to embodiments may provide the updated service list to the broadcast signal reception apparatus.

The broadcast signal reception apparatus according to embodiments may check the minimum update interval and/or the minimum update period and perform polling for the up-to-date service (service list), thereby providing up-to-date UI information to the user in response to change in the broadcast service.

The SDLT (service list (SDLT) according to embodiments may further include service list type information (ServiceListType), service list name information (ServiceListName), service list provider information (ServiceListProvider), target region information (TargetRegions), minimum update period. Information (MinimumUpdatePeriod), minimum update interval information (MinimumUpdateinterval), valid from information (ValidFrom), valid until information (ValidUntil), next URL available time information (NextUrlAvailableTime), service list location information (Service List Location), version information (Version), and/or BCG information of a corresponding service list.

Part or all of ServiceListType, ServiceListName, ServiceListProvider, TargetRegions, MinimumUpdatePeriod, MinimumUpdateinterval, ValidFrom, ValidUntil, NextUrlAvailableTime, Service List Location, Version, and BCG information according to embodiments may be present at the highest level in the SDLT according to embodiments or may be present at the same level as or a lower level than the Service (or service instance) in the SDLT according to embodiments. The inclusion relationship of the parameters illustrated in FIG. 48 is exemplary.

The SDLT according to embodiments may be referred to as a service list template.

ServiceListType of the service list indicates the type of a list of all available services and a broadcast content guide (BCG) covering these services. That is, ServiceListType according to embodiments may be information that is present at the highest level of the SDLT according to embodiments or may imply the SDLT itself.

ServiceListName indicates a name or logo of the service list. Multiple elements of this type may be provided as long as the elements all have different language attributes. ServiceListName according to embodiments may be service name information according to embodiments (e.g., the Name information of FIG. 43) or may include the service name information.

ServiceListProvider indicates the name of a provider of this service list.

TargetRegions indicates target regions for the service list, where the service list is intended to be better suited.

MinimumUpdatePeriod indicates a minimum update period for the service list. This parameter specifies the smallest period between potential changes to the service list. A client may be useful to control the frequency for checks for updates.

The broadcast signal reception apparatus according to embodiments may extract the minimum update period information according to embodiments by parsing the SDLT (service list) according to embodiments. The broadcast signal reception apparatus according to embodiments may check the update period of a corresponding service (or service instance) or a corresponding service list by extracting the minimum update period information.

MinimumUpdateinterval indicates the minimum update interval which specifies the minimum duration of service list update from a service list provider.

The broadcast signal reception apparatus according to embodiments may extract MinimumUpdateinterval according to embodiments by parsing the SDLT according to embodiments. The broadcast signal reception apparatus according to embodiments may check the update period of a corresponding service (or service instance) or a corresponding service list by extracting MinimumUpdatePeriod.

MinimumUpdateinterval and/or MinimumUpdatePeriod according to embodiments may be present at the highest level in the SDLT according to embodiments. Therefore, the broadcast signal reception apparatus according to embodiments may check the update period of the corresponding service list based on MinimumUpdateinterval and/or MinimumUpdatePeriod present at the highest level.

MinimumUpdateinterval and/or MinimumUpdatePeriod according to embodiments may also be referred to as a polling interval or a polling period.

MinimumUpdateinterval and/or MinimumUpdatePeriod according to embodiments may be at the same level as the Service (or service instance) in the SDLT according to embodiments. MinimumUpdateinterval and/or MinimumUpdatePeriod according to embodiments may be present at a lower level than the Service (or service instance) in the SDLT according to embodiments. Therefore, the broadcast signal reception apparatus according to embodiments may check the update period for each service or service instance based on MinimumUpdateinterval and/or MinimumUpdatePeriod present at a level lower than the highest level.

ValidFrom specifies a valid-start time of a current service list as an availability start time for the service list.

ValidUntil indicates specifies a valid-end time of a current service list as an availability end time for the service list.

NextUrlAvailableTime specifies an availability time to download the service list.

Service List Location specifies a URL for retrieving the service list and fetching updates.

Version specifies the version number of this service list.

Service includes information about services according to embodiments. Service may be referred to as a service instance.

BCG indicates the details of a BCG carrying metadata for one or more services included in a service list.

The broadcast signal reception apparatus according to embodiments may efficiently update different services with a minimal operation and efficiently manage different services. In addition, the broadcast signal reception apparatus according to embodiments may provide a broadcast service open to the user with such a configuration.

The broadcast signal reception apparatus according to embodiments may obtain the up-to-date service list quickly and efficiently by providing accessible locations or addresses of different service list providers through this configuration.

In addition, the broadcast signal reception apparatus according to embodiments may maintain the up-to-date service list by performing update according to a minimum update (polling) period for each service.

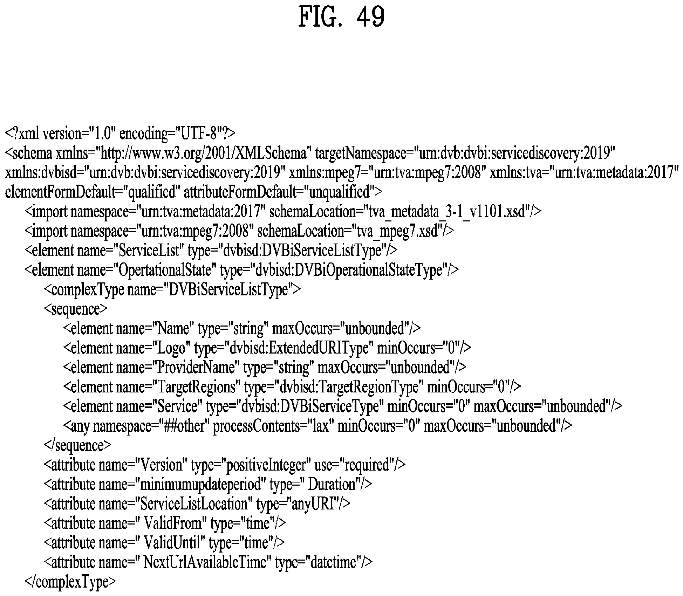

FIG. 49 illustrates a syntax for a version management method of a broadcast service according to embodiments in an XML format.

An example of an SDLT in an XML format according to embodiments is illustrated in FIG. 49. FIG. 49 illustrates a service list template (e.g., service list) according to embodiments described with reference to FIG. 48 in an XML format. The service list template according to embodiments may include the ServiceListType information described with reference to FIG. 48. The SDLT according to embodiments may also be referred to as a service list template.

ServiceListType according to embodiments may include service list name information (<element name="Name"...>), service list provider information (<element name="ProviderName"...>), target region information (<element name="TargetRegions" ...>), service information (<element name="Service" ...>), or service instance information (<element name="ServiceInstance" ...>). The corresponding information may be included in one sequence.

ServiceListType according to embodiments may include minimum update period information (<attribute name="minimumupdateperiod" ...>), service list location information (<attribute name="ServiceListLocation" ...>), valid from information (< attribute name="ValidFrom" ...>), valid until information (<attribute name="ValidUntil" ...>), and/or next URL valid time information (<attribute name="NextUrlAvailableTime" ...>).

The broadcast signal reception apparatus according to embodiments may efficiently update different services with a minimal operation and efficiently manage different services. In addition, the broadcast signal reception apparatus according to embodiments may provide a broadcast service open to the user with such a configuration.

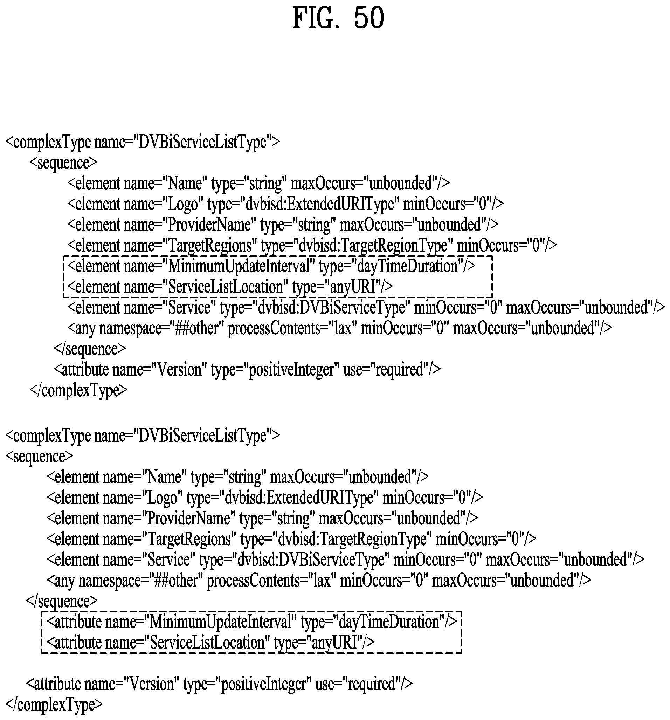

FIG. 50 illustrates a syntax for a version management method of a broadcast service according to embodiments in an XML format.

FIG. 50 illustrates a service list template according to embodiments described in FIGS. 48 and/or 49 in an XML format. The service list template according to embodiments may include the ServiceListType information described with reference to FIG. 48.

Basically, since a client (e.g., broadcast signal reception apparatus) provided with an Internet-based broadcast service operates within a "web-centric" model, the client may be unaware of exactly when a service or service list is updated.

Therefore, ServiceListType according to embodiments may further include minimum update interval information (<attribute name="MinimumUpdateInterval" ...>). The minimum update interval information according to embodiments may cause the broadcast signal reception apparatus to continuously check updates of the service list. That is, the broadcast signal reception apparatus may be aware of the minimum update interval of the service list and, accordingly, the broadcast signal reception apparatus may manage a plurality of service lists more stably.

The service list type information (ServiceListType) according to embodiments may include service list name information (<element name="Name"...>), service list provider information (<element name="ProviderName"...>), target region information (<element name="TargetRegions" ...>), and/or service information (<element name="Service" ...>). The corresponding information may be included in one sequence.

The service list type information (ServiceListType) according to embodiments may include, as elements, minimum update period information (<attribute name="minimumupdateperiod" ...>), service list location information (<attribute name="ServiceListLocation" ...>), valid from information. (<attribute name="ValidFrom" ...>), valid until information (<attribute name="ValidUntil" ...>), and/or next URL available The broadcast signal reception apparatus according to embodiments may efficiently update different services with a minimal operation and efficiently manage different services. In addition, the broadcast signal reception apparatus according to embodiments may provide a broadcast service open to the user with such a configuration.

The broadcast signal reception apparatus according to embodiments may efficiently update different services with a minimal operation and efficiently manage different services. In addition, the broadcast signal reception apparatus according to embodiments may provide a broadcast service open to the user with such a configuration.

The broadcast signal reception apparatus according to embodiments may obtain the up-to-date service list quickly and efficiently by providing accessible locations or addresses of different service list providers through this configuration.

In addition, the broadcast signal reception apparatus according to embodiments may maintain the up-to-date service list by performing update according to a minimum update (polling) period for each service.

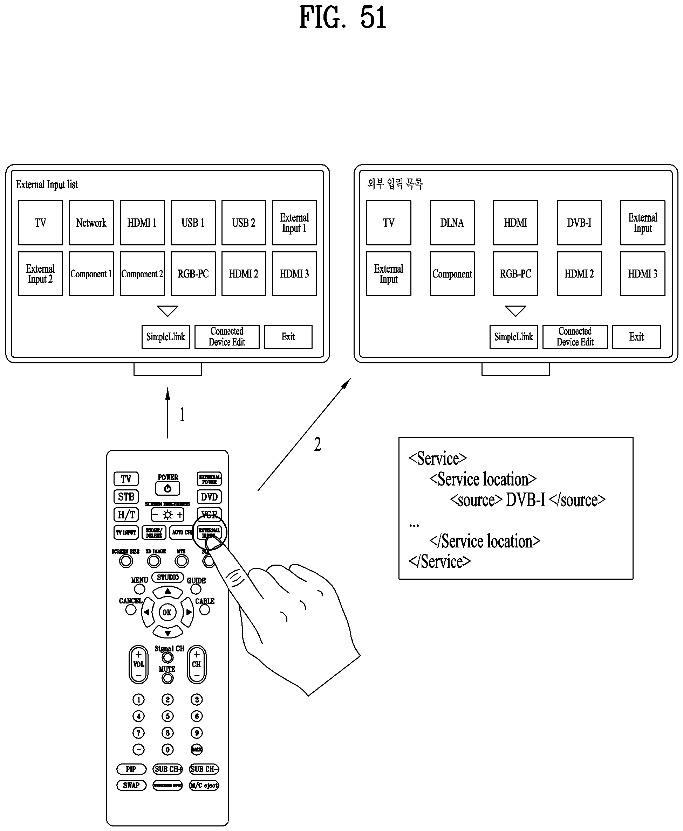

FIG. 51 illustrates an example of a display user interface (UI) of a broadcast signal reception apparatus according to embodiments.

FIG. 51 illustrates an example of a display UI of an Internet-based broadcast service (e.g., DVB-I service).

As illustrated in FIG. 51, the Internet-based broadcast service may be provided through an application (e.g., native application) and provide a service that aggregates with an existing channel as a native source together with a scenario executed through media source extension (MSE). (1) of FIG. 51 illustrates an operation of selecting a source in the broadcast signal reception apparatus according to embodiments and a UI for the operation. (2) of FIG. 51 illustrates a UI displayed when the Internet-based broadcast service (e.g., DVB-I service) is added. DVB-I may be recognized as a source of the same level as existing RF reception and a form factor such as HDMI and provide a user with a selection option.

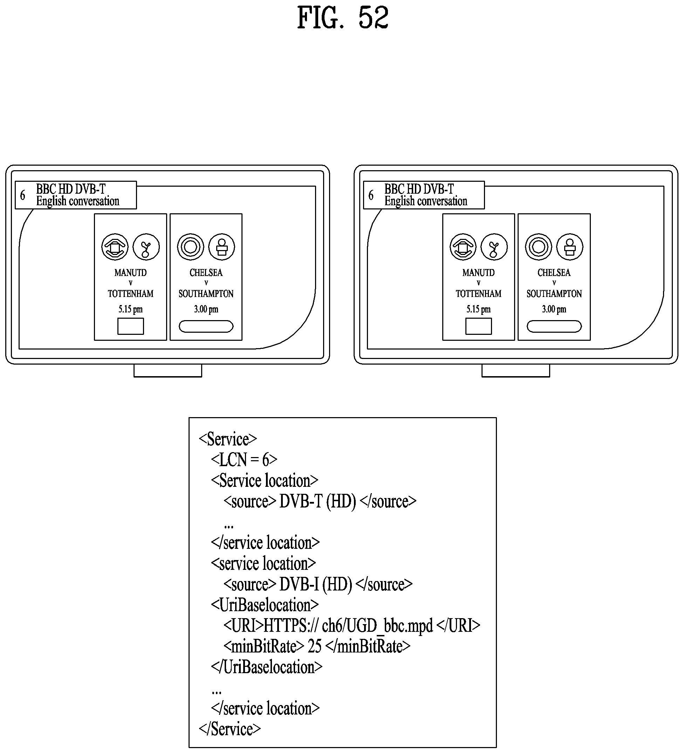

FIG. 52 illustrates an example of a display UI of a broadcast signal reception apparatus according to embodiments.

FIG. 52 illustrates an operation of switching a high definition (HD) channel of LCN 6 to DVB-I ultra-high definition (UHD) content according to the state of a current network state through simulcast signaling of the same logical channel. For example, when an HD service of a DVB-T channel and a DVB-I service are activated and a network state of minimum bit rate or more is supported, the broadcast signal reception apparatus according to embodiments may switch to DVB-I and/or DVB-T in order to provide a corresponding broadcast service with UHD.

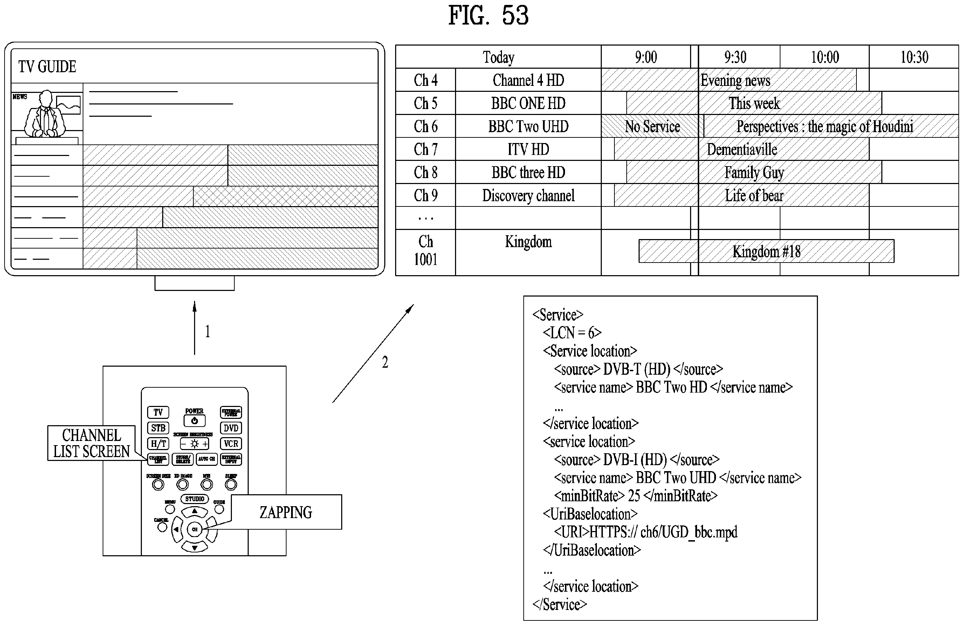

FIG. 53 illustrates an example of a display UI of a broadcast signal reception apparatus according to embodiments.

FIG. 53 illustrates a service guide aggregated with an existing channel through simulcast signaling. (1) illustrates an embodiment of a UI representing a channel service guide. (2) illustrates a UI indicating that a UHD service guide rather than an HD service guide of an existing channel is provided when a network state of minimum bit rate or more is supported during DVB-I simulcast,.

The broadcast signal reception apparatus according to embodiments may display a channel list based on an input signal from a signal input unit (e.g., a remote controller). If the user selects channel list view using the remote controller, the broadcast signal reception apparatus according to embodiments may display a list of one or more broadcast services, channel numbers (e.g., LCNs) of the broadcast services, channel names, and service names. A channel list screen according to embodiments may be configured as illustrated in FIG. 45.

The broadcast signal reception apparatus according to embodiments may display information of broadcast services based on parameters in the SDLT (e.g., service list information (Service List)) according to embodiments.

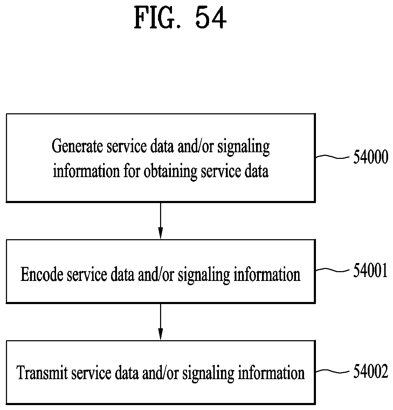

FIG. 54 is a flowchart illustrating a broadcast signal transmission method according to embodiments.

The broadcast signal transmission method according to embodiments may include generating service data and/or signaling information for the service data (54000), encoding the service data and/or the signaling information (54001), and/or transmitting the service data and/or the signaling information (54002).

The operation of generating service data and/or signaling information for the service data (54000) may generate the service data (broadcast service) and/or the signaling information for the service data according to embodiments.

The service data according to embodiments may mean the above-described broadcast service. The data (broadcast service) according to embodiments may refer to the broadcast service generated by the broadcaster 21003 and/or the stream server 21005 of FIG. 21.

The signaling information according to embodiments may be the above-described service discovery information (e.g., SDLT). The signaling information according to embodiments may include information about the service data (e.g., Service information according to embodiments).

The information about the service data according to embodiments may include related material information indicating the location of an application (or file) related to the service data and/or availability information indicating whether the service data is running. The related material information and/or the availability information may refer to the Related-Material information and/or the Availability information described with reference to FIGS. 43 to 45.

The related material information according to embodiments may include location information (e.g., URI information) for obtaining information about a file (or application) related to a corresponding broadcast service. The availability information according to embodiments may include information about a time during which the service data is running and information indicating whether the service data is recurrently running (e.g., @ValidFrom).

The operation of encoding the service data and/or the signaling information (54001) may encode the service data (broadcast service) and/or the signaling information according to embodiments. The operation of encoding the service data and/or the signaling information (54001) may perform encoding based on the physical layer structure (e.g., BICM) according to embodiments illustrated in FIG. 1.

The operation of transmitting the service data and/or the signaling information (54002) may transmit the service data and/or the signaling information according to embodiments. The operation of transmitting service data and/or signaling information (54002) may be performed, for example, by the transmission antenna illustrated in FIG. 1, over a cable network and/or a broadband network.

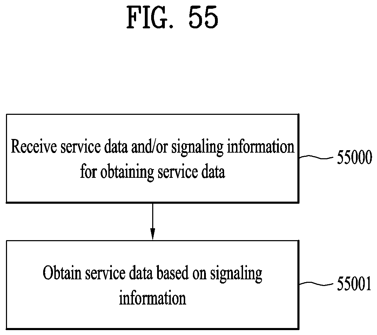

FIG. 55 is a flowchart illustrating a broadcast signal reception method according to embodiments.

The broadcast signal reception method according to embodiments may include receiving service data and/or signaling information for the service data (55000) and/or obtaining the service data based on the signaling information (55001).

The operation of receiving service data and/or signaling information for the service data (55000) may include receiving the service data and/or the signaling information for the service data. The service data according to embodiments may refer to the above-described broadcast service. The data (broadcast service) according to embodiments may refer to the broadcast service generated by the broadcaster 21003 and/or the stream server 21005 of FIG. 21.

The operation of obtaining the service data based on the signaling information

(55001) may include obtaining a broadcast service based on the signaling information. The operation of obtaining the service data based on the signaling information (55001) may be performed by the parser for parsing the signaling information and/or the service data according to embodiments.

The signaling information according to embodiments may be the above-described service discovery information (e.g., SDLT). The signaling information according to embodiments may include information about the service data (e.g., Service information according to embodiments).

The information about the service data according to embodiments may include related material information indicating the location of an application (or file) related to the service data and/or availability information indicating whether the service data is running. The related material information and/or the availability information may refer to the Related-Material information and/or the Availability information described with reference to FIGS. 43 to 45.

The related material information according to embodiments may include location information (e.g., URI information) for obtaining information about a file (or application) related to a corresponding broadcast service. The availability information according to embodiments may include information about a time during which the service data is running and information indicating whether the service data is recurrently running (e.g., @ValidFrom).

The broadcast signal reception method data according to embodiments may include transmitting a first request to a service registry in order to receive the service data, receiving response information including a URL of the service data, and/or obtaining the service data based on the response information.

FIG. 56 illustrates a broadcast signal transmission apparatus according to embodiments.

A broadcast signal transmission apparatus 5600 according to embodiments may include a signaling generator 56001b, an encoder 56002, and/or a transmitter 56003. Encoding may be performed based on the physical layer structure according to FIG. 1.

A service data generator 56001a may generate service data according to embodiments. The service data according to embodiments may mean the above-described broadcast service. The service data (broadcast service) generated by the service data generator 56001b according to embodiments may be encoded based on the physical layer structure of FIG. 1. The service data (broadcast service) generated by the service data generator 56001b according to embodiments may mean the broadcast service generated by the broadcaster 21003 or the stream server 21005 of FIG. 21. That is, the service data generator 56001b may refer to the broadcaster 21003 or the stream server 21005 of FIG. 21. The service data generator 56001b according to embodiments may mean the service providers 47003a to 47003f or the service list providers 47002a to 47002c of FIG. 47.

The signaling generator 56001b may generate signaling information according to embodiments. The signaling information according to embodiments may mean the above-described service discovery information (e.g., SDLT). The signaling information according to embodiments may include information about the service data (e.g., Service information according to embodiments).

The information about the service data according to embodiments may include related material information indicating the location of an application (or file) related to the service data and/or availability information indicating whether the service data is running. The related material information and/or the availability information may mean the Related-Material information and/or the Availability information described with reference to FIGS. 43 to 45.

The related material information according to embodiments may include location information (e.g., URI information) for obtaining information about a file (or application) related to a corresponding broadcast service. The availability information according to embodiments may include information about a time during which the service data is running and information indicating whether the service data is recurrently running (e.g., @ValidFrom).

The encoder 56002 may encode the signaling information according to embodiments. The encoder 56002 according to embodiments may be encoded based on the physical layer structure illustrated in FIG. 1. For example, the encoder 56002 may mean the BICM illustrated in FIG. 1.

The transmitter 56003 may transmit the encoded signaling information according to embodiments as a bitstream transmitted over broadband or as a broadcast signal in a broadcast scheme. The transmitter 56003 according to embodiments may be transmitted based on the physical layer structure illustrated in FIG. 1. For example, the transmitter 56003 may refer to the transmit antenna illustrated in FIG. 1.

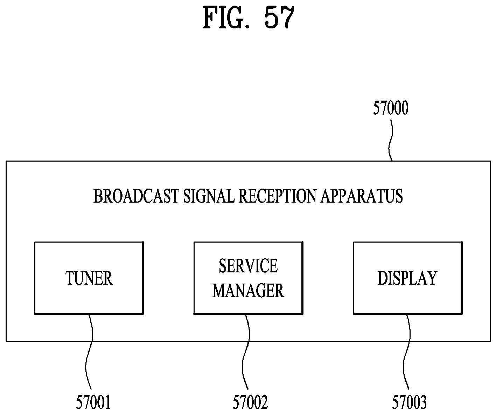

FIG. 57 illustrates a broadcast signal reception apparatus according to embodiments.

The broadcast signal reception apparatus 56000 according to embodiments may include a tuner 57001, a service manager 57002, and/or a display 57003.

The tuner 57001 according to embodiments may receive signaling information according to embodiments. The signaling information according to embodiments may be the above-described service discovery information (e.g., SDLT). The signaling information according to embodiments may include information about service data (e.g., Service information according to embodiments).

The information about the service data according to embodiments may include related material information indicating the location of an application (or file) related to the service data and/or availability information indicating whether the service data is running. The related material information and/or the availability information may mean the Related-Material information and/or the Availability information described with reference to FIGS. 43 to 45.

The related material information according to embodiments may include location information (e.g., URI information) for obtaining information about a file (or application) related to a corresponding broadcast service. The availability information according to embodiments may include information about a time during which the service data is running and information indicating whether the service data is recurrently running (e.g., @ValidFrom).

The service manager 57002 may obtain the broadcast service (i.e., service data) based on the signaling information according to embodiments. The service manager 57002 according to embodiments may include a parser, a USBD parser, an MPD parser, an AIT parser, an AIT parser, a DWD parser, and/or other parsers according to embodiments. The service manager 57002 may parse the SDLT and/or service signaling object according to embodiments and extract sub-elements.

The broadcast signal reception apparatus according to embodiments may further include a transmitter for transmitting a first request to a service registry in order to receive the service data. A receiver of the broadcast signal reception apparatus according to embodiments may receive response information including a URL of the service data and obtain the service data based on the response information.

The parts, modules, or units described above may be software, processor, or hardware parts that execute consecutive processes stored in a memory (or a storage unit). The steps described in the above-described embodiments may be performed by the processor, software, or hardware parts. The modules/blocks/units described in the above embodiments may operate as processors, software, and/or hardware. The methods proposed by the embodiments may be executed as code. This code may be written in a processor-readable storage medium and thus may be read by a processor provided by an apparatus.

Although a description has been given with reference to each of the accompanying drawings for clarity, it is possible to design new embodiments by integrating the embodiments shown in the accompanying drawings with each other. In addition, if a recording medium readable by a computer, in which programs for executing the embodiments mentioned in the foregoing description are recorded, is designed, if necessary, by those skilled in the art, this may be within the scope of the present disclosure.

The apparatuses and methods according to the present disclosure are not limited by the configurations and methods of the embodiments given in the foregoing description. In addition, the embodiments given in the foregoing description may be configured in a manner of being selectively combined with one another entirely or in part to enable various modifications.

The methods proposed by the present disclosure may be implemented as processor-readable code in a processor-readable recording medium provided to a network device. The processor-readable medium may include all kinds of recording devices capable of storing data readable by a processor. The processor-readable medium may include one of a ROM, a RAM, a CD-ROM, a magnetic tape, a floppy disk, an optical data storage device, and the like and also include carrier-wave type implementation such as transmission over the Internet. The processor-readable recording medium may be distributed to a computer system connected via a network and processor-readable code may be stored and executed in a distributed manner.

Although the exemplary embodiments of the present disclosure have been disclosed for illustrative purposes, those skilled in the art will appreciate that various modifications, additions and substitutions are possible, without departing from the scope and spirit of the disclosure as disclosed in the accompanying claims. Such modifications should not be understood individually from the technical spirit or prospect of the present disclosure.

It will be appreciated by those skilled in the art that various modifications and variations can be made in the present disclosure without departing from the spirit or scope of the embodiments. Accordingly, the embodiments are intended to include the modifications and variations of the embodiments within the appended claims and equivalents thereto.

In this specification, both apparatuses and methods are disclosed and descriptions of both of the apparatuses and methods may be complementarily applied to each other as needed.

In this document, "/" and "," should be interpreted to indicate "and/or". For instance, the expression "A/B" may mean "A and/or B". Further, "A, B" may mean "A and/or B". In addition, "A/B/C" may mean "at least one of A, B, and/or C". Further, "A, B, C" may mean "at least one of A, B, and/or C."

Further, in the document, the term "or" should be interpreted to indicate "and/or". For instance, the expression "A or B" may comprise 1) only A, 2) only B, and/or 3) both A and B. In other words, the term "or" in this document should be interpreted to indicate "additionally or alternatively".

Various elements of the embodiments may be implemented in hardware, software, firmware, or a combination thereof. The various elements of the embodiments may be implemented on a single chip such as a hardware circuit. In some embodiments, embodiments may be optionally implemented on separate chips. In some embodiments, at least one of the elements of the embodiments may be constructed in one processor or more than one processor including instructions performing operations based on the embodiments.

Although the terms first, second, etc. are used to describe various elements of the embodiments, these elements should not be limited by these terms. These terms are only used to distinguish one element from another.

The terminology used in the description of the embodiments herein is for the purpose of describing particular embodiments only and is not intended to be limiting. As used in the description of the various described embodiments and the appended claims, singular forms are intended to include plural forms as well, unless the context clearly indicates otherwise. The term "and/or" as used herein refers to and encompasses any and all possible combinations of one or more of the associated listed items. The term "includes" specifies the presence of stated features, numbers, steps, elements, and/or components, but does not preclude the presence or addition of one or more other features, numbers, steps, elements, and/or components thereof.

A conditional expression such as "when ~" or "if~" used in the description of the embodiments is not limitedly interpreted only as an optional case. Rather, the conditional expression has been intended such that a related operation may be performed or related definition may be interpreted when a specific condition is satisfied or in response to a specific condition.

**Mode for Carrying Out the Invention**

Various embodiments have been described in the best mode for carrying out the disclosure.

**Industrial Applicability**

It will be apparent to those skilled in the art that various modifications and variations may be made in the present disclosure without departing from the spirit or scope of the disclosure. Thus, it is intended that the present disclosure cover the modifications and variations of this disclosure provided they come within the scope of the appended claims and their equivalents.

**Claims**

1.  A method of transmitting broadcast signal, the method comprising:

    obtaining service data and signaling information for the service data;
    encoding the service data and the signaling information; and
    transmitting the service data and the signaling information.

2.  The method of claim 1,

    wherein the signaling information includes service information,
    the service information including related material information that is used to represent a location of an application associated with the service data and availability information representing active time of the service data.

3.  The method of claim 2,
    wherein the related material information includes location for obtaining the information for the application.

4.  The method of claim 1,
    wherein the availability information includes information for active time of the service data and information representing the recurrence of the service data.

5.  An apparatus of transmitting broadcast signal, the apparatus comprising:

    a generator configured to generate service data and signaling information for the service data;an encoder configured to encode the service data and the signaling information; and
    a transmitter configured to transmit the service data and the signaling information.

6.  The apparatus of claim 5,

    wherein the signaling information includes service information,
    the service information including related material information that is used to represent a location of an application associated with the service data and availability information representing active time of the service data.

7.  The apparatus of claim 6,
    wherein the related material information includes location for obtaining the information for the application.

8.  The apparatus of claim 5,
    wherein the availability information includes information for active time of the service data and information representing the recurrence of the service data.

9.  A method of receiving broadcast signal, the apparatus comprising:

    receiving service data and signaling information for the service data; and
    obtaining the service data based on the signaling information.

10. The method of claim 9,

    wherein the signaling information includes service information,
    the service information including related material information representing location of application related to the service data and availability information representing active time of the service data.

**11.** The method of claim 10,
wherein the related material information includes location for obtaining the information for the application.

**12.** The method of claim 9,
wherein the availability information includes information for active time of the service data and information representing the recurrence of the service data.

**13.** The method of claim 9, the method further including,

transmitting a query for receiving the service data to service registry;
receiving response for obtaining the service data; and
obtaining the service data based on the response.

**14.** An apparatus of receiving broadcast signal, the apparatus comprising:

a tuner configured to receive service data and signaling information for the service data; and
a service manager configured to obtain the service data based on the signaling information.

**15.** The apparatus of claim 14,

wherein the signaling information includes service information,
the service information including related material information representing location of application related to the service data and availability information representing active time of the service data.

**16.** The apparatus of claim 15,
wherein the related material information includes location for obtaining the information for the application.

**17.** The apparatus of claim 14,
wherein the availability information includes information for active time of the service data and information representing the recurrence of the service data.

**18.** The apparatus of claim 14, the apparatus further including,

a transmitter configured to transmit query for receiving the service data to service registry,
wherein the tuner further configured to receive response for obtaining the service data, wherein the service manager further configured to obtain the service data based on the response.

**19.** The method of claim 11, the method further including,
displaying an out-of-service banner when current time is not the active time of the service data based on the availability information.

**20.** The apparatus of claim 16, the apparatus further including,
a displayer configured to display an out-of-service banner when current time is not the active time of the service data based on the availability information.

## FIG. 1

# FIG. 2

Rx Antenna 1 Signal

Rx 1 Path

Data Pipe 0

9000     9010     9020     9030

Rx Signal Input

Synchronization & Demodulation

Frame Parsing

Demapping & Decoding (Bit Deinterleaving)

Output Processor

TS, IP Stream, or GS Output

Rx Antenna m Signal

Rx m Path

Data Pipe n-1

Signaling Decoding

Physical Layer Signaling (PLS)

9040

EP 3 923 589 A1

# FIG. 3

# FIG. 4

40001

Terrestrial
Headend

40004

Terrestrial
Network

40002

Multicast
Headend

40005

Broadband
Network

40007

Home
Gateway

40008

IPTV
STB

HDMI

40009

TV

40003

DVB-I
Source

CDN

40006

Hybrid IPTV / DTT network adding DVB-I

EP 3 923 589 A1

# FIG. 5

| Application (Native app, Pre-installed app, User-selected app) |

| SI | MP2TS (video / audio / caption) | Data | SI (MPD) | DASH | Data |

| MPEG - 2 System | HTTP |
| | TCP |
| | IP |

| GSE | MPEG-2 Transport Stream | Data Link |

| S2 / C2 / T2 | IEEE and/or 3GPP PHY Layers |

Satellite Broadcast · Cable Broadcast · Terrestrial Broadcast · Internet

# FIG. 6

# FIG. 7

7000

Reception Apparatus ON

7001

Reception Apparatus Connected to Broadband? — No → 

Yes

7002

DVB-I Installed App?

Yes

No

7003

App Download from App Store

7004

SDLT Request to Broadband Server

7005

SDLT Response from Broadband Server Parsing

7010

DVB-T/S/C Tuner Mounted? — No →

Yes

7011

DVB-T/S/C Service

7012

No Available Service

7007

DVB-T/S/C Tuner Mounted? — No →

Yes

7008

DVB-T/S/C/I Service

7009

DVB-I Service

# FIG. 8

| Terms | Meaning |
|-------|---------|
| C | ServiceDiscoveryListTable including services delivered via Cable |
| S | ServiceDiscoveryListTable including services delivered via Satellite |
| T | ServiceDiscoveryListTable including services delivered via Terrestrial |
| I | ServiceDiscoveryListTable including services delivered via Internet |
| IPTV | ServiceDiscoveryListTable including services delivered via IPTV |
| ALL | ServiceDiscoveryListTable including all services delivered via C|S|T|I |

# FIG. 9

Broadband Server
https://bb1.com

/I/sldt

/T/sldt

/S/sldt

sldt

App
https://bb1.com/[?query]/sldt

App Store

# FIG. 10

Broadband Server
https://bb1.com

10002

② Make request to broadband server
address embedded in App for SDLT

10003

SDLT

③ Respond with service
display list including all of terrestrial,
cable, satellite, and Internet services

10001

① Select native App or
downloaded App

| 7-1 | Let's Live Together (42th) |
| 7-100 ① BB HD | KBS Sports (LG: DooSan) |
| 11-1 | Son of Rich Family (74th) |
| 11-100 ① BB HD | MBC Sports (KIA: HanHwa) |

④ Display list of Internet service together with
terrestrial, cable, and satellite services using
service information included in SDLT

10004

# FIG. 11

| Element or Attribute Name | Use | Data Type | Format |
|---|---|---|---|
| ServiceDiscoveryListTable | 1 | | Root element |
| Service | 1..N | | |
| serviceId | 1 | unsignedShort | Number that uniquely identifies this service within the scope of the originalNetworkId. |
| globalServiceId | 0..1 | uri | Globally unique service identifier. It is mapped with the global service id in the ESG. For the traditional DVB-C/S/T service, this attribute is not present. |
| originalNetworkId | 1 | unsignedShort | Number that uniquely identifies the original network which this service was originally generated. |
| transportStreamId | 0..1 | unsignedShort | Number that uniquely identifies the transport stream. This attribute should be present in the traditional DVB-C/S/T service, but it may not be present for the DVB-I service with ISO BMFF format. |
| serviceCategory | 1 | unsignedByte | The category of this service. It can be linear, on-demand, or application service. More detail is listed in the table below. |
| SvcSeqNum | 1 | unsignedByte | Version of service information in this table – increments by one for each new version of service data in RFD; wraps around to 0. |
| contentFormat | 0..1 | unsignedByte | The format of contents of this service |
| svcInetUrl | 0..N | anyURI | URL to access signaling/ESG objects. |
| urlType | 1 | unsignedShort | Type of files available with this URL (See ) |

# FIG. 12

| serviceCategory | Meaning |
|---|---|
| 0 | Not used |
| 1 | Linear TV Service |
| 2 | Linear Radio Service |
| 3 | VoD Service |
| 4 | App Service |
| 5 | ESG Service |
| 6 | Data Service |
| 7-255 | Reserved for the future use |

# FIG. 13

| contentFormat | Meaning |
|---|---|
| 0 | Not used |
| 1 | TS |
| 2 | ISO BMFF |
| 3 | CMAF |
| 4-255 | Reserved for the future use |

# FIG. 14

| contentFormat | Meaning |
|---|---|
| 0 | Not used |
| 1 | URL of Service Signaling Server |
| 2 | URL of ESG server (providing access to the ESG data) |
| Other values | Reserved for the future use |

# FIG. 15

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| urlType | 1 | unsignedByte | Type of files available with this URL |
| Service | 1..N | | Service information |
| serviceId | 1 | unsignedShort | Number that uniquely identifies this service within the scope of the originalNetworkId. |
| globalServiceId | 0..1 | uri | Globally unique service identifier. It is mapped with the global service id in the ESG. For the traditional DVB-C/S/T service, this attribute is not present. |
| originalNetworkId | 1 | unsignedShort | Number that uniquely identifies the original network which this service was originally generated. |
| transportStreamId | 0..1 | unsignedShort | Number that uniquely identifies the transport stream. This attribute should be present in the traditional DVB-C/S/T service, but it may not be present for the DVB-I service with ISO BMFF format. |
| serviceType | 1 | unsignedByte | The category of this service. It can be linear, on-demand, or application service. More detail is listed in the table below. |
| SvcSeqNum | 1 | unsignedByte | Version of service information in this table – increments by one for each new version of service data in RFD; wraps around to 0. |
| contentFormat | 0..1 | unsignedByte | The format of contents of this service |
| svcInetUrl | 0..N | anyURI | URL to access signaling/ESG objects for this service. |
| urlType | 1 | unsignedByte | Type of files available with this URL |

# FIG. 16

| Terms | Meaning |
|---|---|
| <service_id> | Identifies desired service |
| normal\|diff\|template | Identifies desired mode of files |
| current\|next | Identifies desired current/next version |
| list_of_signaling_object_types | space separated string of string tokens defined in Fig. 17 |

# FIG. 17

| object_type value | Description |
|---|---|
| ALL | All metadata objects for requested service(s) |
| USBD | USBD for requested service(s) |
| MPD | DASH MPD for requested service(s) |
| NIT | Network Information Table |
| BAT | Bouquet Association Table |
| SDT | Service Description Table |
| AIT | Application Information Table |
| DWD | Distribution Window Description |
| ------ | All other values DVB Reserved. |

# FIG. 18

Broadband Server
https://bb1.com

/I/sldt
/T/sldt
/S/sldt

18001

18002

Broadband Server
https://aaa.bbb.com/

0x2107
0x2108
...

④ 0x2107
Signaling object

18004

① https://bb1.com/I/sldt

②

App
https://bb1.com/[?query]/sldt

18001a

```
<SDLT>
<SdltlnetUrl @ urlType=1>
http://aaa.bbb.com/
</SdltlnetUrl>
<Service@serviced=0x2107/>
<Service@serviced=0x2108/>
...
</SDLT>
```

18003

③ https://aaa.bbb.com/0x2107/ALL

# FIG. 19

Broadband Server
https://bb1.com

⑤ Request for signaling
of Service Id 0x2107 using
SdltInetUrl type=1

⑥ Response with serving signaling
value corresponding to service of 33-7

This reception apparatus does not support terrestrial, cable, and satellite services.

Would you like to display Internet service list?

| Yes | No |

③ Display
of Internet
services
using SDLT

| 33-7 ⓘ | BB HD | KBS Sports (LG: DooSan) |
| 33-8 ⓘ | BB HD | MBS Sports (KIA: HanHwa) |

④ Selection of service of 33-7

② Selection of channel list icon

① Example of SDLT including only Internet
services provided by reception apparatus

```
<SDLT>
    <SdltInetUrl @ urlType=1>
        http://aaa.bbb.com/
    </SdltInetUrl>
    <Service@serviced=0x2107/>
    <Service@serviced=0x2108/>
    ...
</SDLT>
```

# FIG. 20

# FIG. 21

# FIG. 22

22000

Metadata Envelope

Metadata Envelope (XML)

| MultiPart container | Service list #1 | MultiPart container | Service list #2 | MultiPart container | Service list #3 | MultiPart container | Service list #4 |
|---|---|---|---|---|---|---|---|

22001      22002

# FIG. 23

```
<xs:complexType name="metadataEnvelopeType">
    <xs:sequence>
        <xs:element name="item" type="metadataEnvelopeItemType" maxOccurs="unbounded"/>
    </xs:sequence>
</xs:complexType>
<xs:complexType name="metadataEnvelopeItemType">
    <xs:sequence>
            <xs:element name="metadataFragment" type="xs:string" minOccurs="0"/>
            <xs:any namespace="##other" processContents="lax" minOccurs="0" maxOccurs="unbounded"/>
    </xs:sequence>
    <xs:attribute name="metadataURI" type="xs:anyURI" use="required"/>
    <xs:attribute name="version" type="xs:positiveInteger" use="required"/>
    <xs:attribute name="validFrom" type="xs:dateTime" use="optional"/>
    <xs:attribute name="validUntil" type="xs:dateTime" use="optional"/>
    <xs:attribute name="contentType" type="xs:string" use="optional"/>
    <xs:attribute name="nextUrlAvailableTime" type="xs:dateTime" use="optional"/>
    <xs:attribute name="nextUrl" type="xs:anyURI" use="optional"/>
    <xs:anyAttribute processContents="skip"/>
</xs:complexType>
```

# FIG. 24

multipart / related container

```
--DVB_DITS_servicecediscovery_fragment_boundary
Content-Location : 1041_9_envelope.xml
Content-ID : <DVB_DITS_servicediscovery_metadata_envelope>
Content-Type : application / DITS-servicediscovery_medataenvelope + xml ; charset = UTF-8
```

Service list metadata envelop

```
<?xml version="1.0" encoding="UTF-8" standalone="no"?>
<metadataEnvelope><item metadataURI = "1041_9_SDIT.xml" version="3" contentType="application/DITS-1-2-3+xml"/>
<item metadataURI="1041_9_SDIT.xml" version="171" contentType="application/DITS-4-5-6+xml"/>
<item metadataURI="1041_9_SDIT.xml" version="63" contentType="application/DITS-3-6-9+xml"/>
<item metadataURI="1041_9_SDIT.xml" version="0" contentType="application/DITS-10-20-30+xml"/></metadataEnvelope>
```

# FIG. 25

Broadband Server
https://aaa.bbb.com

0x2107

0x2108

...

① https://aaa.bbb.com/0x2107/ALL

② 0x2107
Signaling object

```
<SDLT>
  <SdltlnetUrl@urlType=1>
    https://aaa.bbb.com/
  <SdltlnetUrl>
  <Service@serviceId=0x2107/>
  <Service@serviceId=0x2108/>
  ....
<SDLT>
```

```
<metadataEnvelope>
    <item @metadataURI = USBD.xml
          @version = 10
          @validUntil = 2018-08-10T12:00:00Z
          @nextUrl=http://aaa.bbb.com/0x2107/nextUSBD.xml
          @nextUrlAvailableTime=2018-08-10T00:00:00Z>
      <metadataFragment>
          <UserServiceBundleDescription>...
      </metadataFragment>
    </item>
    <item @metadataURI=MPD.xml
          @version = 7
      ...
</metadataEnvelope>
```

# FIG. 26

| Element or Attribute Name | Use | Data Type | Format |
|---|---|---|---|
| UserServiceBundleDescription | | | Root element of the User Service Bundle Description for DVB-I. |
| UserServiceDescription | 1 | | A single instance of a DVB-I Service. |
| @serviceId | 1 | unsignedShort | Reference to corresponding service entry in the SDLT. |
| @globalServiceId | 0..1 | anyURI | Globally unique service identifier. Reference to corresponding service entry in the ESG (Electronic Service Guide) information. |
| @serviceCategory | 1 | unsignedByte | The category of this service. It can be linear TV, linear Radio, on-demand, or application service. More detail is listed in the table below. |
| @hidden | 0..1 | boolean | Indicates whether this service is hidden in the service list or shown to users. The default value is 'FALSE'. |
| @appRendering | 0..1 | boolean | Indicates whether any application will be executed first and render this service. The default value is 'FALSE'. More detail is listed in the table below. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| DeliveryMethod | 0..N | | Container of transport-related information pertaining to the contents of the service over broadcast and (optionally) broadband modes of access. |
| BroadcastAppService | 0..N | | A DASH Representation delivered over broadcast containing the corresponding media component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation. |
| UnicastAppService | 0..N | | A DASH Representation delivered over broadband containing the constituent media content component(s) belonging to the DVB-I Service. |
| BasePattern | 1..N | string | A character pattern for use by the DVB-I receiver to match against any portion of the Segment URL used by the DASH Client to request DASH Media Segments of a parent DASH Representation |

# FIG. 27

| serviceCategory | Meaning |
|---|---|
| 0 | Not used |
| 1 | Linear TV Service |
| 2 | Linear Radio Service |
| 3 | VoD Service |
| 4 | App Service |
| 5 | ESG Service |
| 6 | Data Service |
| 7-255 | Reserved for the future use |

# FIG. 28

| RunningStatus | Meaning |
|---|---|
| 0 | Not used |
| 1 | Running |
| 2 | Not Running |
| 3 | Pausing |
| 4 | Starts in a few seconds |
| 5 | Service off-air |
| 6-255 | Reserved for the future use |

# FIG. 29

Broadband Server
https://bb1.com

③ Request for USBD
of Service Id 0x2107 using
SdltInetUrl type=1

④ Response with USBD
corresponding to
service of 33-7

```
<USBD>
    <USD @serviceCategory=Linear A/V
        @serviceId = 0x2107
        @globalServiceId = "urn:dvb-i : 0x2107 : KBSSports"
        @MediaPresentationDescription =
                "http://bb1.com/KBSsports33-7.mpd">
    <Name @lang=eng> KBS Sports </name>
    ...
    <DeliveryMethod>
        <UnicastAppService>
            <BasePattern>http://bb1.com/33-7/sports/
        </UnicastAppService>
    </DeliveryMethod>
    ...
    </USD>
</USBD>
```

⑤ 33-7 MPD
Request/Response

33-7  ① BB HD
            KBS Sports (LG: DooSan)

33-8  ① BB HD
            MBS Sports (KIA: HanHwa)

Example of SDLT including only Internet
services provided by reception apparatus

① Display of Internet
service list using SDLT

```
<SDLT>
    <SdltInetUrl @ urlType=1>
        http://aaa.bbb.com/
    </SdltInetUrl>
    <Service@serviced=0x2107/>
    <Service@serviced=0x2108/>
    ...
</SDLT>
```

② Selection of service of 33-7

LG   VS   SK

```
<MPD>
    <period>
        ...
        <AdaptationSet>
            <Representation>
                <BaseURL>http://bb1.com/33-7/sports/
            </Representation>
        </AdaptationSet>
        ...
    </period>
</MPD>
```

EP 3 923 589 A1

# FIG. 30

Broadband Server
https://bb1.com

①

② Response with USBD
corresponding to
service of 33-7

33-7  ① BB HD
LG: DooSan

```
<USBD>
    <USD @serviceCategory=Unear A/V
        @serviceId = 0x2107
        @globalServiceId = "urn:dvb-i : 0x2107 : KBSSports"
        @MediaPresentationDescription =
            "http://bb1.com/KBSsports33-7.mpd">
    ...
    <RunningStatus @duration=30>Pausing</RunningStatus>
    ...
    <DeliveryMethod>
        <UnicastAppService>
            <BasePattern>http://bb1.com/33-7/sports/
        </UnicastAppService>
    </DeliveryMethod>
    ...
    </USD>
</USBD>
```

④ Response with
BSBD corresponding
to service of 33-7

③ Provision of service running status and
start time related information to user

```
<MPD>
    <period>
        ...
        <AdaptationSet>
            <Representation>
                <BaseURL>http://bb1.com/33-7/sports/
            </Representation>
        </AdaptationSet>
        ...
    </period>
</MPD>
```

Broadcast will start in 30 seconds

LG  VS  SK

⑤ Service play service in 30 seconds

EP 3 923 589 A1

# FIG. 31

# FIG. 32

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service (See Table 8.4). |
| @hidden | 0..1 | boolean | Indicates whether this service is hidden in the service list or shown to users. The default value is 'FALSE'. |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 33

| Element or Attribute Name | | | Use | Data Type | Format |
|---|---|---|---|---|---|
| UserServiceBundleDescription | | | | | Root element of the User Service Bundle Description for DVB-I. |
| | UserServiceDescription | | 1 | | A single instance of a DVB-I Service. |
| | | @serviceId | 1 | unsignedShort | Reference to corresponding service entry in the SDLT. |
| | | @globalServiceId | 0..1 | anyURI | Globally unique service identifier. Reference to corresponding service entry in the ESG (Electronic Service Guide) information. |
| | | DeliveryMethod | 0..N | | Container of transport-related information pertaining to the contents of the service over broadcast and (optionally) broadband modes of access. |
| | | BroadcastAppService | 0..N | | A DASH Representation delivered over broadcast containing the corresponding media component(s) belonging to the DVB-I Service. |
| | | BasePattern | 1..N | string | A character pattern for use by the DVB-I receiver to match against any portion of the Segment URL used by the DASH Client to request DASH Media Segments of a parent DASH Representation. |
| | | UnicastAppService | 0..N | | A DASH Representation delivered over broadband containing the constituent media content component(s) belonging to the DVB-I Service. |
| | | BasePattern | 1..N | string | A character pattern for use by the DVB-I receiver to match against any portion of the Segment URL used by the DASH Client to request DASH Media Segments of a parent DASH Representation. |

# FIG. 34

33-7 ① BB HD
LG:DooSan

33-8 ① BB HD
KIA:HanHwa

② Provision of service running status and start time related information to user

④ Selection of 33-3 by user after 30 seconds

Example of SDLT including only Internet service provided by reception apparatus

⑤ Service play

LG VS SK

```
<SDLT>
  <SdltInetUrl @urlType=1>
  http://bb1.com/
  </SdltInetUrl>
  </Sernice @serviceId=0×2107
          @serviceCategory=Linear A/V
          @MediaPresentationDesmription =
              "http://bb1.com/KBSsports33-7.mpd">
      ...
      <RunningStatus @duration=30>Pausing</RunningStatus>
      ...
  </Sernice>
  </Sernice @serviceId=0×2108/>
  ...
</SDLT>
```

① Provision of service list using SDLT to user

③ Request/response for/with MPD and USBD of 33-7

Broadband Server
https://bb1.com

```
<MPD>
  <period>
    ...
    <AdaptationSet>
      <Representation>
        <BaseURL>http://bb1.com/33-7/sports/
      </Representation>
    </AdaptationSet>
    ...
  </period>
</MPD>
```

```
<USBD>
  <USD @serviceCategory
      @serviceId = 0x21
      @globalServiceId
      @MediaPresentati
          "http://bb1.
    <Name @lang=eng>
    ...
    <DeliveryMethod>
  ...
  </USD>
</USBD>
```

# FIG. 35

Reception apparatus ON

35001 — Stored service discovery list present?

No → 35003 Process for receiving service discovery list

Yes → 35002 Selection of service by user

35003 → 35007 DVB-T/S/C tuner installed?

No → 35009 No Available Service

Yes → 35008 DVB-T/S/C Service

35002 → 35004 Internet-based service supported?

No → 35007

Yes → 35005 Service Category=Linear?

Yes → 35010 MPD request/get → 35011 Linear A/V Service Play

No → 35006 appRendering=true?

Yes → 35012 AIT request/get → 35013 Application Play

No → 35014 Native App Play

FIG. 36

| Element or Attribute Name | | Use | Data Type | Format |
|---|---|---|---|---|
| ServiceDiscoveryListTable | | 1 | | Root element |
| | ... (omitted) | | | |
| | LocationInfo | 0..N | LocationInfoType | Indicates location information corresponding to all services included in SDLT as element value indicating location information of various types. |
| | Service | | | |
| | @serviceId | 1 | unsignedShort | Number that uniquely identifies this service |
| | ... (omitted) | | | |
| | LocationInfo | 0..N | LocationInfoType | Indicates location information related to this service, as element value indicating location information of various types. |
| | ... (omitted) | | | |

# FIG. 37

| Element or Attribute Name | | | Use | Data Type | Format |
|---|---|---|---|---|---|
| LocationInfo | | | 0..N | LocationInfoType | Element value indicating various location information |
| | Region | | 0..N | RegionType | Indicates country name and city name to provide location information of region |
| | | @isoCountryCode | 1 | string | Alphabet character value in 2 bytes indicating country name. This should value defined in ISO 3166-1. |
| | | City | 0..N | string | Indicates city name registered in country. If this element value is not present, this indicates whole country. |
| | | @lang | 1 | lang | Indicates language representing city name |
| | Circle | | 0..N | | Location information represented as circle |
| | | @lat | 1 | string | Indicates character string representing latitude in decimal degrees ranging from -90 (south) to +90 (north) |
| | | @lng | 1 | string | Indicates character string representing longitude in decimal degrees. Longitude from Greenwich meridian ranging from -180 (west) to +180 (east) |
| | | @radius | 1 | unsignedInt | Indicates radius of circle in meters |
| | Square | | 0..N | | Location information represented as square |
| | | @swLat | 1 | string | Latitude of southwest |
| | | @swLng | 1 | string | Longitude of southwest |
| | | @neLat | 1 | string | Latitude of northeast |
| | | @neLng | 1 | string | Longitude of northeast |
| | PolyGone | | 0..N | listOfString | Location information represented as polygon. This is configured by string lists of "(latitude, longitude)" by number of @numOfPoints. Each location indicates vertex of polygon. |
| | | @numOfPoints | 1 | unsignedByte | Number of vertices of polygon |
| | IPaddressScope | | 0..N | | Indicates scope of region information allocated with IP address value |
| | | @version | 1 | unsignedByte | Version of IP address value indicates as 4 or 6 |
| | | @startIpAddr | 1 | string | IP address value suitable for each version, indicating IP address value corresponding to start of scope |
| | | @endIpAddr | 1 | string | IP address value suitable for each version, indicating IP address value corresponding to end of scope |

# FIG. 38

Reception apparatus ON

38000
Stored service discovery list present? — No

Yes | 38001

38002

Acquire region information for each SDLT service

Perform process for receiving service discovery list

38003
Region information of reception apparatus extracted? — No

38004
Inform that all services are selectable

38005
Select service not corresponding to region information provided by SDLT

Yes

38006
Inform that corresponding service cannot be provided

38007
Reception apparatus within region indicated by location information? — No

38009
Inform that user cannot select broadcast service from service list

Yes | 38008

Inform that user can select broadcast service from service list

38010

Service Play

# FIG. 39

③ Select selectable service from filtered service list by user

② Configure service list by comparing LocationInfo element value with location information of reception apparatus

| 33-7 | Paris News |
|------|-----------|
| 33-8 | Versailles News |
|      | This broadcast can be viewed only in Paris region |

```
<SDLT>
  <LocationInfo>
    <Region@isoCountryCode=FR/>
  </LocationInfo>
  <Service@serviceId=0x2107 ...>
  ...
    <LocationInfo>
      <Region@isoCountryCode=FR/>
        <City @lang=fra>Paris</City>
      </Region>
    </LocationInfo>
  ...
  </Service>
  <Service@serviceId=0x2108 ...>
  ...
    <LocationInfo>
      <Region@isoCountryCode=FR/>
        <City @lang=fra>Versailles</City>
      </Region>
    </LocationInfo>
  ...
  </Service>
</SDLT>
```

① Provide service list to user using SDLT

| 33-7 | Paris News |
|------|-----------|
|      | 본 방송은 Paris 지역에서만 시청 가능합니다. |
| 33-8 | Versailles News |

③ Select selectable service from filtered service list by user

② Configure service list by comparing LocationInfo element value with location information of reception apparatus

# FIG. 40

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service |
| @hidden | 0..1 | boolean | Indicates whether this service is hidden in the service list or shown to users. The default value is 'FALSE'. |
| @selectable | 0..1 | boolean | |
| @hidden(visible)_guide | 1 | unsignedByte | |
| @hidden(visible)_presentation | 0..1 | anyURI | |
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| RunningStatus | 0..1 | unsignedByte | Specify the status of this service as running, not running or starts in a few seconds, etc.. |
| @duration | 0..1 | unsignedInt | When the RunningStatus is not running (for example, not running or pausing), the pausing time duration in seconds. |
| @resumeTime | 0..1 | dateTime | When the RunningStatus is not running (for example, not running or pausing), the resumed date and time. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 41

|  | Hidden (=0) | Hidden (=1) |
|---|---|---|
| hide_guide (=0) | - If Hidden=0, hide_guide flag is disregarded<br>- logical channel is visible<br>- EPG/ESG is visible | - Logical channel is skipped during channel surfing<br>- Reception apparatus shows as if broadcast service is not defined even when user accesses broadcast service through direct channel entry<br>- Logical channel information may appear in EPG according to hide_guide value (=0) |
| hide_guide (=1) | - If Hidden=0, hide_guide flag is disregarded<br>- logical channel is visible<br>- EPG/ESG is visible | - Logical channel is skipped during channel surfing<br>- Reception apparatus shows as if broadcast service is not defined even when user accesses broadcast service through direct channel entry<br>- Broadcast service is processed as test signal<br>- Logical channel information may not appear in EPG according to hide_guide value (=1)<br>- Here, user may access broadcast service while application service is provided |

# FIG. 42

Reception apparatus ON

43000
Hidden(visible)?

No → 43000a
Channel visible

43000b
Channel visible in EPG

Yes

43001
Broadcast service inaccessible through channel surfing

43002
Selectable?

No → 43002a
Channel inactive

43002b
Channel invisible in EPG

Yes

43003
Hidden_guide

43004
Hidden_present ation

43005
Channel alternative processing

# FIG. 43

| Element or Attribute Name | Use | Data Type | Format |
|---|---|---|---|
| ServiceDiscoveryListTable | 1 | | Root element |
| SdltInetUrl | 0..N | anyURI | URL to access signaling/ESG objects. |
| @urlType | 1 | unsignedByte | Type of files available with this URL |
| Service | 1..N | | Service information |
| @serviceId | 1 | unsignedShort | Number that uniquely identifies this service within the scope of the originalNetworkId. |
| @globalServiceId | 0..1 | uri | Globally unique service identifier. It is mapped with the global service id in the ESG. For the traditional DVB-C/S/T service, this attribute is not present. |
| @originalNetworkId | 1 | unsignedShort | Number that uniquely identifies the original network which this service was originally generated. |
| @transportStreamId | 0..1 | unsignedShort | Number that uniquely identifies the transport stream. This attribute should be present in the traditional DVB-C/S/T service, but it may not be present for the DVB-I service with ISO BMFF format. |
| @LCN | 0..1 | positiveInteger | Logical Channel Number |
| @frequencyNum | 0..1 | unsignedShort | Number that uniquely identifies the frequency number of physical layer. This attribute shall be present when the service is traditional terrestrial service. |
| @serviceCategory | 1 | unsignedByte | The category of this service. It can be linear, on-demand, or application service. More detail is listed in the table below. |
| @svcSeqNum | 1 | unsignedByte | Version of service information in this table – increments by one for each new version of service data in RFD; wraps around to 0. |
| @contentFormat | 0..1 | unsignedByte | The format of contents of this service (See Table 8.4). |
| @hidden | 0..1 | boolean | Indicates whether this service is hidden in the service list or shown to users. The default value is 'FALSE'. |
| @selectable | 0..1 | boolean | |
| @hidden(visible)_guide | 1 | unsignedByte | |
| RelatedMaterial | | | |
| @HowRelated:href | | | element with an @href attribute carrying the value |
| MediaLocator | | | |
| MediaURI | 0..1 | anyURI | whose value contains a URI to the XML AIT file or image and whose @contentType attribute carries the value. |

| Element or Attribute Name | Use | Data Type | Format |
|---|---|---|---|
| @appRendering | 0..1 | boolean | Indicates whether any application will be executed first and render this service. The default value is 'FALSE'. |
| @MediaPresentationDescription | 0..1 | anyURI | URL pointing to MPD signaling description |
| @ApplicationInformationTable | 0..1 | anyURI | URL pointing to AIT signaling description |
| @DistributionWindowDescription | 0..1 | anyURI | URL pointing to DWD signaling description |
| Availability | 0..1 | unsignedByte | Specify the status of this service as running, not running or starts in a few seconds, etc.. |
| @ValidFrom | 0..1 | dateTime | The time and date that this service will become or became available. If not specified, it is assumed that the service is already available. |
| @ValidTo | 0..1 | dateTime | The time and date that this service will cease to be available. If not specified, it is assumed that the service will be available indefinitely. |
| @Days | 0..1 | ServiceDaysList | Defines which days of the week the service is available. If not specified then the service is available on all days (e.g. ServiceDays="1 4 7" means that the service is only available on Monday, Thursday and Sunday) |
| @Recurrence | 0..1 | unsignedInt | Specifies the weekly cadence of the scheduled availability for the service. If not specified then the recurrence occurs every week. |
| Name | 0..N | string | Name of the DVB-I service. |
| @lang | 1 | lang | Language of the DVB-I service name. |
| ServiceLanguage | 0..N | lang | Available languages of the DVB-I service. |
| Icon | 0..N | anyURI | URL pointing to icon (image). Multiple URLs could be used to point to icons (images) of different width and height or different representation formats. |
| @mimeType | 0..1 | string | The optional MIME type of the icon allowing receivers to preemptively ignore fetching image types they are not capable of using. |
| @width | 0..1 | unsignedInt | Width of the referenced image in pixels. |
| @height | 0..1 | unsignedInt | Height of the referenced image in pixels. |
| @dataSize | 0..1 | unsignedInt | Size of the image data in bytes. |
| @displayDuration | 0..1 | unsignedInt | The icon(image) display time duration in seconds. |
| svcInetUrl | 0..N | anyURI | URL to access signaling/ESG objects for this service. |
| @urlType | 1 | unsignedByte | Type of files available with this URL |

# FIG. 44

```
<RelatedMaterial xsi:type="tva2:ExtendedRelatedMaterialType">
    <!-- 19: Promotional still image -->
    <HowRelated href="urn:tva:metadata:cs:HowRelatedCS:2012:19"/>
    <MediaLocator>
        <MediaUri contentType="image/png">
            http://img-ctv.digitaluk.co.uk/channel7/service_a_linear.png
        </MediaUri>
    </MediaLocator>
    <!-- Alt text -->
    <PromotionalText>Service A</PromotionalText>
</RelatedMaterial>
<RelatedMaterial>
    <HowRelated href="urn:tva:metadata:cs:HowRelatedCS:2012:10.5"/>
    <MediaLocator>
        <MediaUri contentType="application/vnd.dvb.ait+xml">
            http://www.channel9.co.uk/player/ait.aitx?channel=channela
        </MediaUri>
    </MediaLocator>
</RelatedMaterial>
```

# FIG. 45

| | Today | 9:00 | 9:30 | 10:00 | 10:30 |
|---|---|---|---|---|---|
| Ch 4 | Channel 4 HD | | Evening news | | |
| Ch 5 | BBC ONE HD | | This week | | |
| Ch 6 | BBC Two UHD | No Service | Perspectives : the magic of Houdini | | |
| Ch 7 | ITV HD | | Dementiaville | | |
| Ch 8 | BBC three HD | | Family Guy | | |
| Ch 9 | Discovery channel | | Life of bear | | |
| . . . | | | | | |
| Ch 1001 | Kingdom | | Kingdom #18 | | |

No Service
6

☐ Push the green button in the remote

# FIG. 46

Discovery Point

Service List
+ applicable Region
+ providerName
+ logo
+ name

Service
+ type
+ locator
+ field : type
+ capabilityRequirement
+ parentalRating
+ genre

List Entry
+ channelNumber

# FIG. 47

# FIG. 48

| | Semantics | Notes |
|---|---|---|
| ServiceListType | A type to list all the available services and the BCG covering these services | |
| ServiceListName | Name, Logo of the service list. Multiple elements of this type may be provided as long as they all have different lang attributes. | |
| ServiceListProvider | Name of the provider of this service list | |
| TargetRegions | The target regions for the service list, where the service list is intended to be better suited. | |
| MinimumUpdatePeriod | Minimum update period for the service list, it specifies the smallest period between potential changes to the service list. A client can be useful to control the frequency for checks for updates | |
| MinimumUpdateinterval | Minimum update interval, which specifies the minimum duration of service list update from service list provider. | |
| Validfrom | Availability start time for service list, it specifies the valid-start time of current service list. | |
| Validuntil | Availability end time for service list, it specifies the valid-end time of current service list. | |
| NextUrlAvailableTime | It specifies availability time to download service list. | |
| ServiceListLocation | It specifies a URL to be able to retrieve the service list and fetch updates | |
| Version | The version number of this service list | |
| Service | The details of the services. | |
| BCG | The details of a broadband content guide carrying metadata for one or more services included in this list | |
| Version | The version number of this parent element | |
| ... | ... | |

# FIG. 49

```xml
<?xml version="1.0" encoding="UTF-8"?>
<schema xmlns="http://www.w3.org/2001/XMLSchema" targetNamespace="urn:dvb:dvbi:servicediscovery:2019"
xmlns:dvbisd="urn:dvb:dvbi:servicediscovery:2019" xmlns:mpeg7="urn:tva:mpeg7:2008" xmlns:tva="urn:tva:metadata:2017"
elementFormDefault="qualified" attributeFormDefault="unqualified">
    <import namespace="urn:tva:metadata:2017" schemaLocation="tva_metadata_3-1_v1101.xsd"/>
    <import namespace="urn:tva:mpeg7:2008" schemaLocation="tva_mpeg7.xsd"/>
    <element name="ServiceList" type="dvbisd:DVBiServiceListType"/>
    <element name="OpertationalState" type="dvbisd:DVBiOperationalStateType"/>
        <complexType name="DVBiServiceListType">
        <sequence>
            <element name="Name" type="string" maxOccurs="unbounded"/>
            <element name="Logo" type="dvbisd:ExtendedURIType" minOccurs="0"/>
            <element name="ProviderName" type="string" maxOccurs="unbounded"/>
            <element name="TargetRegions" type="dvbisd:TargetRegionType" minOccurs="0"/>
            <element name="Service" type="dvbisd:DVBiServiceType" minOccurs="0" maxOccurs="unbounded"/>
            <any namespace="##other" processContents="lax" minOccurs="0" maxOccurs="unbounded"/>
        </sequence>
        <attribute name="Version" type="positiveInteger" use="required"/>
        <attribute name="minimumupdateperiod" type=" Duration"/>
        <attribute name="ServiceListLocation" type="anyURI"/>
        <attribute name=" ValidFrom" type="time"/>
        <attribute name=" ValidUntil" type="time"/>
        <attribute name=" NextUrlAvailableTime" type="datetime"/>
    </complexType>
```

# FIG. 50

```
<complexType name="DVBiServiceListType">
    <sequence>
        <element name="Name" type="string" maxOccurs="unbounded"/>
        <element name="Logo" type="dvbisd:ExtendedURIType" minOccurs="0"/>
        <element name="ProviderName" type="string" maxOccurs="unbounded"/>
        <element name="TargetRegions" type="dvbisd:TargetRegionType" minOccurs="0"/>
        <element name="MinimumUpdateInterval" type="dayTimeDuration"/>
        <element name="ServiceListLocation" type="anyURI"/>
        <element name="Service" type="dvbisd:DVBiServiceType" minOccurs="0" maxOccurs="unbounded"/>
        <any namespace="##other" processContents="lax" minOccurs="0" maxOccurs="unbounded"/>
    </sequence>
    <attribute name="Version" type="positiveInteger" use="required"/>
</complexType>


<complexType name="DVBiServiceListType">
<sequence>
        <element name="Name" type="string" maxOccurs="unbounded"/>
        <element name="Logo" type="dvbisd:ExtendedURIType" minOccurs="0"/>
        <element name="ProviderName" type="string" maxOccurs="unbounded"/>
        <element name="TargetRegions" type="dvbisd:TargetRegionType" minOccurs="0"/>
        <element name="Service" type="dvbisd:DVBiServiceType" minOccurs="0" maxOccurs="unbounded"/>
        <any namespace="##other" processContents="lax" minOccurs="0" maxOccurs="unbounded"/>
    </sequence>
        <attribute name="MinimumUpdateInterval" type="dayTimeDuration"/>
        <attribute name="ServiceListLocation" type="anyURI"/>

    <attribute name="Version" type="positiveInteger" use="required"/>
</complexType>
```

# FIG. 51

**External Input list**

| TV | Network | HDMI 1 | USB 1 | USB 2 | External Input 1 |
|----|---------|--------|-------|-------|------------------|
| External Input 2 | Component 1 | Component 2 | RGB-PC | HDMI 2 | HDMI 3 |

▽

| SimpleLlink | Connected Device Edit | Exit |
|-------------|----------------------|------|

**외부 입력 목록**

| TV | DLNA | HDMI | DVB-I | External Input |
|----|------|------|-------|----------------|
| External Input | Component | RGB-PC | HDMI 2 | HDMI 3 |

▽

| SimpleLlink | Connected Device Edit | Exit |
|-------------|----------------------|------|

1

2

<Service>
    <Service location>
        <source> DVB-I </source>
...
    </Service location>
</Service>

# FIG. 52

```
6  BBC HD DVB-T
   English conversation

        MANUTD          CHELSEA
          v               v
        TOTTENHAM       SOUTHAMPTON
         5.15 pm         3.00 pm
```

```
6  BBC HD DVB-T
   English conversation

        MANUTD          CHELSEA
          v               v
        TOTTENHAM       SOUTHAMPTON
         5.15 pm         3.00 pm
```

```
<Service>
   <LCN = 6>
   <Service location>
      <source> DVB-T (HD) </source>
      ...
   </service location>
   <service location>
      <source> DVB-I (HD) </source>
   <UriBaselocation>
      <URI>HTTPS:// ch6/UGD_bbc.mpd </URI>
      <minBitRate> 25 </minBitRate>
   </UriBaselocation>
      ...
   </service location>
</Service>
```

# FIG. 53

| | Today | 9:00 | 9:30 | 10:00 | 10:30 |
|---|---|---|---|---|---|
| Ch 4 | Channel 4 HD | | Evening news | | |
| Ch 5 | BBC ONE HD | | This week | | |
| Ch 6 | BBC Two UHD | No Service | Perspectives : the magic of Houdini | | |
| Ch 7 | ITV HD | | Dementiaville | | |
| Ch 8 | BBC three HD | | Family Guy | | |
| Ch 9 | Discovery channel | | Life of bear | | |
| ... | | | | | |
| Ch 1001 | Kingdom | | Kingdom #18 | | |

CHANNEL LIST SCREEN

ZAPPING

```
<Service>
  <LCN = 6>
  <Service location>
    <source> DVB-T (HD) </source>
    <service name> BBC Two HD </service name>
    ...
  </service location>
  <service location>
    <source> DVB-I (HD) </source>
    <service name> BBC Two UHD </service name>
    <minBitRate> 25 </minBitRate>
  <UriBaselocation>
    <URI>HTTPS:// ch6/UGD_bbc.mpd
  </UriBaselocation>
    ...
  </service location>
</Service>
```

1

2

EP 3 923 589 A1

# FIG. 54

```
┌─────────────────────────────────────────┐
│  Generate service data and/or signaling  │──── 54000
│  information for obtaining service data   │
└─────────────────────────────────────────┘
                    │
                    ▼
┌─────────────────────────────────────────┐
│  Encode service data and/or signaling    │──── 54001
│  information                              │
└─────────────────────────────────────────┘
                    │
                    ▼
┌─────────────────────────────────────────┐
│ Transmit service data and/or signaling   │──── 54002
│ information                              │
└─────────────────────────────────────────┘
```

# FIG. 55

```
┌─────────────────────────────────────────┐
│ Receive service data and/or signaling    │
│ information for obtaining service data    │── 55000
└─────────────────────────────────────────┘
                    │
                    ▼
┌─────────────────────────────────────────┐
│ Obtain service data based on signaling   │
│ information                               │── 55001
└─────────────────────────────────────────┘
```

# FIG. 56

56001a                                                        56000

BROADCAST SIGNAL TRANSMISSION APPARATUS

| SERVICE DATA GENERATOR | ENCODER | TRANSMITTER |

| SIGNALING GENERATOR |

56001b              56002              56003

# FIG. 57

57000

BROADCAST SIGNAL RECEPTION APPARATUS

| TUNER | SERVICE MANAGER | DISPLAY |

57001                57002                57003

## INTERNATIONAL SEARCH REPORT

| | |
|---|---|
| | International application No. |
| | **PCT/KR2020/001774** |

**A.    CLASSIFICATION OF SUBJECT MATTER**
*H04N 21/2381(2011.01)i, H04N 21/236(2011.01)i, H04N 21/235(2011.01)i, H04N 21/414(2011.01)i,*
*H04N 21/4725(2011.01)i, H04H 60/82(2008.01)i*
According to International Patent Classification (IPC) or to both national classification and IPC

**B.    FIELDS SEARCHED**

Minimum documentation searched (classification system followed by classification symbols)
H04N 21/2381; G06F 15/16; H04N 13/00; H04N 21/262; H04N 21/435; H04N 21/647; H04N 21/858; H04N 21/236; H04N 21/235; H04N 21/414; H04N 21/4725; H04H 60/82

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: broadcast signal, service data, signaling information, related material information, availability information, out-of-service

**C.    DOCUMENTS CONSIDERED TO BE RELEVANT**

| Category* | Citation of document, with indication, where appropriate, of the relevant passages | Relevant to claim No. |
|---|---|---|
| X | KR 10-1838081 B1 (LG ELECTRONICS INC.) 26 April 2018 | 1,5,9,14 |
| | See paragraphs [0012], [0026], [0050], [0064]; claim 1; and figures 1, 3, 29. | |
| Y | | 2-4,6-8,10-13 ,15-20 |
| Y | KR 10-0800860 B1 (SAMSUNG ELECTRONICS CO., LTD.) 04 February 2008 | 2-3,6-7,10-11 |
| | See paragraphs [0077]-[0078]. | ,15-16,20 |
| Y | WO 2017-200209 A1 (LG ELECTRONICS INC.) 23 November 2017 | 4,8,12-13,17-20 |
| | See paragraphs [0007], [0082], [0084], [0095], [0157], [0168]-[0169]. | |
| A | KR 10-1871727 B1 (LG ELECTRONICS INC.) 27 June 2018 | 1-20 |
| | See paragraphs [0065]-[0066]. | |
| A | US 2013-0036234 A1 (PAZOS, Carlos M.D. et al.) 07 February 2013 | 1-20 |
| | See claim 1. | |

☐   Further documents are listed in the continuation of Box C.      ☒   See patent family annex.

| | |
|---|---|
| *        Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 21 MAY 2020 (21.05.2020) | **21 MAY 2020 (21.05.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

| Patent document cited in search report | Publication date | Patent family member | Publication date |
|---|---|---|---|
| KR 10-1838081 B1 | 26/04/2018 | JP 2017-516357 A | 15/06/2017 |
| | | JP 6309650 B2 | 11/04/2018 |
| | | US 2017-0006316 A1 | 05/01/2017 |
| | | WO 2015-152635 A1 | 08/10/2015 |
| | | WO 2015-152635 A9 | 08/10/2015 |
| KR 10-0800860 B1 | 04/02/2008 | CN 101835012 A | 15/09/2010 |
| | | CN 101835012 B | 03/10/2012 |
| | | EP 2323394 A2 | 18/05/2011 |
| | | EP 2323394 A3 | 22/02/2012 |
| | | US 2007-0118872 A1 | 24/05/2007 |
| | | WO 2007-029974 A1 | 15/03/2007 |
| WO 2017-200209 A1 | 23/11/2017 | US 2019-0313149 A1 | 10/10/2019 |
| KR 10-1871727 B1 | 27/06/2018 | CN 106464395 A | 22/02/2017 |
| | | CN 106464395 B | 05/07/2019 |
| | | EP 3267689 A1 | 10/01/2018 |
| | | EP 3267689 B1 | 14/08/2019 |
| | | KR 10-1975343 B1 | 07/05/2019 |
| | | KR 10-2018-0072842 A | 29/06/2018 |
| | | US 10582274 B2 | 03/03/2020 |
| | | US 10637595 B2 | 28/04/2020 |
| | | US 2019-0149641 A1 | 16/05/2019 |
| | | US 2019-0253746 A1 | 15/08/2019 |
| | | US 9872063 B2 | 16/01/2018 |
| | | WO 2016-163772 A2 | 13/10/2016 |
| | | WO 2016-163772 A3 | 01/12/2016 |
| US 2013-0036234 A1 | 07/02/2013 | CN 104040945 A | 10/09/2014 |
| | | CN 104040945 B | 22/08/2017 |
| | | EP 2740238 A1 | 11/06/2014 |
| | | EP 2740238 B1 | 19/06/2019 |
| | | JP 2014-527745 A | 16/10/2014 |
| | | JP 5774785 B2 | 09/09/2015 |
| | | KR 10-1599512 B1 | 21/03/2016 |
| | | KR 10-2014-0051387 A | 30/04/2014 |
| | | US 9590814 B2 | 07/03/2017 |
| | | WO 2013-019903 A1 | 07/02/2013 |

Form PCT/ISA/210 (patent family annex) (January 2015)